# EUROPÄISCHE PATENTSCHRIFT

(11) **EP 2 268 415 B1**
(45) Veröffentlichungstag und Bekanntmachung des Hinweises auf die Patenterteilung: **06.05.2015**
(21) Anmeldenummer: 09722259.0
(22) Anmeldetag: 06.03.2009
(51) Int. Cl.: B05B 13/04

(54) **LACKIERROBOTER UND ZUGEHÖRIGES BETRIEBSVERFAHREN**
PAINTING ROBOT AND ASSOCIATED OPERATING METHOD
ROBOT DE PEINTURE ET PROCÉDÉ D'UTILISATION CORRESPONDANT

(30) Priorität: 20.03.2008 DE 102008015258; 25.03.2008 DE 102008015494; 08.08.2008 DE 102008037035
(43) Veröffentlichungstag der Anmeldung: 05.01.2011
(73) Patentinhaber: Dürr Systems GmbH, 74321 Bietigheim-Bissingen (DE)
(72) Erfinder: HERRE, Frank, 71739 Oberriexingen (DE); MICHELFELDER, Manfred, 71711 Steinheim (DE); ERHARDT, Markus, 70199 Stuttgart (DE); BAUMANN, Michael, 74223 Flein (DE); MELCHER, Rainer, 71720 Oberstenfeld (DE); BUCK, Thomas, 74343 Sachsenheim (DE)
(74) Vertreter: Heusler, Wolfgang
(86) Internationale Anmeldenummer: PCT/EP2009/001641
(87) Internationale Veröffentlichungsnummer: WO 2009/115201

(56) Entgegenhaltungen:
- EP-A- 1 114 677
- EP-A- 1 702 687
- WO-A-2005/046880
- US-A- 3 674 207
- US-B1- 6 755 913

## Beschreibung

Die Erfindung betrifft einen Lackierroboter zur Lackierung von Kraftfahrzeugkarosserien gemäß dem Oberbegriff des Anspruchs 1. Unter "Lackierroboter" sind hier beliebige programmgesteuerte mehrachsige Beschichtungsmaschinen oder sonstige Bewegungsautomaten zu verstehen. Weiterhin betrifft die Erfindung ein entsprechendes Betriebsverfahren für einen derartigen Lackierroboter.

In modernen Lackieranlagen zur Lackierung von Kraftfahrzeugkarosserien werden mehrachsige Lackierroboter eingesetzt, die als Applikationsgerät beispielsweise einen Rotationszerstäuber führen und einen hocheffizienten Lackierbetrieb ermöglichen.

Dabei sind gelegentlich oder häufig Farbwechsel erforderlich, wenn die Kraftfahrzeugkarosserien mit verschiedenfarbigen Lacken lackiert werden sollen. Die bekannten Lackierroboter weisen deshalb einen beispielsweise in DE 103 35 358 A1 beschriebenen Farbwechsler auf, der eingangsseitig an mehrere Farbzuleitungen angeschlossen ist, über die verschiedenfarbige Lacke zugeführt werden. In dem Farbwechsler münden die einzelnen Farbzuleitungen über jeweils ein Farbventil in einen gemeinsamen Farbzentralkanal, der den Rotationszerstäuber über einen Farbdruckregler und eine Dosierpumpe mit dem zu applizierenden Lack versorgt.

Bei dieser Bauweise des Farbwechslers muss der Farbzentralkanal zwischen dem Farbwechsler und dem Hauptnadelventil des Zerstäubers bei einem Farbwechsel gespült werden, bevor ein anderer Lack mit einer neuen Farbe appliziert werden kann. Das Spülen des Farbzentralkanals bei einem Farbwechsel ist wichtig, da die in dem Farbzentralkanal bei einem Farbwechsel verbliebenen Lackreste ansonsten den neuen Lack verunreinigen würden.

Problematisch ist hierbei jedoch, dass bei einem Farbwechsel das Lackvolumen zwischen dem Farbwechsler und dem Hauptnadelventil des Zerstäubers verworfen werden muss, so dass beispielsweise bei einem Farbwechsler mit 24 möglichen Farben ein Farbverlust zwischen 45 und 55 ml auftritt. Es ist deshalb zur Minimierung der bei einem Farbwechsel auftretenden Farbverluste bekannt, den Farbwechsler möglichst nahe an dem Zerstäuber zu montieren, d.h. in dem distalen Roboterarm, der auch als "Arm 2" bezeichnet wird, und an dem ein Handgelenk (Handachse) für den Zerstäuber angebracht ist.

Die Montage des Farbwechslers in dem distalen Roboterarm erfordert jedoch bisher einen so großen Bauraum in dem distalen Roboterarm, dass sich die bekannten Lackierroboter mit einem in dem distalen Roboterarm montierten Farbwechsler nur zur Außenlackierung eignen, d.h. zur Lackierung von Außenflächen der Kraftfahrzeugkarosserien, da hierbei die Baugröße des distalen Roboterarms nur eine untergeordnete Rolle spielt.

Zur Innenlackierung von Kraftfahrzeugkarosserien können dagegen bisher keine Lackierroboter eingesetzt werden, bei denen der Farbwechsler auf dem distalen Roboterarm montiert ist, da zur Innenlackierung schmale, schlank bauende Roboterarme erforderlich sind, die durch Karosserieöffnungen (z.B. Türöffnungen) in den Innenraum der Kraftfahrzeugkarosserien hineingeführt werden können, um die Innenflächen im Innenraum lackieren zu können. Bei den bekannten Lackieranlagen zur Lackierung von Kraftfahrzeugkarosserien werden deshalb zur Innenlackierung Lackierroboter mit einer anderen Bauweise eingesetzt, bei denen der Farbwechsler nicht auf dem distalen Roboterarm montiert ist, wobei die höheren Farbverluste in Kauf genommen werden, um eine schlankere Bauweise des distalen Roboterarms zu ermöglichen, oder stattdessen komplexe Techniken wie z. B. Farbbehälter im Zerstäuber oder Molchsysteme mit Kolbendosierern.

Nachteilig bei den bekannten Lackieranlagen ist also die Tatsache, dass zur Innenlackierung einerseits und zur Außenlackierung andererseits unterschiedliche Robotertypen eingesetzt werden müssen, was in der Regel und jedenfalls bei nicht optimaler Auslegung auch eine unterschiedliche Applikationstechnik erfordert. Die unterschiedlichen Bauweisen der Lackierroboter und der zugehörigen Applikationstechnik führen jedoch zu einem erhöhten konstruktiven und logistischen Aufwand.

EP 1 114 677 A1 offenbart an sich schon einen Lackierroboter, der zur Lackierung sowohl der Außenflächen als auch der Innenflächen von Kraftfahrzeugkarossen verwendet werden soll. Zu diesem Zweck sind für den Zerstäuber des Lackierroboters auswechselbare Glockenteller mit großem Durchmesser für die Außenlackierung bzw. mit kleinem Durchmesser für die Innenlackierung vorgesehen, wofür jeweils ein Wechselvorgang erforderlich ist. Dieser bekannte Lackierroboter besitzt im übrigen keinen Farbwechsler im üblichen Sinn, sondern benötigt auswechselbar in den Zerstäuber einzusetzende Farbkartuschen.

Der Erfindung liegt deshalb die Aufgabe zugrunde, einen entsprechend verbesserten Lackierroboter zu schaffen.

Diese Aufgabe wird durch einen Lackierroboter gemäß Anspruch 1 gelöst.

Die Erfindung umfasst die allgemeine technische Lehre, einen Lackierroboter zu schaffen, der konstruktiv, d. h. durch zweckmäßige Anordnung von Bauteilen mit geringem Platzbedarf sowohl zur Lackierung der Außenflächen von Kraftfahrzeugkarosserien als auch zur Lackierung der Innenflächen der Kraftfahrzeugkarosserien geeignet ist.

Damit ist gemeint, dass der Roboter in der Lage sein soll, den Zerstäuber bei montierten, also im Weg stehenden Türen und Hauben in die Motor- und Kofferräume der Karosse und in einem für die Lackierung des Innenraums ausreichenden Maße durch Türöffnungen (und in Sonderfällen durch Fensteröffnungen) in den Innenraum der Karosse einzuführen. In typischen Fällen darf die bei horizontaler Armlage vertikale Höhe des "Arms 2" (oder bei sonstigen Lackiermaschinen des distalen Maschinenarms) im Bereich seines zerstäuberseitigen Endes nicht größer sein als 350 mm, vorzugsweise 300 mm, und seine quer hierzu gemessene Breite soll in diesem Bereich nicht größer sein als 300mm, vorzugsweise 250 mm, wobei die vertikale Höhe des Arms in der Regel noch wichtiger ist als seine Breite. Diese Grenzen für hinreichend flache (Höhe) oder schmale (Breite) Dimensionierung sollen für eine ausreichende Länge in Richtung zu der Schwenkachse dieses Arms nicht überschritten werden, beispielsweise bis mindestens 300 mm ab Anbaufläche der Handachse, in anderen Fällen bis mindestens 500 mm. In seinem hinteren Bereich kann der Arm dann breiter werden, z. B. für seitlichen Schlauchaustritt, und aus konstruktiven Gründen auch höher.

Derart schlanke Roboterarme sind für die Innenlackierung von Karossen an sich bekannt, doch konnten sie aus Platzgründen bisher nicht die für die Applikation benötigten Bauteile wie Farbwechsler, Dosierpumpen, Farbdruckregler usw. enthalten, sie hatten also die erwähnten Nachteile wie Farb-, Spül- und Zeitverluste usw..

Der erfindungsgemäße Lackierroboter weist deshalb einen oder mehrere Roboterarme auf, um ein Applikationsgerät (z.B. einen Rotationszerstäuber, Luftzerstäuber, Airless-Zerstäuber oder Ultraschallzerstäuber) räumlich zu positionieren, was an sich aus dem Stand der Technik bekannt ist. Die Roboterarme können kinetisch seriell oder auch parallel oder kombiniert seriell und parallel angeordnet sein, wobei auch die in EP 1 614 480 B1 beschriebene Parallelkinematik mit nur einem (dem distalen) Arm in Betracht kommt. Bei dem erfindungsgemäßen Lackierroboter ist der distale Roboterarm (d.h. der sogenannte "Arm 2"), dagegen so schmal und schlankbauend, dass der distale Roboterarm mit dem daran montierten Applikationsgerät durch Karosserieöffnungen (z.B. Fensteröffnungen) hindurch in den Innenraum der Kraftfahrzeugkarosserien eingeführt werden kann, um die dortigen Innenflächen zu lackieren.

Weiterhin weist der erfindungsgemäße Lackierroboter vorzugsweise einen Farbwechsler auf, der zur Minimierung der bei einem Farbwechsel auftretenden Farbverluste vorzugsweise auf dem distalen Roboterarm ("Arm 2") des Lackierroboters montiert ist, was durch eine besondere Bauweise des Farbwechsler ermöglicht wird ohne die Eignung zur Innenlackierung zu beeinträchtigen.

In einem bevorzugten Ausführungsbeispiel der Erfindung weist der Farbwechsler mehrere Andockstellen (z.B. an einer Farbleiste) auf, die von den einzelnen Farbzuleitungen mit den verschiedenfarbigen Lacken gespeist werden. Darüber hinaus weist der Farbwechsler in diesem Ausführungsbeispiel eine bewegliche Farbentnahme (z.B. einen Andockschlitten) auf, die wahlweise an eine der Andockstellen andocken kann und im angedockten Zustand den Lack aus der zugehörigen Farbzuleitung entnimmt und die gemeinsame Farbleitung mit dem entnommenen Lack speist. Zur Auswahl des Lacks mit der gewünschten Farbe wird die Farbentnahme also so positioniert, dass die Farbentnahme an der zugehörigen Andockstelle andockt, woraufhin der Lack über die Andockstelle aus der zugehörigen Farbzuleitung entnommen werden kann. In diesem Ausführungsbeispiel weist der Farbwechsler also im Gegensatz zu dem eingangs beschriebenen bekannten Farbwechsler keinen Farbzentralkanal auf, so dass der Farbwechsler aufgrund seiner Konstruktion auch bei einer Fehlfunktion der Farbventile oder einer fehlerhaften Ansteuerung der Farbventile verhindert, dass es zu einer Lackverunreinigung kommen kann, da nur jeweils eine einzige Farbzuleitung mit der Farbentnahme verbunden ist.

Auch bei dem vorstehend beschriebenen erfindungsgemäßen Farbwechsler ist in den einzelnen Farbzuleitungen vorzugsweise jeweils ein Farbventil angeordnet, das den Lackstrom durch die jeweilige Farbzuleitung wahlweise sperrt oder freigibt. Die einzelnen Farbventile werden hierbei durch jeweils ein und dasselbe Steuersignal gesteuert, wobei es sich beispielsweise um ein pneumatisches, elektrisches oder auch mechanisches Steuersignal handeln kann. Vorzugsweise wird das Steuersignal zur Ansteuerung der einzelnen Farbventile von der Farbentnahme über die jeweils angedockte Andockstelle zu dem jeweiligen Farbventil geführt, so dass das Steuersignal nur dann zu einem der Farbventile gelangen kann, wenn die Farbentnahme an die zugehörige Andockstelle angedockt ist. Durch diese Art der Ansteuerung der Farbventile wird inhärent sichergestellt, dass die einzelnen Farbventile nur geöffnet werden können, wenn die Farbentnahme an der zugehörigen Andockstelle angedockt ist. Die einzelnen Farbventile sind also vorzugsweise so konstruiert, dass die Farbventile bei einem fehlenden Steuersignal die zugehörige Farbzuleitung sperren. Als Farbventile oder statt üblicher Farbventile können auch als Schnellverschluss- oder Quick-Connect-Kupplungen bekannte Elemente, extern angesteuerte Rückschlagventile oder durch Bestätigung mit einem Stößel öffnende Ventile verwendet werden.

Bei der beweglichen Farbentnahme kann es sich beispielsweise um einen Andockschlitten handeln, der relativ zu den Andockstellen der einzelnen Farbzuleitungen linear verschiebbar ist. Es besteht jedoch alternativ auch die Möglichkeit, dass die Farbentnahme drehbar ist, um an die gewünschte Andockstelle anzudocken.

Ähnliche Farbwechsler sind beispielsweise aus der Patentanmeldung EP 1 245 295 A2 bekannt, so dass der Inhalt dieser Patentanmeldung dieser Beschreibung in vollem Umfang zuzurechnen ist, was den Aufbau und die Funktionsweise des Farbwechslers anbelangt.

Weiterhin weist der erfindungsgemäße Lackierroboter vorzugsweise zwei getrennte Spülkreisläufe auf, nämlich einen ersten Spülkreislauf zum Spülen der Andockstellen des Farbwechslers und einen zweiten Spülkreislauf zum Spülen der gemeinsamen Farbleitung für die verschiedenfarbigen Lacke zwischen dem Farbwechsler und dem Zerstäuber, wobei die beiden Spülkreisläufe getrennt oder zumindest trennbar sind, so dass die Andockstellen unabhängig und getrennt von der gemeinsamen Farbleitung spülbar sind. Bei dieser Bauweise besteht also die Möglichkeit, dass die gemeinsame Farbleitung für die verschiedenfarbigen Lacke bis zu dem Zerstäuber hingespült wird, während gleichzeitig oder zumindest zeitlich überlappend die Andockstellen des Farbwechslers gespült werden. Diese gleichzeitige bzw. zeitlich überlappende Spülung verringert bei einem Farbwechsel die Farbwechselzeit. Darüber hinaus kann die Farbentnahme bei einem Farbwechsel bereits eine neue Andockstelle anfahren und daran andocken, während die gemeinsame Farbleitung für die verschiedenfarbigen Lacke bis zu dem Zerstäuber hin gespült wird, was ebenfalls zu einer Verringerung der erforderlichen Farbwechselzeit beiträgt.

Die Trennung der beiden Spülkreisläufe erfolgt bei dieser Bauweise vorzugsweise durch mindestens ein Trennventil, das in der Farbentnahme angeordnet ist.

Hierbei führt der erste Spülkreislauf vorzugsweise von einer Spülmittelzuleitung ausgehend über ein Spülmittelventil durch die gemeinsame Farbleitung stromabwärts hinter dem Trennventil zu dem Zerstäuber und schließlich wahlweise über ein Rückflussventil in eine Rückflussleitung oder über das Hauptnadelventil des Zerstäubers. Beim Spülen der gemeinsamen Farbleitung bestehen also im Rahmen der Erfindung verschiedene Möglichkeiten.

Zum Einen besteht die Möglichkeit, dass die üblicherweise als Spülmittel dienende Verdünnerflüssigkeit nach dem Spülen der gemeinsamen Farbleitung von dem Zerstäuber in der gleichen Weise abgesprüht wird wie der zu applizierende Lack. Hierbei wirkt das in die gemeinsame Farbleitung eingeleitete Spülmittel als Verdrängermedium und schiebt den noch in der Farbleitung befindlichen Lack über den Zerstäuber aus. Auch die als "Push-out-Betrieb" bezeichnete Betriebsweise ist möglich, bei der der noch in der Leitung befindliche und von dem Zerstäuber abgesprühte Restlack noch praktisch vollständig zur Lackierung verwendet wird, bis schließlich das als Verdrängermedium dienende Spülmittel von dem Zerstäuber abgegeben wird. In diesem "Push-out-Betrieb" ist also die genaue Kenntnis des Umschaltzeitpunktes erforderlich, zu dem das Farbventil geschlossen und das Spülmittelventil geöffnet wird. Der Lackierbetrieb muss dann mit einem ausreichenden zeitlichen Sicherheitsabstand beendet werden, bevor das als Verdrängermedium dienende Spülmittel von dem Zerstäuber abgegeben wird. In an sich bekannter Weise kann "Push-out" mit einem den Lack schiebenden Molch durchgeführt werden, wobei der Molch von dem Spülmittel geschoben werden kann. Wenn aber der Restlack von einem Spülmittel direkt geschoben wird (entsprechendes gilt für Reflow-Betrieb), sind zur Vermeidung des bekannten "Lanzeneffekts" Leitungen mit ausreichend kleinem Schlauchdurchmesser erforderlich. Der Innendurchmesser aller Leitungen und Kanäle in Bauteilen, durch die Lack direkt von dem Spülmittel oder sonstigem Schiebemedium geschoben wird, soll deshalb kleiner sein als 6 mm, beispielsweise zwischen ungefähr 2 und ungefähr 4 mm. Ferner sollen diese Leitungen und Kanäle auch im Hinblick auf den Lanzeneffekt und zur Vermeidung von Verwirbelungen usw. Ecken und scharfe Biegungen vermeiden.

Zum Anderen besteht bei der Spülung der gemeinsamen Farbleitung die Möglichkeit, dass in dem Zerstäuber ein erstes Rückflussventil angeordnet ist, über das das Spülmittel in eine Rückflussleitung abgeleitet werden kann.

Die beiden vorstehend genannten Arten der Spülung können auch miteinander kombiniert werden, indem der von dem Spülmittel aus dem gemeinsamen Farbleitung herausgedrückte Lack zunächst zur Lackierung verwendet wird. Kurz bevor das Spülmittel das Hauptnadelventil des Zerstäubers erreicht, wird dann das Hauptnadelventil geschlossen und das Rückflussventil in dem Zerstäuber geöffnet, damit das Spülmittel nicht abgesprüht wird.

Darüber hinaus ermöglicht das erfindungsgemäße Farbwechselsystem eine Wiederverwendung des in der gemeinsamen Farbleitung zwischen dem Farbwechsler und dem Zerstäuber befindlichen Lacks, indem der bei einem Farbwechsel in der gemeinsamen Farbleitung zwischen dem Farbwechsler und dem Zerstäuber befindliche Lack über die Andockstelle in die zugehörige Farbzuleitung zurückgedrückt wird, weshalb diese Betriebsweise auch als "Reflow-Betrieb" bezeichnet wird. Das Zurückdrücken des Lacks aus dem Leitungsabschnitt der gemeinsamen Farbleitung zwischen dem Farbwechsler und dem Zerstäuber in die Farbzuleitung erfolgt vorzugsweise dadurch, dass im Bereich des Zerstäubers stromaufwärts vor dem Hauptnadelventil des Zerstäubers ein als Verdrängungsmedium dienendes Schiebemittel wie z. B. Spülflüssigkeit in die gemeinsame Farbleitung eingeleitet wird. Das in die gemeinsame Farbleitung eingeleitete Spülmittel drückt dann den in der gemeinsamen Farbleitung befindlichen Lack zurück in die zugehörige Farbzuleitung. In dem zugehörigen Ausführungsbeispiel der Erfindung mündet deshalb eine Spülmittelzuleitung über ein in dem Zerstäuber angeordnetes Spülmittelventil stromaufwärts vor dem Hauptnadelventil des Zerstäubers in die gemeinsame Farbleitung, um den in der gemeinsamen Farbleitung verbliebenen Lack für eine spätere Wiederverwendung durch den Farbwechsler hindurch in die zugehörige Farbleitung zurückzudrücken, wobei das eingeleitete Spülmittel als Verdrängungsmedium dient.

Auch der Reflow-Betrieb kann in an sich bekannter Weise mit einem Molch durchgeführt werden.

Die Einleitung des Verdränger- oder Schiebemediums, beispielsweise eines Löse- oder Spülmittels in den Zerstäuber erfolgt vorzugsweise nicht direkt über die Spülmittelzuleitung und das Spülmittelventil, sondern über einen Spülmitteldosierer, der in der Spülmittelzuleitung stromaufwärts vor dem Spülmittelventil angeordnet ist und das in dem Spülmitteldosierer befindliche Spülmittel in die gemeinsame Farbleitung drücken kann, wenn das Spülmittelventil geöffnet ist.

Mit "Dosierer" ist hier eine Einrichtung gemeint, die ein vorbestimmtes Flüssigkeitsvolumen (Dosis) fördern soll, aber im Gegensatz zu den für Beschichtungsmaterial verwendeten Dosierpumpen keinen definierten Volumenstrom pro Zeiteinheit erzeugen muss.

Ein derartiger Dosierer, z. B. ein Kolbendosierer, der vorzugsweise nur mit Druck beaufschlagt wird und ohne definierte Zeit- oder Geschwindigkeitssteuerung arbeitet, hat wesentliche Vorteile z. B. gegenüber einer volumetrisch arbeitenden Zahnraddosierpumpe. Neben dem geringerem Steueraufwand ergibt sich vor allem der Vorteil deutlich geringerer Verluste, die bei Dosierpumpen durch Schlupf verursacht werden und infolge Verschleiß im Betrieb ständig und überdies undefiniert größer werden.

Stromaufwärts vor dem Spülmitteldosierer befindet sich hierbei vorzugsweise ein weiteres Spülmittelventil zur steuerbaren Befüllung des Spülmitteldosierers über die Spülmittelzuleitung. Eingangsseitig kann der Spülmitteldosierer also vorzugsweise über das Spülmittelventil aus der Spülmittelzuleitung mit dem Spülmittel befüllt werden. Ausgangsseitig ist der Spülmitteldosierer dagegen über das Spülmittelventil mit der gemeinsamen Farbleitung verbunden, um das als Verdrängungsmedium dienende Spülmittel in die gemeinsame Farbleitung dosieren zu können.

In dem bevorzugten Ausführungsbeispiel der Erfindung weist der Spülmitteldosierer ein Dosiervolumen auf, das im Wesentlichen gleich dem Füllungsvolumen der Farbleitung zwischen dem jeweils angedockten Farbventil einerseits und dem Hauptnadelventil des Zerstäubers andererseits ist. Damit reicht das Dosiervolumen des Spülmitteldosierers aus, um den gesamten Leitungsabschnitt der gemeinsamen Farbleitung zwischen dem Farbwechsler und dem Zerstäuber mit dem als Verdrängungsmedium dienenden Spülmittel zu füllen und dadurch den in diesem Leitungsabschnitt befindlichen Lack zurück in die zugehörige Farbleitung zu drücken.

Beispielsweise kann der Spülmitteldosierer für den "Reflow-Betrieb" als Dosierzylinder ausgebildet sein oder durch einen Molchschlauch gebildet werden.

Hinsichtlich des Antriebs des Spülmitteldosierers bestehen verschiedene Möglichkeiten, wobei der Spülmitteldosierer vorzugsweise elektrisch oder pneumatisch angetrieben wird.

Es wurde bereits vorstehend erläutert, dass der erfindungsgemäße Farbwechsler eine bewegliche Farbentnahme aufweist, die an einer von mehreren Andockstellen andocken kann, um den Lack der gewünschten Farbe über die Andockstelle aus der zugehörigen Farbzuleitung zu entnehmen. Hierbei ist vorzugsweise eine Spannvorrichtung vorgesehen, welche die Farbentnahme (z.B. den Andockschlitten) und die jeweilige Andockstelle (z.B. in der Farbleiste) im angedockten Zustand mechanisch miteinander verspannt. Dies ermöglicht vorteilhaft ein nach außen hin kräftefreies Andocken der Farbentnahme an die jeweilige Andockstelle, so dass keine groß dimensionierten Halterungen oder Abstützungen erforderlich sind.

In einem bevorzugten Ausführungsbeispiel weist die Spannvorrichtung eine Nut mit einer Hinterschneidung auf, an der ein bewegliches Spannelement angreift. Beispielsweise können die einzelnen Farbzuleitungen und die zugehörigen Farbventile und Andockstellen in einer Reihe in einer Farbleiste angeordnet sein, wobei die Farbleiste die Nut zur Verspannung mit der Farbentnahme aufweist. Die Farbentnahme besteht hierbei vorzugsweise aus einem Andockschlitten, der in Längsrichtung der Nut relativ zu der Farbleiste verschiebbar ist, wobei der Andockschlitten mittels eines Andockzylinders eine in der Nut geführte Greifscheibe anziehen kann, um den Andockschlitten mit der Farbleiste zu verspannen.

Trotz der Verspannung zwischen dem Andockschlitten einerseits und der Farbleiste andererseits kann im Fall eines Fehlers, z. B. bei Versagen einer der dort vorgesehenen Dichtungen, im Bereich der Andockstellen eine Leckage auftreten, wobei Lack in die Nut in der Farbleiste austritt. Es ist deshalb vorteilhaft, wenn die Nut an ihrer Unterseite keine Hinterschneidung aufweist, damit leckagebedingt ausgetretener Lack unten aus der Nut ausfließen kann. Bei dem bevorzugten Ausführungsbeispiel der Erfindung weist die Nut deshalb nur an ihrer oberen Nutflanke eine Hinterschneidung auf, wohingegen die Nut an ihrer unteren Nutflanke hinterschneidungsfrei ist.

Es wurde bereits eingangs erwähnt, dass der Farbwechsler vorzugsweise an dem distalen Roboterarm ("Arm 2") montiert ist, damit die gemeinsame Farbleitung zwischen dem Farbwechsler und dem Zerstäuber möglichst kurz ist, was zu entsprechend geringen Farbwechselverlusten führt. Darüber hinaus sind auf dem distalen Roboterarm vorzugsweise auch ein Farbdruckregler und/oder eine Dosierpumpe für das Beschichtungsmaterial montiert, so dass sich wesentliche Teile der Applikationstechnik auf dem distalen Roboterarm befinden. Ferner ist es vorteilhaft, wenn in dem distalen Roboterarm auch ein servopneumatischer Stellantrieb angeordnet ist, um die Farbentnahme (z.B. den Andockschlitten) relativ zu den Andockstellen (z.B. an der Farbleiste) zu bewegen, um den Lack mit der gewünschten Farbe auszuwählen.

Mit "Dosierpumpe" zur Dosierung des Beschichtungsmaterials ist hier eine Fördereinrichtung gemeint, mit der der Volumenstrom, also das pro Zeiteinheit geförderte Volumen des Materials z.B. in Abhängigkeit von den momentan beschichteten Teilbereichen des zu beschichtenden Gegenstands automatisch während der Applikation geändert werden kann. Typische Beispiele für Dosierpumpen sind elektromotorisch angetriebene Kolbendosierer oder insbesondere Zahnradpumpen oder andere rotierende Verdrängerpumpen. Die bedarfsabhängige Änderung der Dosierrate kann bekanntlich durch Steuerung der Drehzahl des Antriebsmotors der Dosierpumpe erreicht werden.

Weiterhin ist es vorteilhaft, wenn der Farbdruckregler, der Stellantrieb für die Farbentnahme und/oder die Dosierpumpe in einem gemeinsamen Anschlussblock angeordnet sind, wodurch Verbindungsschläuche zwischen dem Farbdruckregler und der Dosierpumpe und damit schlauchbedingte Störgrößen entfallen. Darüber hinaus ermöglicht die Integration des Farbdruckreglers und der Dosierpumpe in einem einzigen Anschlussblock kurze Verbindungslängen sowie einen einfachen und kompakten Aufbau. Der Farbdruckregler kann direkt an die Dosierpumpe angebaut werden.

Ein weiterer Aspekt der Erfindung von eigener schutzwürdiger Bedeutung sieht einen besonderen Anschluss der einzelnen Farbzuleitungen an den Farbwechsler vor. Hierzu sind in dem Farbwechsler für die einzelnen Farbleitungen jeweils Aufnahmebohrungen angeordnet, in welche die Farbzuleitungen zum Anschluss an den Farbwechsler eingeführt werden. An ihrem freien Ende weisen die Farbzuleitungen hierbei eine schräg verlaufende Spannfläche auf, die beispielsweise aus einer konischen und koaxial zu der Aufnahmebohrung verlaufenden Mantelfläche bestehen kann. Weiterhin befindet sich in dem Farbwechsler eine Spannbohrung, die im Wesentlichen rechtwinklig zu der Aufnahmebohrung verläuft und in die Aufnahmebohrung mündet, wobei die Spannbohrung ein Innengewinde aufweist. In die Spannbohrung kann dann eine Spannschraube (z.B. eine Innensechskant-, Torx-, Schlitz- oder Kreuzschlitzschraube oder dgl.) eingeschraubt werden, die mit ihrem freien Ende gegen die schräge Spannfläche am freien Ende der Farbzuleitung drückt und die Farbzuleitung damit axial sichert und in der Aufnahmebohrung verspannt.

Die vorstehend beschriebene erfindungsgemäße Anschlusskonstruktion eignet sich auch zum Anschluss anderer Leitungen.

Im Betrieb kann der Lackierroboter sowohl zur Lackierung der Außenflächen als auch zur Lackierung der Innenflächen der Kraftfahrzeugkarosserien verwendet werden.

Bei einem Farbwechsel ist vorzugsweise vorgesehen, dass die bewegliche Farbentnahme (z.B. ein Andockschlitten) des Farbwechslers an eine von mehreren Andockstellen (z.B. an einer Farbleiste) andockt, die aus mehreren Farbzuleitungen mit verschiedenfarbigen Lacken gespeist werden.

Nach dem Andocken wird dann über die angedockte Andockstelle der zu applizierende Lack aus der zugehörigen Farbzuleitung entnommen und der Zerstäuber wird mit dem von dem Farbwechsler ausgewählten Lack über eine gemeinsame Farbleitung für die verschiedenfarbigen Lacke gespeist.

Weiterhin ist vorzugsweise vorgesehen, dass die Andockstellen in dem Farbwechsler über einen ersten Spülkreislauf mit einem Spülmittel gespült werden, wohingegen die gemeinsame Farbleitung zwischen dem Farbwechsler und dem Zerstäuber über einen zweiten Spülkreislauf mit einem Spülmittel gespült wird, wobei der erste Spülkreislauf von dem zweiten Spülkreislauf getrennt ist oder getrennt wird.

Vorteilhafterweise werden die Andockstellen und die gemeinsame Farbzuleitung zwischen dem Farbwechsler und dem Zerstäuber hierbei gleichzeitig oder zumindest zeitlich überlappend gespült, um die erforderliche Spüldauer und damit auch die Farbwechselzeit zu verkürzen.

Dabei werden die beiden Spülkreisläufe vorzugsweise durch mindestens ein Trennventil voneinander getrennt, um das gleichzeitige oder zeitlich überlappende Spülen zu ermöglichen.

Im Rahmen des bereits vorstehend erwähnten "Push-out-Betriebs" ist bei einem Farbwechsel vorgesehen, dass der in der gemeinsamen Farbleitung verbliebene Lack über den zweiten Spülkreislauf wahlweise durch ein in dem Zerstäuber befindliches Rückflussventil in eine Rückflussleitung oder über das Hauptnadelventil des Zerstäubers aus der gemeinsamen Farbleitung herausgedrückt wird.

Bei dem vorstehend bereits erwähnten "Reflow-Betrieb" ist dagegen vorgesehen, dass der in der gemeinsamen Farbleitung verbliebene Lack über die Andockstelle des Farbwechslers zurück in die zugehörige Farbzuleitung gedrückt und später wieder verwendet wird.

Die hier beschriebene Erfindung eignet sich insbesondere auch für die Applikation von 2K-Lacken, wobei die erforderlichen zusätzlichen Bauteile wie z. B. zwei Dosierpumpen ebenfalls in dem schlanken Arm der Lackiermaschine untergebracht werden können.

Die Erfindung eignet sich ebenso wie konventionelle Lackierroboter mit in der Nähe des Zerstäubers angeordneten Farbwechslern für die elektrostatische Beschichtung sowohl mit leitfähigem Lack wie z.B. Wasserlack als auch für sonstiges Beschichtungsmaterial mit Direktaufladung oder Außenaufladung. Bei nicht leitfähigen Lacken und deren Direktaufladung im Zerstäuber kann der erfindungsgemäße Andock-Farbwechsler auf dem Hochspannungspotential des Zerstäubers liegen, da die Lacksäule zwischen dem Farbwechsler und dem geerdeten Farbversorgungsteil des Roboters zur Isolation ausreicht. Bei leitfähigem Lack kann der Farbwechsler dagegen geerdet sein, wenn beispielsweise ein Rotationszerstäuber mit Außenelektroden verwendet wird.

Andere vorteilhafte Weiterbildungen der Erfindung sind in den Patentansprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht eines erfindungsgemäßen Lackierroboters,
- Figur 2: eine Perspektivansicht des distalen Roboterarms ("Arm 2") des erfindungsgemäßen Lackierroboters,
- Figur 3: eine andere Perspektivansicht des distalen Roboterarms,
- Figur 4: eine Perspektivansicht einer Farbleiste die Bestandteil eines Farbwechslers ist,
- Figur 5: eine schematische Ansicht des Andocksystems in dem erfindungsgemäßen Lackierroboter,
- Figuren 6A, 6B: schematische Querschnittsdarstellungen von verschiedenen Bauweisen der Farbleiste,
- Figuren 7 und 8: den Anschluss der einzelnen Farbleitungen an den Farbwechsler,
- Figuren 9A-9D: verschiedene Betriebszustände des erfindungsgemäßen Lackierroboters im Rahmen des sogenannten "Push-out-Betriebs",
- Figur 10: den "Push-out-Betrieb" in Form eines Flussdiagramms,
- Figuren 11A-11E: verschiedene Betriebszustände des erfindungsgemäßen Lackierroboters im Rahmen des sogenannten "Reflow-Betriebs",
- Figur 12: den "Reflow-Betrieb" in Form eines Flussdiagramms,
- Figuren 13A-13H: verschiedene Betriebszustände eines erfindungsgemäßen A/B-Systems für Push-out-Betrieb und ein entsprechendes zeitliches Ablaufdiagramm,
- Figuren 14A-14H: verschiedene Betriebszustände eines erfindungsgemäßen A/B-Systems für Reflow-Betrieb und ein entsprechendes zeitliches Ablaufdiagramm;
- Figur 15: eine insbesondere für die erfindungsgemäßen A/B-Systeme geeignete Ventilanordnung;
- Figur 16: eine modulare Farbleiste eines Farbwechslers, der für den erfindungsgemäßen Lackierroboter geeignet ist;
- Figur 17: eine schematische Darstellung eines Moduls der Farbleiste aus Figur 16;
- Figur 18: die Rückseite der Farbleiste gemäß Figur 16;
- Figur 19: eine Ansicht eines mit Farbumlauf arbeitenden Moduls der Farbleiste nach Figur 16;
- Figur 20: die Rückseite des Moduls gemäß Figur 19;
- Figur 21: eine Darstellung der Ventilanordnung des Moduls gemäß Figur 19 mit den an die Ventile angeschlossenen Rohrleitungen im Inneren des Modulkörpers;
- Figur 22: ein zur Ergänzung in einer Farbleiste gemäß den Figuren 16-18 geeignetes Modul für eine Sonderfarbversorgung;
- Figur 23A: eine schematische Ansicht der Ventilanordnung des Moduls gemäß Figur 22 und dessen Verbindung mit dem Zerstäuber des Lackierroboters; und
- Figur 23B: eine Detailansicht der Ventilanordnung des Moduls für die Sonderfarbversorgung in der Farbleiste gemäß Figur 23A.

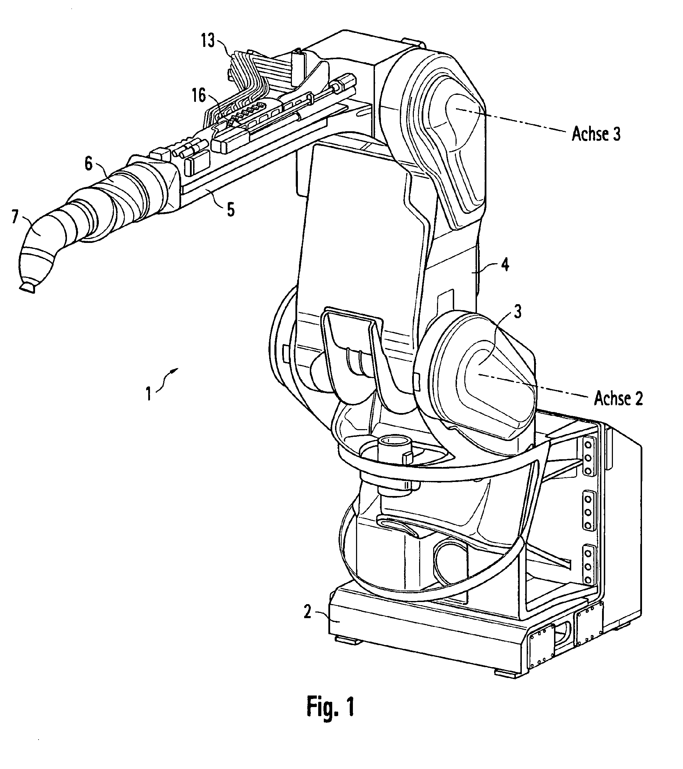

Die Figuren 1 bis 8 zeigen verschiedene Ansichten bzw. Teile eines erfindungsgemäßen Lackierroboters 1, der in einer Lackieranlage zur Lackierung von Kraftfahrzeugkarosserien eingesetzt wird, wobei sich der Lackierroboter 1 sowohl zur Lackierung der Außenflächen der Kraftfahrzeugkarosserien als auch zur Lackierung der Innenflächen der Kraftfahrzeugkarosserien eignet, wie noch detailliert beschrieben wird.

Der Lackierroboter 1 ist weitgehend herkömmlich aufgebaut und weist eine Roboterbasis 2 auf, die in diesem Ausführungsbeispiel auf einem Maschinenfundament fest montiert sein kann. Es ist jedoch alternativ auch möglich, die Roboterbasis 2 bei einer entsprechenden Abwandlung an einer Schiene linear verfahrbar zu montieren, so dass sich der Lackierroboter 1 in der Lackierkabine parallel zur Förderrichtung der zu lackierenden Kraftfahrzeugkarosserien bewegen kann. Für den hier beschriebenen Zweck ist es auch zweckmäßig, die Schiene in an sich bekannter Weise (EP 1 609 532 A1) in Höhe des oberen Teils der Karosse oder oberhalb ihres Daches zu montieren.

Auf der Roboterbasis 2 ist ein Roboterarm 3 drehbar montiert, wobei der Roboterarm um eine senkrechte Drehachse relativ zu der Roboterbasis 2 drehbar ist. An dem Roboterarm 3 ist ein weiterer Roboterarm 4 schwenkbar montiert.

Schließlich ist an dem distalen Ende des Roboterarms 4 ein distaler Roboterarm 5 schwenkbar montiert, wobei der Roboterarm 5 über eine herkömmliche, z. B. drei- oder vierachsige Roboterhandachse 6 einen Rotationszerstäuber 7 führt.

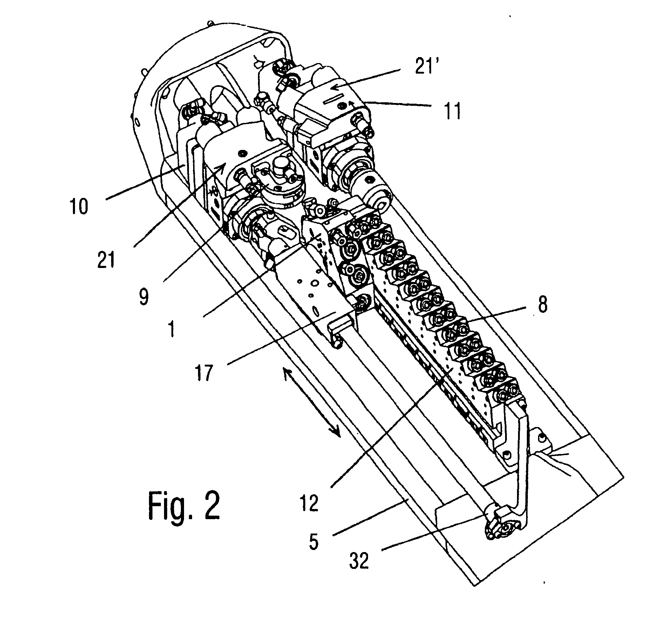

Der distale Roboterarm 5 ist hierbei ohne eine Gehäuseabdeckung dargestellt, so dass erkennbar ist, dass auf dem distalen Roboterarm 5 wesentliche Teile der Applikationstechnik montiert sind, nämlich gemäß Fig. 2 ein Farbwechsler 8, ein Farbdruckregler 9 eines an sich bekannten und üblichen Typs, eine Dosierpumpe 10 zur Dosierung eines Stammlacks und bei dem betrachteten Beispiel der Applikation von 2K-Lacken eine Dosierpumpe 11 zur Dosierung eines Härters.

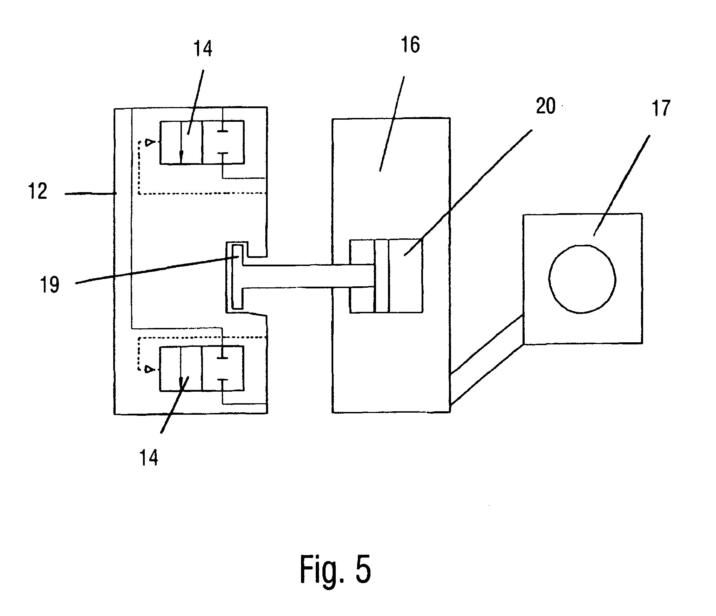

Der Farbwechsler 8 weist eine sogenannte Farbleiste 12 auf, die über zahlreiche Farbzuleitungen 13 mit verschiedenfarbigen Lacken versorgt wird, wobei die einzelnen Farbzuleitungen 13 in der Farbleiste 12 über jeweils ein Farbventil 14 (Fig. 5) in jeweils eine Andockstelle 15 münden, aus welcher der gewünschte Lack entnommen werden kann. Als Farbventile 14 mit geringem Platzbedarf können zweckmäßig elektrisch oder vorzugsweise von einem pneumatischen Kolbenantrieb gesteuerte Nadelventile mit an ihrem Ende konischen Ventilnadeln vorgesehen sein, wie sie aus konventionellen Farbwechslern an sich bekannt sind (z. B. DE 19846073A1, EP 1 250 964 B1, DE 10 2007 037 663.6).

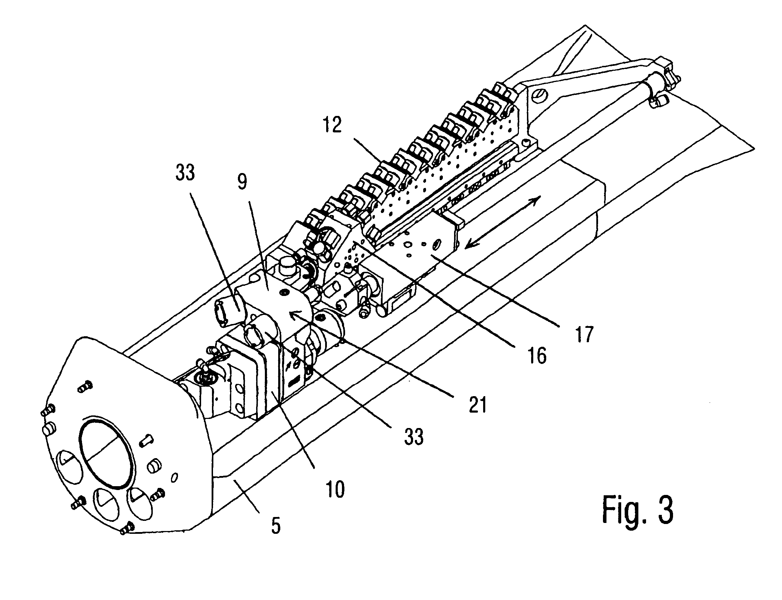

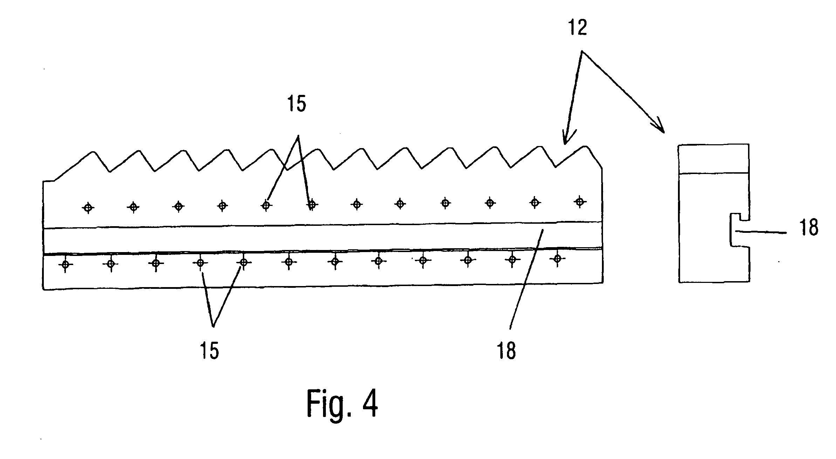

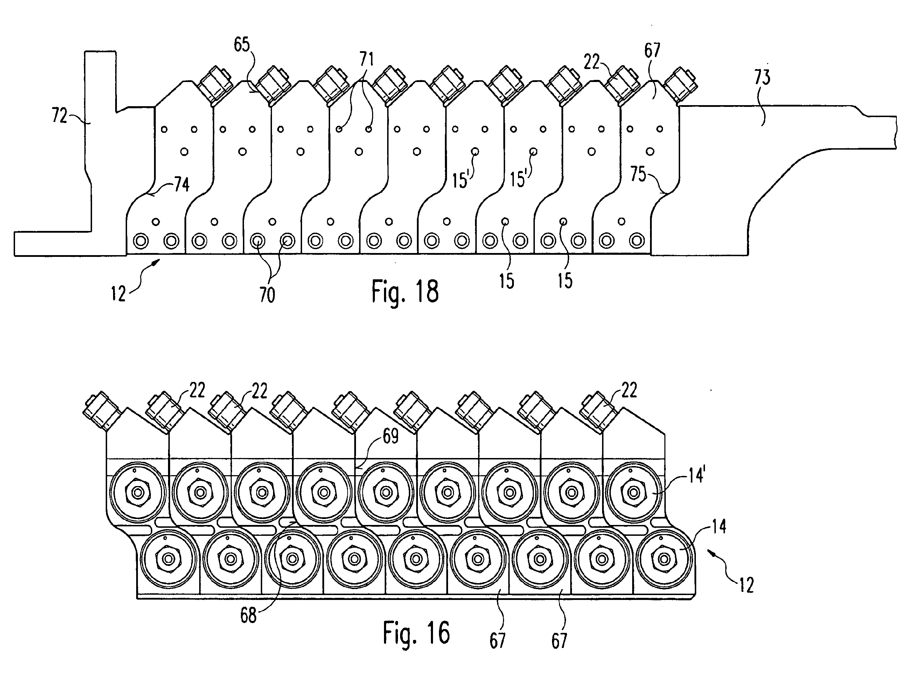

Wie noch genauer (Fig. 16 - 18) erläutert wird, können die Farbventile 14 (Fig. 5) z. B. in einer Seitenfläche der Farbleiste 12 in einer oder vorzugsweise mindestens zwei zu deren Längsrichtung (Pfeilrichtung in Fig. 3) parallelen Reihen angeordnet sein, mit quer oder vorzugsweise senkrecht zu dieser Seitenfläche und somit vorzugsweise parallel zu der Andockrichtung (des Linearantriebs 17 in Fig. 5) liegenden Nadelachsen. Ebenfalls darstellungsgemäß können sich die zugehörigen Andockstellen 15 (Fig. 4) mit gleichmäßigen gegenseitigen Abständen in einer oder mehr zu der Längsrichtung parallelen Reihen z. B in der Seitenfläche der Farbleiste 12 befinden, zweckmäßig auf der zu den Farbventilen entgegengesetzten Seite der Farbleiste 12. Bei der dargestellten Anordnung mit zwei Reihen sind die Andockstellen der einen Reihe in Längsrichtung der Farbleiste jeweils um den halben Abstand benachbarter Andockstellen gegen die Andockstellen der anderen Reihe versetzt.

Weiterhin weist der Farbwechsler 8 einen Andockschlitten 16 auf, der in Pfeilrichtung (vgl. Fig. 2 und 3) relativ zu der Farbleiste 12 in deren Längsrichtung verschiebbar ist, wobei der Andockschlitten 16 durch einen z. B. servo-pneumatischen, in an sich bekannter Weise mit einem Pneumatikzylinder arbeitenden Linearantrieb 17 in Pfeilrichtung positioniert wird, um an der gewünschten Andockstelle 15 der Farbleiste 12 anzudocken. Alternativ ist auch ein Antrieb mit einem elektrischen Motor oder ein sonstiger Linearantrieb in an sich bekannter Art einsetzbar, der durch gespeicherte Steuerdaten steuerbar ist.

Zur genauen Positionierung der Andockstellen ist der Linearantrieb in an sich bekannter Weise mit einer Messeinrichtung 32 (Fig. 2) versehen. Da der Zerstäuber 7 und in manchen Fällen auch Teile des Roboterarms 5 im Betrieb unter Hochspannung stehen können, ist die Messeinrichtung 32 in diesen Fällen gegen die Hochspannung isoliert. Im Fall einer elektrischen Messeinrichtung kann sie ferner zur Erfüllung der bekannten Exschutz-Bedingungen abgekapselt sein. Entsprechendes gilt für ggf. vorhandene sonstige elektrische Elemente im Roboterarm.

Die zerstäuberseitige Anschlussleitungsanordnung des Andockschlittens 16 kann sich in einer zu der Verschiebungsrichtung parallelen U-förmigen bewegbaren Kabelschlepp- oder Führungskette nach Art einer bei Lackiermaschinen an sich bekannten sogenannten Energiekette befinden, die am einen Ende an dem Andockschlitten und am anderen Ende ortsfest befestigt ist. Die zerstäuberseitige Leitungsanordnung steht in Verbindung mit Öffnungen des Andockschlittens 16, die jeweils mit einer der Reihen von Andockstellen 15 der Farbleiste 12 ausgerichtet sind. Weitere Andocköffnungen können in dem Andockschlitten 16 für Spülzwecke und für pneumatische Steuersignale zum Schalten der Farbventile 14 vorgesehen sein.

Bei der in Fig. 2 bis 4 dargestellten Farbleiste 12 für z. B. 24 Farben sei angenommen, dass die Farbschläuche als Stichleitungen angeschlossen sind. Wenn Platz für z. B. die doppelte Anzahl von Farbanschlüssen vorhanden ist, kann die Farbleiste auch für Farbumlaufbetrieb ausgebildet sein, wie noch genauer beschrieben wird.

Aus den Figuren 4 und 5 ist erkennbar, dass die Farbleiste 12 zwischen den bei dem betrachteten Beispiel vorgesehenen beiden Reihen von Andockstellen 15 eine in Pfeilrichtung (Fig. 2 und 3) verlaufende Nut 18 aufweist, an deren Oberseite eine Hinterschneidung angeordnet ist. In der Nut 18 gleitet im montierten Zustand eine Greifscheibe 19, die von dem Andockschlitten 16 über einen Pneumatikzylinder 20 geführt wird. Mit dem der als Andock- und Spannzylinder dienenden Pneumatikzylinder 20 sind der Andockschlitten und die Farbleiste quer relativ zueinander verschiebbar. Auch statt des Pneumatikzylinders 20 könnte ein elektromotorischer oder sonstiger Antrieb vorgesehen sein.

Im angedockten Zustand zieht der Pneumatikzylinder 20 die Greifscheibe 19 an, so dass die Greifscheibe 19 die Hinterschneidung der Nut 18 in Richtung des Andockschlittens 16 zieht, was zu einer mechanischen Verspannung zwischen dem Andockschlitten 16 einerseits und der Farbleiste 12 andererseits führt.

Zum Einen ermöglicht diese mechanische Verspannung zwischen dem Andockschlitten 16 und der Farbleiste 12 ein weitgehend leckagefreies Andocken an die Andockstellen 15 der Farbleiste 12.

Zum Anderen ermöglicht diese Art der mechanischen Verspannung zwischen dem Andockschlitten 16 und der Farbleiste 12 ein nach außen kräftefreies Andocken, so dass keine aufwendigen Halterungen bzw. Abstützungen erforderlich sind, um den Andockschlitten 16 gegen die Farbleiste 12 zu pressen.

Im nicht-angedockten Zustand ist der Pneumatikzylinder 20 dagegen entspannt, so dass die Greifscheibe 19 in der Nut 18 mit einem Spiel frei gleiten kann, damit der servopneumatische Linearantrieb 17 den Andockschlitten 16 in Pfeilrichtung frei positionieren kann, um an die gewünschte Andockstelle 15 anzudocken.

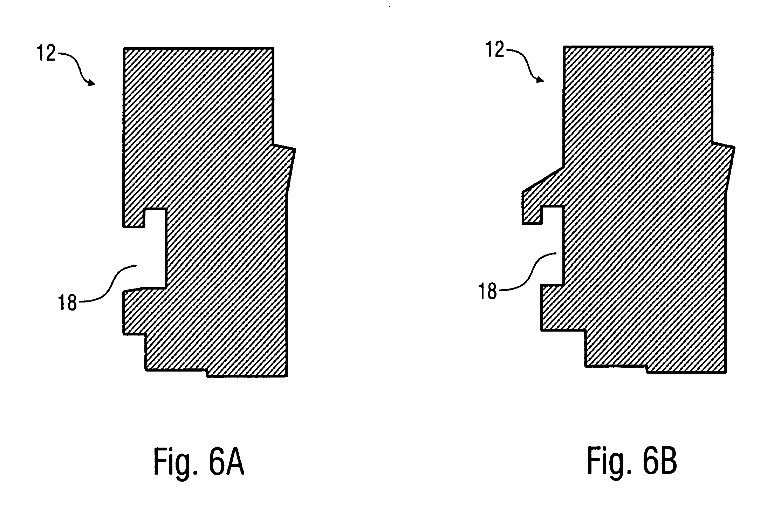

Aus den Figuren 4 und 6A ist weiterhin ersichtlich, dass die Nut 18 nur an ihrer Oberseite eine Hinterschneidung aufweist, während die Nut 18 an ihrer Unterseite hinterschneidungfrei ist und sogar eine schräg nach unten geneigte Nutflanke aufweist. Diese Gestaltung der Nut 18 ist vorteilhaft, weil leckagebedingt ausgetretener Lack in der Nut 18 auf diese Weise einfach abfließen kann und leicht entfernbar ist.

Figur 6B zeigt hierbei eine alternative Gestaltung der Nut 18, wobei die Nut 18 in der Farbleiste 12 außenliegend angeordnet ist.

Bei dem dargestellten Beispiel kann der Andockschlitten 16 relativ zu der ortsfest in den Arm 5 montierten Farbleiste 12 verschiebbar sein, doch ist auch eine umgekehrte Anordnung mit verschiebbarer Farbleiste denkbar. Vorteilhaft an dem konstruktiven Aufbau des Farbwechslers 8 ist die äußerst schlanke Bauweise, so dass der distale Roboterarm 5 trotz der darauf angeordneten Applikationstechnik ebenfalls sehr schlank gebaut ist. Dies ist wichtig, weil der distale Roboterarm 5 auf diese Weise leicht durch Karosserieöffnungen (z.B. Fensteröffnungen) in die zu lackierende Kraftfahrzeugkarosserie eingeführt werden kann, um dort Innenflächen zu lackieren. Aufgrund seiner schlanken Bauweise eignet sich der erfindungsgemäße Lackierroboter 1 also sowohl zur Lackierung von Innenflächen als auch zur Lackierung von Außenflächen. Dies bietet die Möglichkeit, in einer Lackierlinie nur einen einzigen Robotertyp zum Lackieren der Kraftfahrzeugkarosserien einzusetzen, was eine wesentliche Vereinfachung bedeutet.

Fig. 2 und 3 zeigen bei 21 einen Anschlussblock 21, in dem die Dosierpumpe 10 für den Stammlack- und der Farbdruckregler 9 sowie zugehörige Drucksensoren 33 integriert sind. Der Farbdruckregler 9 kann direkt und ohne Verbindungsschlauch an die Dosierpumpe 10 angebaut sein. Diese Integration der Dosierpumpe 10 und des Farbdruckreglers 9 in dem Anschlussblock 21 bietet den Vorteil, dass mit den Schlauchleitungen auch schlauchbedingte Störgrößen zwischen dem Farbdruckregler 9 und der Dosierpumpe 10 entfallen. Darüber hinaus bietet die Integration des Farbdruckreglers 9 und der Dosierpumpe 10 in dem Anschlussblock 21 den Vorteil kurzer Verbindungslängen sowie eines einfachen und kompakten Aufbaus. Mit 21' ist in Fig. 2 der zweite Anschlussblock für das eingangs erwähnte 2K-System bezeichnet.

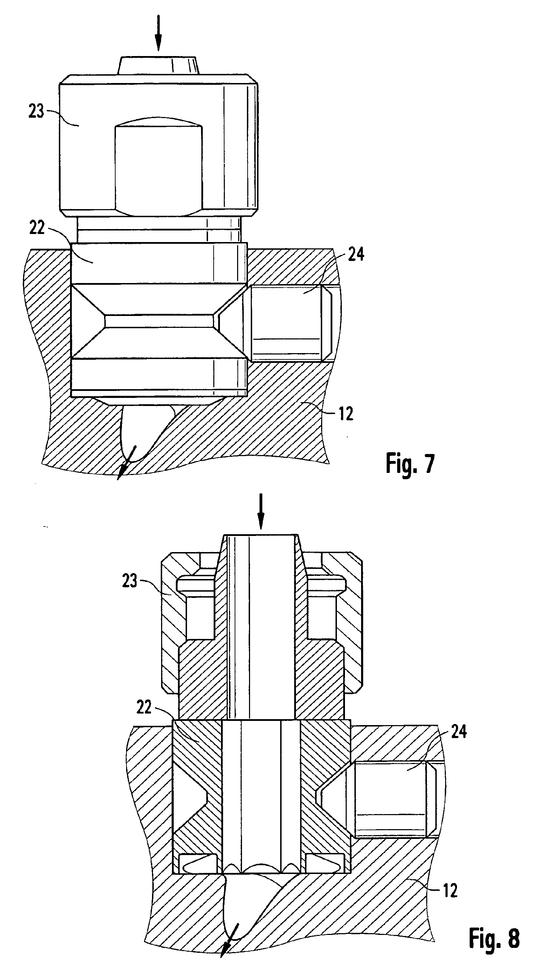

Die Figuren 7 und 8 zeigen eine erfindungsgemäße Anschlusskonstruktion zum Anschluss der Farbzuleitung 13 an die Farbleiste 12. So weisen die einzelnen Farbzuleitungen jeweils an ihrem freien Ende einen Stecknippel 22 mit einer Überwurfmutter 23 auf, wobei der Stecknippel 22 zum Anschluss an die Farbleiste 12 in eine entsprechende Aufnahmebohrung in der Farbleiste 12 eingesteckt wird. Zur Fixierung des Stecknippels 22 und damit auch der zugehörigen Farbzuleitung in der Aufnahmebohrung der Farbleiste 12 weist die Farbleiste 12 weiterhin eine Spannbohrung auf, die quer, also rechtwinklig oder schräg zu der Aufnahmebohrung verläuft und in die Aufnahmebohrung mündet. In diese Spannbohrung wird zur Fixierung des Stecknippels 22 eine Spannschraube 24 eingeschraubt, bis die Spannschraube 24 mit ihrer kegelförmigen Spitze gegen eine entsprechend konisch geformte Spannfläche des Stecknippels 22 stößt. Beim weiteren Einschrauben der Spannschraube 24 verspannt die Spannschraube 24 dann den Stecknippel 22 in der Aufnahmebohrung, wodurch der Stecknippel 22 und die zugehörige Farbzuleitung auch in der Aufnahmebohrung fixiert wird.

Die Spannschraube 24 kann hierbei z. B. als Innensechskantschraube oder dgl. ausgebildet sein, so dass zum Anschluss der einzelnen Farbzuleitungen 13 lediglich ein InbusSchlüssel oder dgl. erforderlich ist, der zwischen den einzelnen Farbzuleitungen 13 einfacher gehandhabt werden kann als ein Gabelschlüssel oder ein Ringschlüssel. Die einzelnen Anschlüsse der Farbzuleitungen 13 an der Farbleiste 12 können deshalb in geringeren Abständen zueinander angeordnet werden, wodurch der erforderliche Bauraum weiter verringert wird.

Bei der von dem Pneumatikzylinder 20 (Fig. 5) durchgeführten Andockbewegung des Andockschlittens 16 quer zu der Farbleiste 12 muss für eine genaue Zentrierung des Andockeingangs des Andockschlittens 16 in Bezug auf die Andocköffnung 15 des jeweils angefahrenen Farbventils 14 gesorgt werden. Hierfür können an mindestens einem der beiden Bauteile 12, 16 ein oder mehrere (nicht dargestellte) Zentrierstifte angeordnet sein, die in eine Bohrung an den jeweils anderen Bauteilen eingreifen können. Diese Positionierung ist für eine bestimmte Genauigkeit (z.B. 0,5 mm) ausgelegt, die eingehalten werden muss, weil die Zentrierstifte größere Abweichungen (z.B. mehr als 0,5 mm) der Linearpositionierung durch den beispielsweise servo-pneumatischen Linearantrieb 17 (Fig. 3) von der richtigen Position nicht mehr ausgleichen können. Abweichungen sind möglich, weil kein beliebig genauer Sensor in der für die Positionierung vorgesehenen Messeinrichtung verwendet werden kann oder soll. Zur genauen Positionierung kann der Linearantrieb 17 in einem Regelkreis betrieben werden, wobei für die einzelnen Farben jeweils gespeicherte Positionssollwerte mit den beispielsweise von der Messeinrichtung 32 (Fig. 2) festgestellten Ist-Positionen verglichen werden und bei Abweichungen korrigiert werden können.

Bei dieser Positionierung kann allerdings das Problem bestehen, dass die gespeicherten Positionssollwerte nicht immer genau mit den tatsächlichen Positionen der Andocköffnungen 15 übereinstimmen. Der Grund für diese Fehler sind beispielsweise Toleranzen bei der Fertigung des Farbwechselsystems oder Toleranzen des Messsystems. Sich addierende Toleranzen können sich z. B. bei Zusammensetzen des Farbwechslers, d. h. insbesondere der Farbleiste 12 aus einzelnen modularen Segmenten (Fig. 16 - 18) ergeben. Zusätzlich zu Fehlern der ebenen Linearpositionierung kann sich die tatsächliche Andockposition auch durch statische Kräfte (z.B. je nach Winkel des Roboterarms) sowie Beschleunigungskräfte der Roboterbewegungen ändern. Bei einem nicht genau mit der tatsächlichen Position der Andocköffnung übereinstimmenden Positionssollwert und Korrektur dieses Fehlers durch die Zentrierstifte würde die Regelung nach dem Andocken weiterhin versuchen, die dem Sollwert entsprechende, vermeintlich richtige Position anzufahren. Dies kann zu einem Druckaufbau durch den Regelkreis bis zum Maximaldruck in dem Pneumatikzylinder des Linearantriebs führen, so dass beim anschließenden Abdocken der durch die Pneumatik vorgespannte Andockschlitten schlagartig zu der unrichtigen Sollposition springt oder diese überschwingt. Die Folge wäre eine unerwünschte mechanische Beanspruchung der Zentrierstifte und der zugehörigen Bohrungen.

Zur Lösung dieses Problems gibt es erfindungsgemäß verschiedene Möglichkeiten, die sich insbesondere durch Softwarefunktionen der Andocksteuerung realisieren lassen.

Gemäß einer ersten Möglichkeit können die unerwünschten mechanischen Belastungen dadurch vermieden werden, dass nach dem Andocken die Steuerung den Druck in den Pneumatikzylinder auf Null oder einen ausreichend niedrigen Wert reduziert.

Eine zweite Möglichkeit besteht darin, dass die Steuerung die nach dem Andocken gemessene tatsächliche Andockposition (zumindest innerhalb einer vorbestimmten zulässigen Toleranz) als neue Sollposition übernimmt und somit das unerwünschte Gegenregeln vermieden wird. Diese neue Sollposition kann nur bis zum anschließenden Abdocken gelten oder aber auch als zukünftige Sollposition gespeichert werden.

Eine andere Möglichkeit ist die statistische Auswertung der bei einer zweckmäßigen Anzahl (z.B. zwischen drei und fünfzig oder auch hundert) jeweils vorhergehender Andockvorgänge für die gleiche Farbe gemessenen tatsächlichen Andockpositionen und die Übernahme des hieraus errechneten Mittelwerts als neue Sollposition. Dadurch können zumindest größere Schwankungen und Fehler vermieden werden.

Ferner kann eine als Sollposition zu übernehmende mittlere Position aus ermittelten oberen und unteren Positionsgrenzwerten errechnet werden, die man dadurch erhält, dass der angedockte Andockschlitten von dem Servoantrieb in seinen beiden Richtungen bis zu der jeweiligen Grenze des vorhandenen Bewegungsspiels bewegt wird.

Weitere Probleme können in dem Positionsmesssystem (Messeinrichtung 32) auftreten. So kann es sein, dass ein in dem Messsystem verwendeter Positionssensor für die tatsächliche Position des Andockschlittens je nach dessen Bewegungsrichtung unterschiedliche Positionsmesswerte liefert. Dieses Hystereseproblem des Sensors lässt sich dadurch lösen, dass die einzelnen Farbventile 14 beziehungsweise deren Andocköffnungen 15 immer in der gleichen Richtung angefahren werden. Die Anfahrrichtung wäre andernfalls zufällig und davon abhängig, in welcher Richtung das jeweils als nächstes anzufahrende Farbventil liegt, was in anderen Fällen zweckmäßig sein kann. Statt dessen wird zur Vermeidung des genannten Hystereseproblem das jeweils nächste Farbventil nur dann direkt in der gleichen Richtung angefahren wie das aktuelle Farbventil, wenn es von einem Bezugspunkt (beispielsweise dem ersten Farbventil) aus in der gleichen Richtung liegt. Liegt das nächste Farbventil dagegen zwischen dem aktuellen Farbventil und dem Bezugspunkt, fährt der Andockschlitten mit seinem Andockeingang zunächst bis über das nächste Farbventil hinaus an eine Stelle (z.B. bis zu dem ersten Farbventil) zurück, von wo es dieses nächste Farbventil nach Richtungsumkehr erreicht.

Eine Alternativmöglichkeit besteht darin, für jede Andockposition nicht wie im Normalfall nur einen Sollwert zu speichern, sondern für jede der beiden möglichen Anfahrrichtungen je einen Sollwert, der dann je nach der Fahrrichtung des Andockschlittens verwendet wird.

Ein weiteres Problem des Positionsmesssystems kann eine für die erforderliche Positioniergenauigkeit unvollkommene Linearität des Sensorverhaltens, also des Messwerts als Funktion des Andockschlittenwegs sein. Ähnliche Probleme können auf Alterung des Sensors oder auf Verschleiß oder Temperaturfehlern der Messeinrichtung beruhen. Diese und andere Probleme lassen sich durch Einzelreferierung lösen, wobei zur Erstellung des Steuerprogramms jede Farbposition einzeln von Hand angefahren und dann die betreffende tatsächliche Position gespeichert wird, so dass die Genauigkeit nur noch von der (an sich extrem genauen) Reproduzierbarkeit abhängt. Etwas weniger aufwendig wäre als Alternativmöglichkeit, nur eine erste Andockstelle manuell oder automatisch anzufahren, die tatsächliche Position festzustellen und dann von dort aus den Andockschlitten selbsttätig über die dem System bekannte Entfernungsstrecke zu der nächste Andockstelle zu fahren, dann zu der übernächsten Andockstelle, usw. Bei jeder Andockstelle wird vorzugsweise bei drucklosem Pneumatikzylinder deren gemessene Position als Sollwert gespeichert, bis die vollständige Tabelle aller Positionen vorliegt. Da die Abstände zwischen den Andockstellen klein sind, ergeben sich entsprechend geringe Linearitätsfehler.

Es ist zweckmäßig, bei der Erstellung der Tabelle der Positionssollwerte verschiedene Prüfungen hinsichtlich Richtigkeit und Vollständigkeit durchzuführen. Zum einen wird überprüft, dass in einem bestimmten Streckenbereich, in dem sich nur die Andocköffnung des Farbventils einer einzigen Farbe befinden kann, nicht die Positionen für zwei verschiedene Farben festgestellt und einprogrammiert ("gelernt") werden. Ferner wird überprüft, dass jeweils zwischen den zwei erfassten Farbpositionen innerhalb einer bestimmten Toleranzgrenze (typisch wenige mm) der vorgesehene Abstand eingehalten ist, um zu vermeiden, dass das System bei der Sollwertfeststellung beispielsweise eine Farbposition überspringt. Sodann kann auch zweckmäßigerweise überprüft werden, dass die Farbpositionen in der logischen Reihenfolge der Farben (1, 2, 3...) "gelernt" werden.

Die erfindungsgemäße Positionierung und Programmierung eignet sich sinngemäß auch für andere Andock-Farbwechsler einschließlich Rotationsfarbwechslern mit drehbaren Andockeingängen und ist auch nicht unbedingt auf für die Innen- und Außenlackierung geeignete Roboter beschränkt.

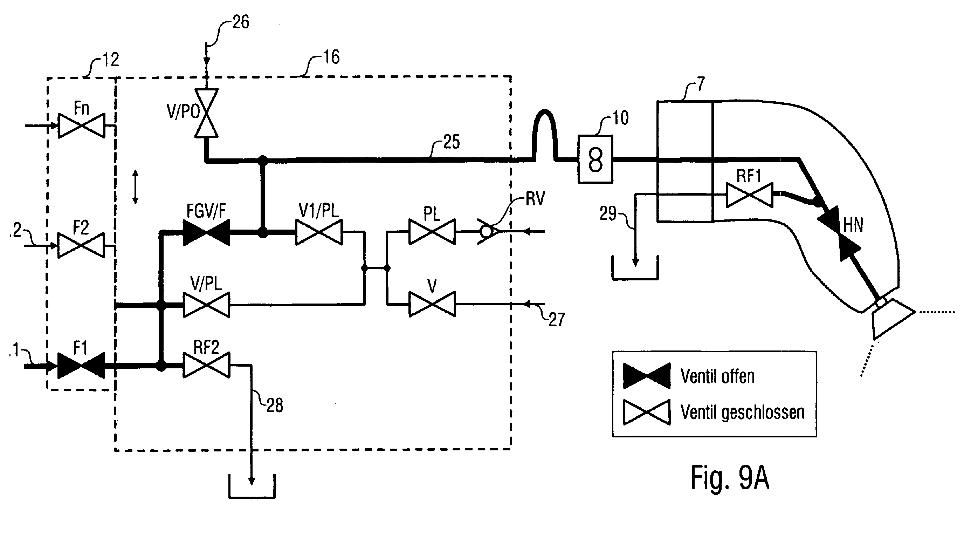

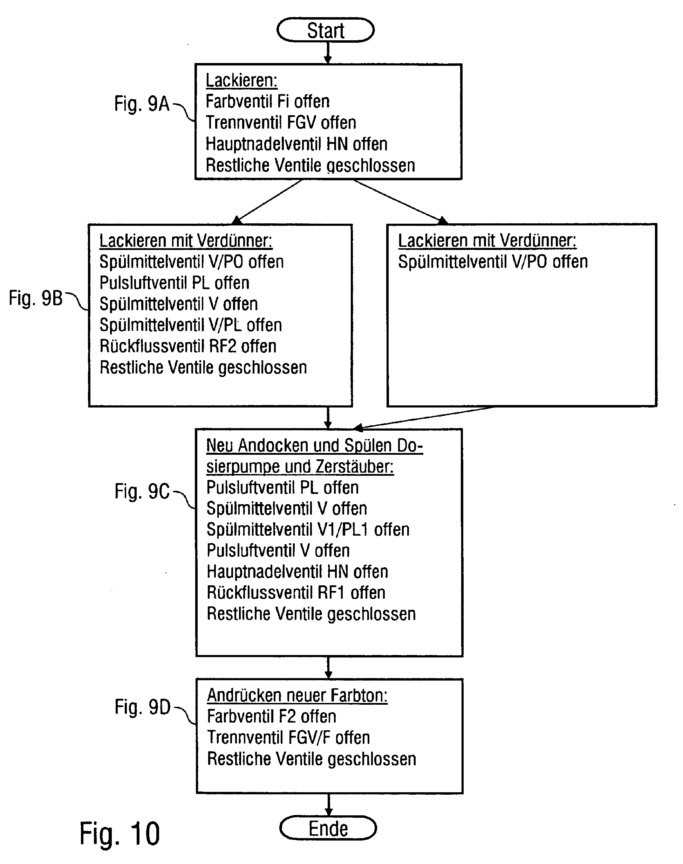

Die Figuren 9A bis 9D zeigen verschiedene Betriebszustände des erfindungsgemäßen Lackierroboters 1 im Rahmen eines sogenannten "Push-out-Betriebs", wobei die verschiedenen Betriebszustände in Figur 10 in Form eines Flussdiagramms dargestellt sind.

Im Folgenden wird zunächst unter Bezugnahme auf Figur 9A der normale Lackierbetrieb beschrieben.

Bei dem normalen Lackierbetrieb gemäß Figur 9A ist der Andockschlitten 16 mit einem ersten Andockeingang an die Farbleiste 12 angedockt und es wird über eine Farbzuleitung 13.1 und ein Farbventil F1 ein Lack mit der gewünschten Farbe aus der Farbleiste 12 entnommen.

Der aus der Farbleiste 12 entnommene Lack wird dann über ein Trennventil FGV/F in eine gemeinsame Farbleitung 25 geleitet, wobei die gemeinsame Farbleitung 25 über die Dosierpumpe 10 zu dem Rotationszerstäuber 7 führt, der den zugeführten Lack bei geöffnetem Hauptnadelventil HN appliziert.

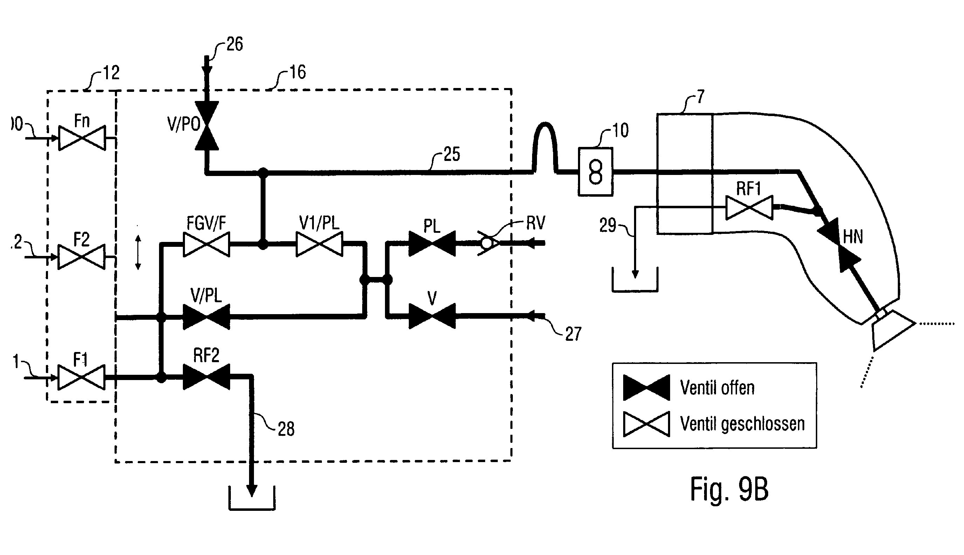

Im Folgenden wird nun der in Figur 9B dargestellte Betriebszustand des Lackierroboters erläutert.

Zum Einen wird in diesem Betriebszustand der in der gemeinsamen Farbleitung 25 befindliche Lack aus der gemeinsamen Farbleitung 25 herausgedrückt, weshalb dieser Betriebszustand auch als "Push-out-Betrieb" bezeichnet wird. In diesem Betriebszustand ist das Farbventil F1 geschlossen, so dass die Farbleiste 12 keinen Lack an den Andockschlitten 16 abgibt.

Stattdessen wird ein Spülmittel (typisch ein Verdünner für den verwendeten Lack) über eine Spülmittelzuleitung 26 und ein Spülmittelventil V/PO in die gemeinsame Farbleitung 25 eingeleitet, wobei das Spülmittel als Verdrängungsmedium dient und den in der gemeinsamen Farbleitung 25 verbliebenen Lack über den Rotationszerstäuber 7 aus der gemeinsamen Farbleitung 25 ausdrückt. Dabei kann der über den Rotationszerstäuber 7 ausgedrückte Lack zunächst noch zur Lackierung benutzt werden, jedoch muss der Lackierbetrieb rechtzeitig eingestellt werden, bevor das über die Spülmittelzuleitung 26 eingeleitete Spülmittel an dem Rotationszerstäuber 7 austritt.

In diesem Betriebszustand ist das Trennventil FGV/F geschlossen und trennt damit die gemeinsame Farbleitung 25 von der Andockstelle an der Farbleiste 12, was eine Spülung der Andockstelle ermöglicht.

Hierzu wird über eine Spülmittelzuleitung 27 und ein Spülmittelventil V Spülmittel in den Andockschlitten 16 eingeleitet, wobei das Spülmittel bis zu den Andockstellen an der Farbleiste 12 gelangt und diese dadurch spült. Schließlich wird das eingeleitete Spülmittel dann über ein Rückfluss- oder Rückführungsventil RF2 und eine Rückfluss- oder Rückführungsleitung 28 zurückgeführt.

Es sind also in diesem Ausführungsbeispiel zwei getrennte Spülkreisläufe vorgesehen, die eine zeitgleiche Spülung der gemeinsamen Farbleitung 25 und der Andockstellen ermöglichen.

Der erste Spülkreislauf führt ausgehend von der Spülmittelzuleitung 27 über das Spülmittelventil V und das Ventil V/PL zu den Andockstellen der Farbleiste 12 und schließlich über das Rückflussventil RF2 in die Rückflussleitung 28.

Der zweite Spülkreislauf führt dagegen ausgehend von der Spülmittelzuleitung 26 über das Spülmittelventil V/PO in die gemeinsame Farbleitung 25, von wo der erste Spülkreislauf über die Dosierpumpe 10 in den Rotationszerstäuber 7 bis über das Hauptnadelventil HN verläuft.

Darüber hinaus wird in diesem Betriebszustand noch Pulsluft über ein Rückschlagventil RV und ein Pulsluftventil PL eingeleitet, um die Spülwirkung zu verbessern.

Wie im Flussdiagramm in Fig. 10 (rechts neben "Fig. 9B") dargestellt ist, wird die Andockschnittstelle nicht vor oder nach der durch den Zerstäuber führenden Leitung gespült, sondern parallel hierzu, also zeitgleich, um Betriebsverzögerungen zu vermeiden.

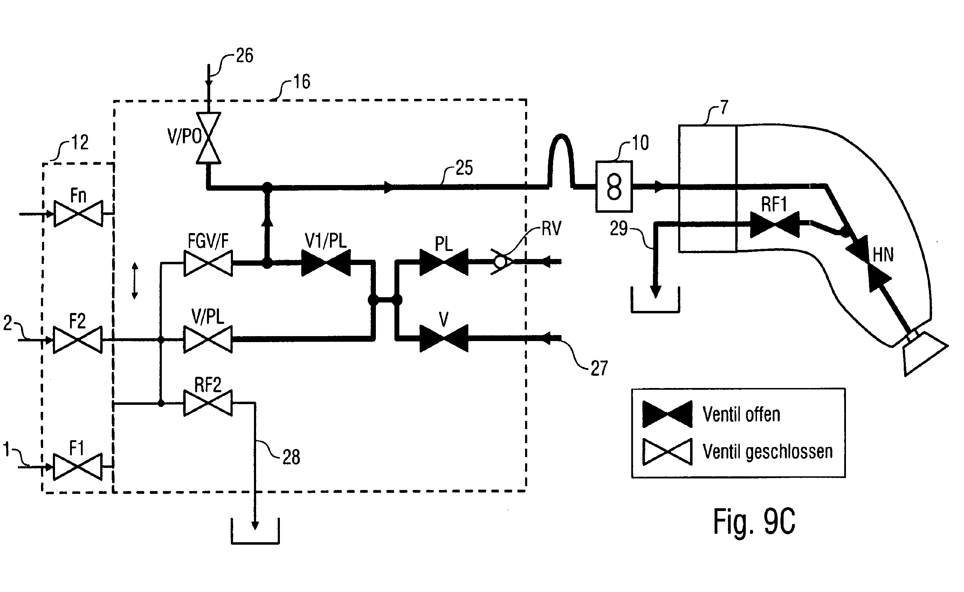

Im Folgenden wird nun der in Figur 9C dargestellte Betriebszustand erläutert.

Zum Einen dockt der Andockschlitten 16 in diesem Betriebszustand darstellungsgemäß nach entsprechender Verschiebung mit einem zweiten Andockeingang (statt mit seinem ersten Andockeingang wie in Fig. 9A und 9B) an eine andere Andockstelle der Farbleiste 12 an, um einen andersfarbigen Lack zu entnehmen. Hierzu wird der Andockschlitten 16 von dem servo-pneumatischen Linearantrieb 17 relativ zu der Farbleiste 12 in Pfeilrichtung verschoben, wobei der Andockschlitten 16 in der Zeichnung an die Andockstelle eines Farbventils F2 andockt, das über eine Farbzuleitung 13.2 mit einem Lack einer bestimmten Farbe versorgt wird.

Zum Anderen erfolgt in diesem Betriebszustand eine Spülung des Rotationszerstäubers 7 und der Dosierpumpe 10. Hierzu wird über die Spülmittelzuleitung 27 und das Spülmittelventil V Spülmittel eingeleitet, das über ein geöffnetes Ventil V1/PL und das ebenfalls geöffnete Farbventil in die gemeinsame Farbleitung 25 gelangt. Von dort erreicht das eingeleitete Spülmittel den Rotationszerstäuber 7 und wird dann über das Hauptnadelventil HN und ein in dem Rotationszerstäuber 7 angeordnetes Rückführungsventil RF1 und eine Rückführungsleitung 29 rückgeführt.

Darüber hinaus wird in diesem Betriebszustand noch Pulsluft über das Rückschlagventil RV und das Pulsluftventil PL eingeleitet, um die Spülwirkung zu verbessern.

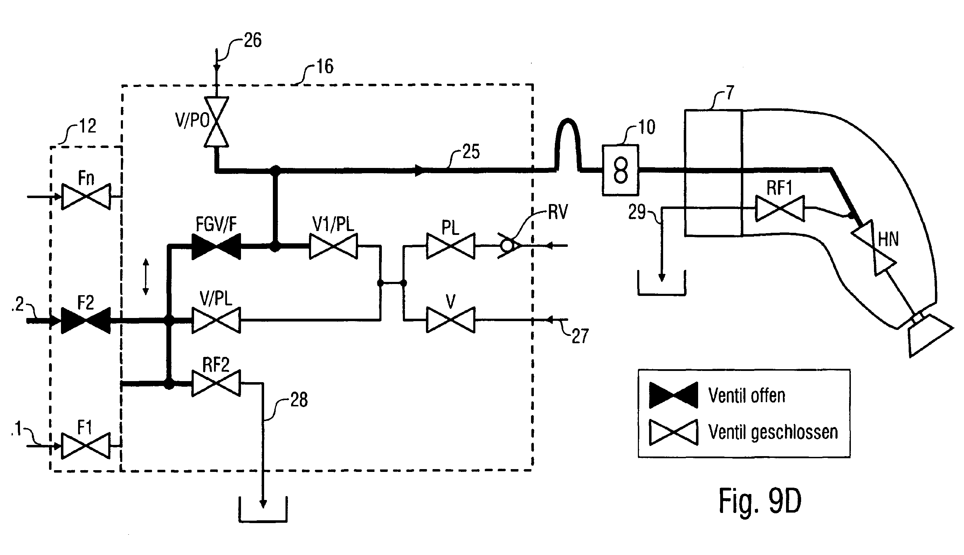

Im Folgenden wird nun der in Figur 9D dargestellte Betriebszustand des Lackierroboters 1 erläutert, in dem der neue Lack angedrückt wird. Hierbei erreicht der gewünschte Lack aus der Farbzuleitung 13.2 über das geöffnete Farbventil F2 und das geöffnete Trennventil FGV/F den Rotationszerstäuber 7, wobei das Hauptnadelventil HN zunächst noch geschlossen ist. Am Ende dieses Betriebszustands ist der Rotationszerstäuber 7 dann in der Lage, den neuen Lack zu applizieren.

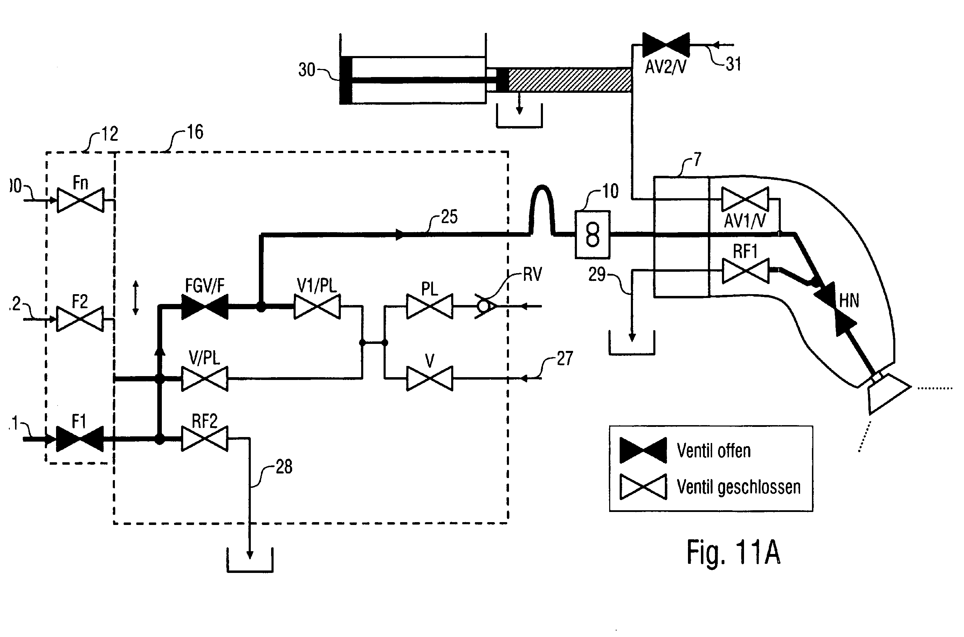

Die Figuren 11A bis 11E zeigen verschiedene Betriebszustände bei einem abgewandelten Ausführungsbeispiel des Lackierroboters an, der einen sog. "Reflow-Betrieb" ermöglicht, bei dem der bei einem Farbwechsel in der gemeinsamen Farbleitung 25 verbliebene Lack in die zugehörige Lackzuleitung 13.1 bzw. 13.2 zurückgedrückt wird, um eine Wiederverwendung zu ermöglichen.

Im Folgenden wird zunächst der Betriebszustand gemäß Figur 11A erläutert, in dem ein normaler Lackierbetrieb erfolgt. In diesem Betriebszustand gelangt Lack über die Farbzuleitung 13.1, das Farbventil F1, einen ersten Andockeingang des Andockschlittens 16, das Trennventil FGV/F und die gemeinsame Farbleitung 25 zu dem Rotationszerstäuber 7, der den zugeführten Lack bei geöffnetem Hauptnadelventil HN appliziert.

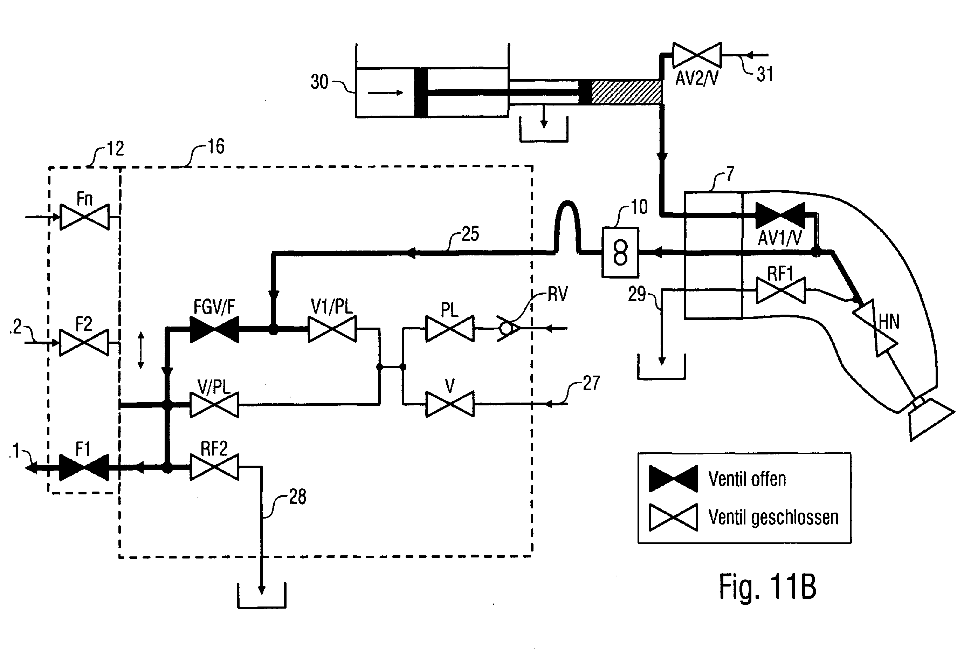

Im Folgenden wird nun der in Figur 11B dargestellte Betriebszustand erläutert, in dem bei einem Farbwechsel der in der gemeinsamen Farbleitung 25 zwischen dem Farbwechsler 8 und dem Rotationszerstäuber 7 befindliche Lack in die zugehörige Farbzuleitung 13.1 zurückgedrückt wird.

Hierzu dient ein Spülmitteldosierer 30 in Form des dargestellten Reflow-Zylinders, der eingangsseitig über eine Spülmittelzuleitung 31 und ein Spülmittelventil AV2/V mit Spülmittel gefüllt werden kann. Was hier mit "Dosierer" gemeint ist, wurde weiter oben erläutert.

Ausgangsseitig ist der Spülmitteldosierer 30 über ein Spülmittelventil AV1/V in dem Rotationszerstäuber 7 stromaufwärts vor dem Hauptnadelventil HN mit der gemeinsamen Farbleitung 25 verbunden.

In dem sog. "Reflow-Betrieb" drückt der Spülmitteldosierer 30 das darin befindliche Spülmittel über das Spülmittelventil AV1/V in die gemeinsame Farbleitung 25, wobei das eingeleitete Spülmittel als Verdrängungsmedium dient und den in der gemeinsamen Farbleitung 25 befindlichen Lack das Trennventil FGV/F und das Farbventil F1 zurück in die zugehörige Farbzuleitung 13.1 drückt, was eine anschließende Wiederverwendung des zurückgedrückten Lacks ermöglicht.

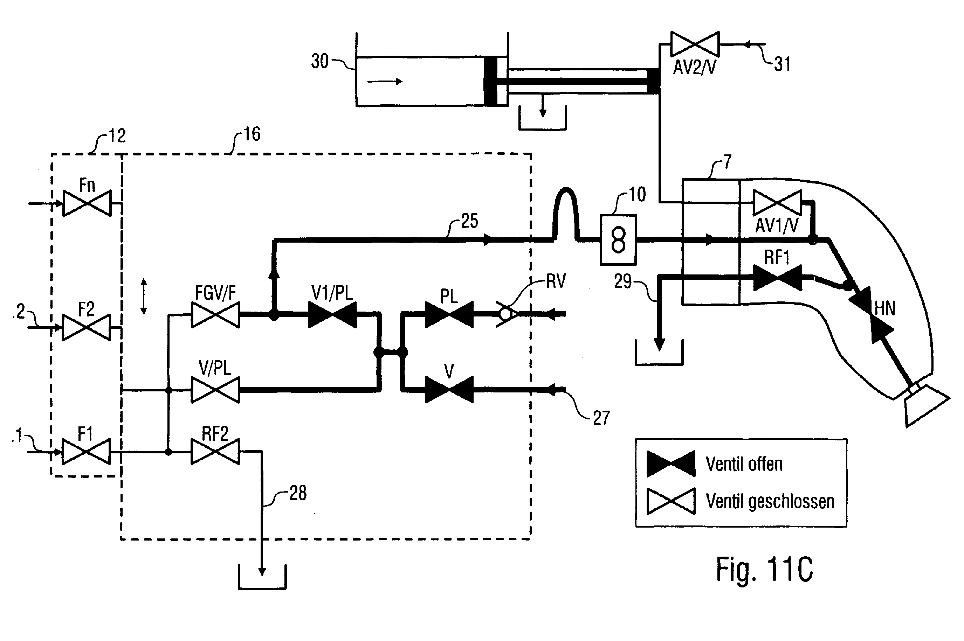

Im Folgenden wird nun der in Figur 11C dargestellte Betriebszustand erläutert, in dem die Dosierpumpe 10 und der Rotationszerstäuber 7 gespült werden.

Hierzu wird aus der Spülmittelzuleitung 27 über das Spülmittelventil V und das Ventil V1/PL Spülmittel in die gemeinsame Farbleitung 25 eingeleitet, wobei das Spülmittel über das Hauptnadelventil HN des Rotationszerstäubers 7 und das Rückführungsventil RF1 in die Rückführungsleitung 29 gelangt. Darüber hinaus wird in diesem Betriebszustand über das Rückschlagventil RV und das Pulsluftventil PL Pulsluft eingeleitet, um die Spülwirkung zu verbessern.

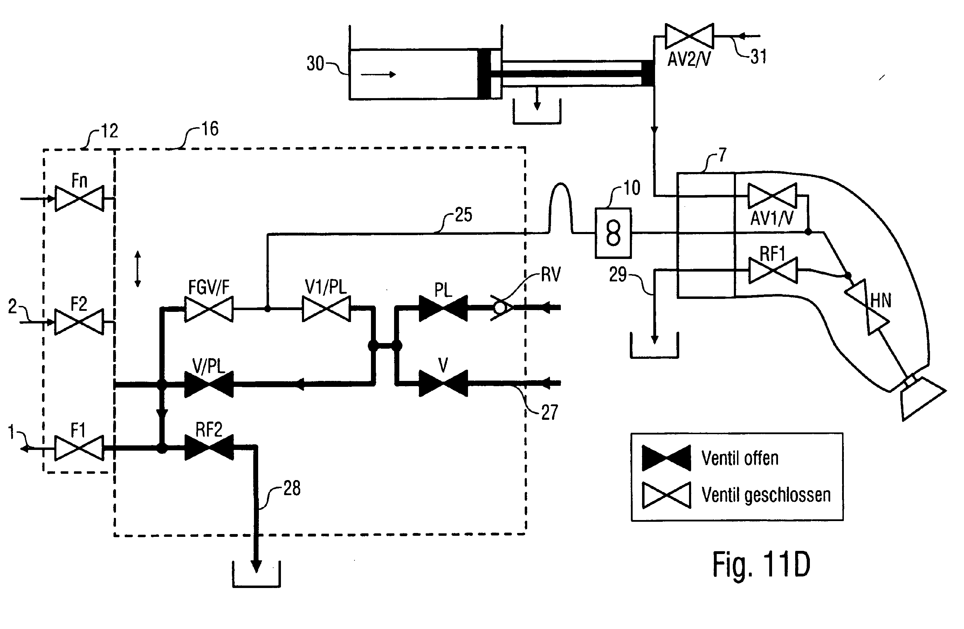

Im Folgenden wird nun der in Figur 11D dargestellte Betriebszustand erläutert, in dem der Andockschlitten 16 bis zu den Andockstellen an der Farbleiste 12 gespült wird.

Hierzu wird aus der Spülmittelzuleitung 27 über das Spülmittelventil V und das Ventil V/PL Spülmittel eingeleitet, das bis zu den Andockstellen der Farbleiste 12 gelangt und diese dadurch spült. Das eingeleitete Spülmittel wird dann über das Rückführungsventil RF2 in die Rückführungsleitung 28 geleitet.

Darüber hinaus wird auch beim Spülen des Andockschlittens 16 über das Rückschlagventil RF und das Pulsluftventil PL Pulsluft eingeleitet, um die Spülwirkung zu verbessern.

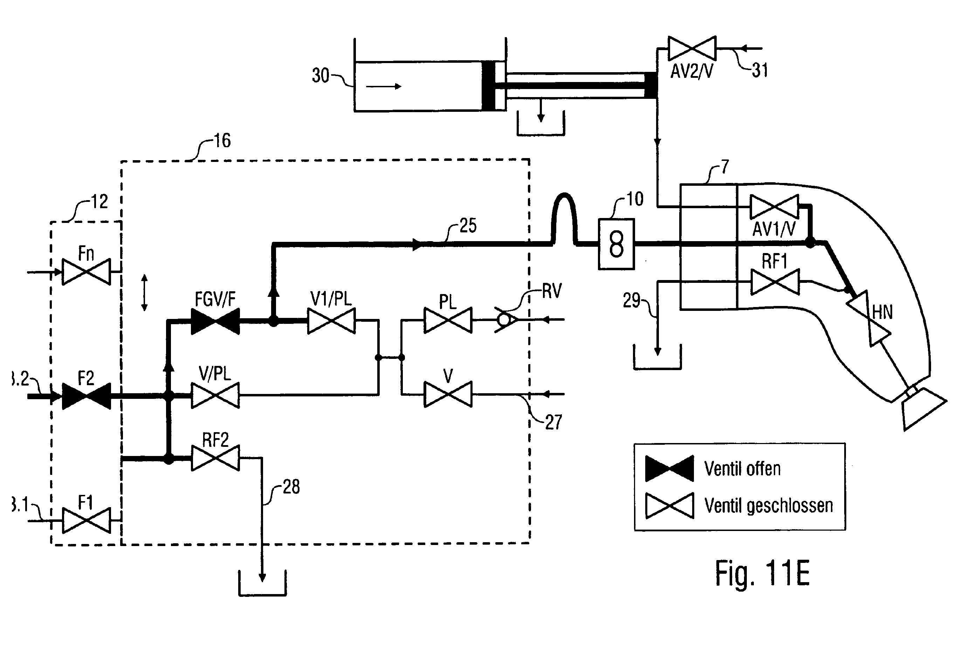

Im Folgenden wird nun der in Figur 11E dargestellte Betriebszustand erläutert.

Zum Einen dockt darstellungsgemäß der Andockschlitten 16 in diesem Betriebszustand nach entsprechender Verschiebung mit seinem zweiten Andockeingang (anstelle des erwähnten ersten Andockeingangs) an einer anderen Andockstelle der Farbleiste 12 an, um einen Lack mit einer anderen Farbe zu entnehmen.

Zum Anderen wird in diesem Betriebszustand der neue Lack angedrückt. Dabei gelangt der Lack aus der Farbzuleitung 13.2 über das Farbventil F2 und das Trennventil FGV/F zu dem Rotationszerstäuber 7, wo der neue Lack dann an dem zunächst noch geschlossenen Hauptnadelventil HN ansteht. Nach diesem Andrücken des neuen Lacks kann der Rotationszerstäuber 7 dann den neuen Lack applizieren.

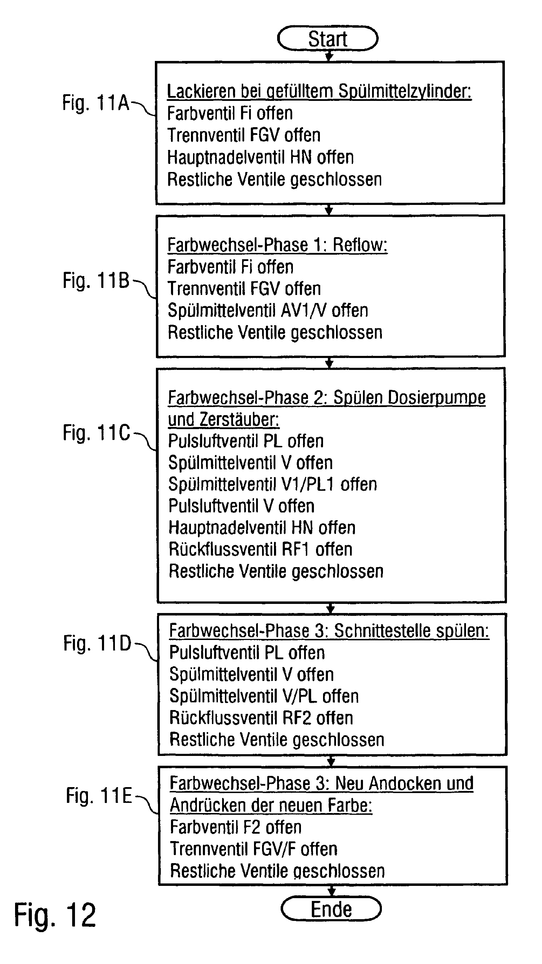

Die oben (Fig. 9-12) für den Betrieb mit Pushout und Reflow beschriebenen Ventilsysteme können zur weiteren Zeitersparnis bei einem Farbwechsel auf ein A/B-System erweitert werden, bei dem aus dem Andockschlitten 16 zwei getrennte Farbleitungen parallel in den Zerstäuber 7 führen.

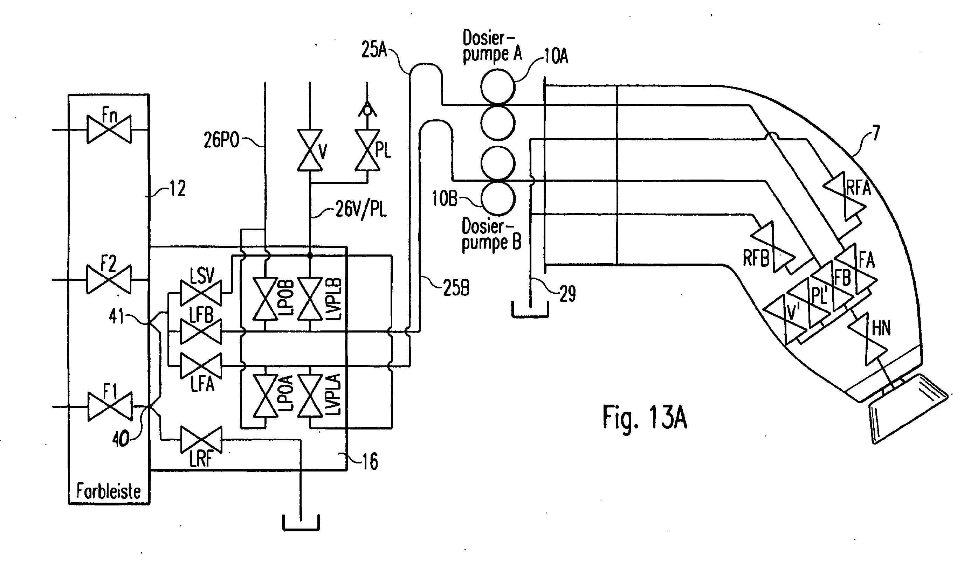

Die wesentlichen Einzelheiten des A/B-Push-out-Systems sind den Zeichnungen ab Fig. 13A zu entnehmen. Demgemäß hat der längs der Farbleiste 12 mit den Farbventilen F1, F2 usw. verschiebbare Andockschlitten 16 zwei selektiv an Farbventile der Farbleiste 12 anschließbare Andockeingänge 40 und 41, von denen je nach Position des Andockschlittens nur der eine oder nur der andere mit einem der Farbventile in der Farbleiste 12 verbunden ist, während der jeweils andere z. B. durch die Farbleiste abgedichtet sein kann (wie bei den Ausführungsbeispielen nach Fig. 9-12). An die beiden Andockeingänge sind in dem Andockschlitten 16 parallel zueinander die vier dargestellten Ventile angeschlossen, nämlich das Rückführungsventil RLF, das Farbventil LFA des A-Zweigs, das Farbventil LFB des B-Zweigs und das Spülventil LSV. Von dem Farbventil LFA führt die Farbleitung 25A des A-Zweigs über die Dosierpumpe 10A in den Zerstäuber 7 und dort zu einem innerhalb des Zerstäubers dem Hauptnadelventil HN vorgeschalteten Farbventil FA. Parallel hierzu führt von dem Farbventil LFB die Farbleitung 25B des B-Zweigs über die Dosierpumpe 10B in den Zerstäuber und dort zu einem innerhalb des Zerstäubers dem Hauptnadelventil HN parallel zu dem Ventil FA vorgeschalteten Farbventil FB.

Der Andockschlitten 16 enthält ferner die beiden dargestellten Pushout-Ventile LPOA und LPOB, von denen das Ventil LPOA innerhalb des Andockschlittens an die von dem Ventil LFA zu der Dosierpumpe 10A führende Leitung 25A und ähnlich das Ventil LPOB an die Leitung 25B angeschlossen ist. An ihrem jeweiligen Eingang sind die Ventile LPOA und LPOB an eine in den Andockschlitten führende Leitung 26PO für als Pushout-Schiebemittel dienendes Spülmittel (Verdünner) angeschlossen. Zusätzlich enthält der Andockschlitten die beiden dargestellten Spülventile LVPLA und LVPLB, von denen ähnlich wie die Ventile POA und POB das eine an die Leitung 25A und das andere an die Leitung 25B angeschlossen ist, und die eingangsseitig über die Leitung 26V/PL an die externen Ventile V und PL für Spülmittel (Verdünner) und Pulsluft angeschlossen sind.

In dem Zerstäuber 7 befinden sich weitere Ventile PL' und V' für Pulsluft und Verdünner, die parallel zu den erwähnten Ventilen FA und FB dem Hauptnadelventil HN vorgeschaltet sind und eingangsseitig von entsprechenden in den Zerstäuber führenden Leitungen (nicht dargestellt) gespeist werden können. Ferner enthält der Zerstäuber die beiden dargestellten Rückführungsventile RFA und RFB, die darstellungsgemäß zwischen die Eingangsseite des Ventils FA bzw. FB und die ihnen gemeinsame Rückführungsleitung 29 geschaltet sind.

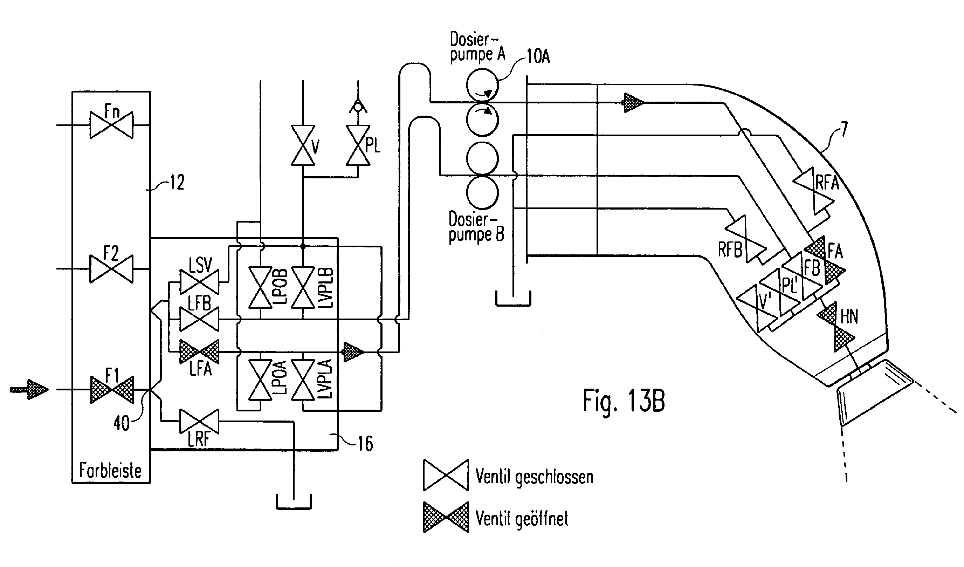

Bei dem in Fig. 13B gezeigten Betriebszustand, bei dem (nur) die Ventile F1, LFA, FA und HN geöffnet sind und an das Ventil F1 der Farbleiste 12 der Andockeingang 40 des Andockschlittens 16 angedockt ist, fließt durch diese Ventile die betreffende Farbe in den Glockenteller des Zerstäubers 7. Es wird also durch den A-Zweig lackiert.

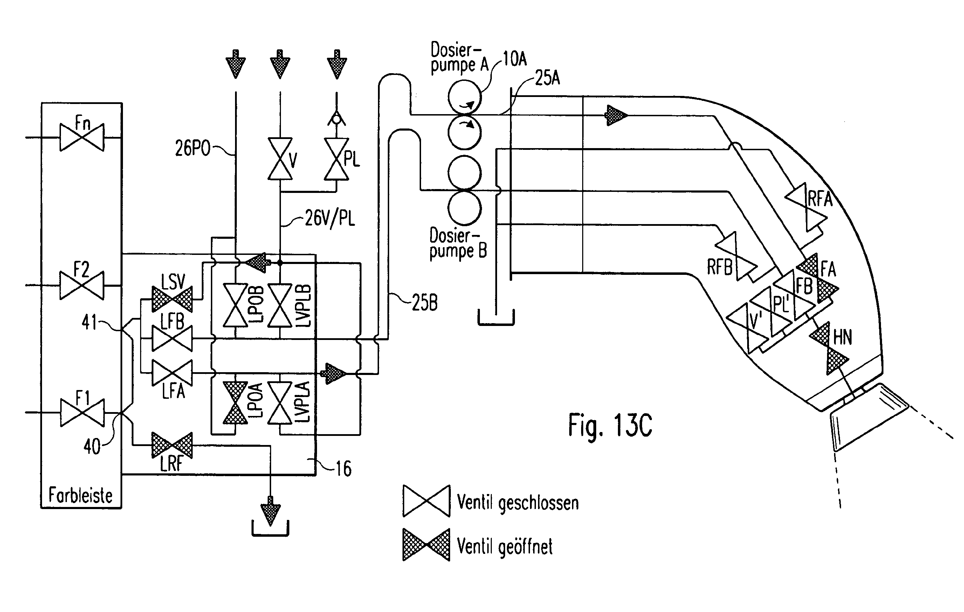

Bei dem in Fig. 13C dargestellten Betriebszustand sind (nur) die Ventile LSV, LRF, POA, V, PL sowie weiterhin die Ventile FA und HN geöffnet, während das zuvor angedockte Farbventil LFA nun gesperrt ist. Bei diesem Betriebszustand wird mit dem Schiebemittel (Verdünner) aus der Leitung 26PO über das offene Ventil POA der noch in der Leitung 25A befindliche Restlack zu der Dosierpumpe 10A gedrückt und von dieser in den Glockenteller gefördert, um nach dem an sich bekannten Pushout-Prinip zum Fertiglackieren genutzt zu werden. Dieser Betriebszustand dauert so lange, bis die (mengen- und zeitmäßig genau vorherbestimmte) Restlackmenge verbraucht ist. Parallel hierzu und gleichzeitig wird die Schnittstelle des Andockschlittens 16 mit den beiden Andockeingängen 40 und 41 mit dem aus der Leitung 26V/PL kommenden Spülmittel, also mit Verdünner und Pulsluft gespült. Das Spülmittel kann durch das geöffnete Rückführungsventil LRF abfließen.

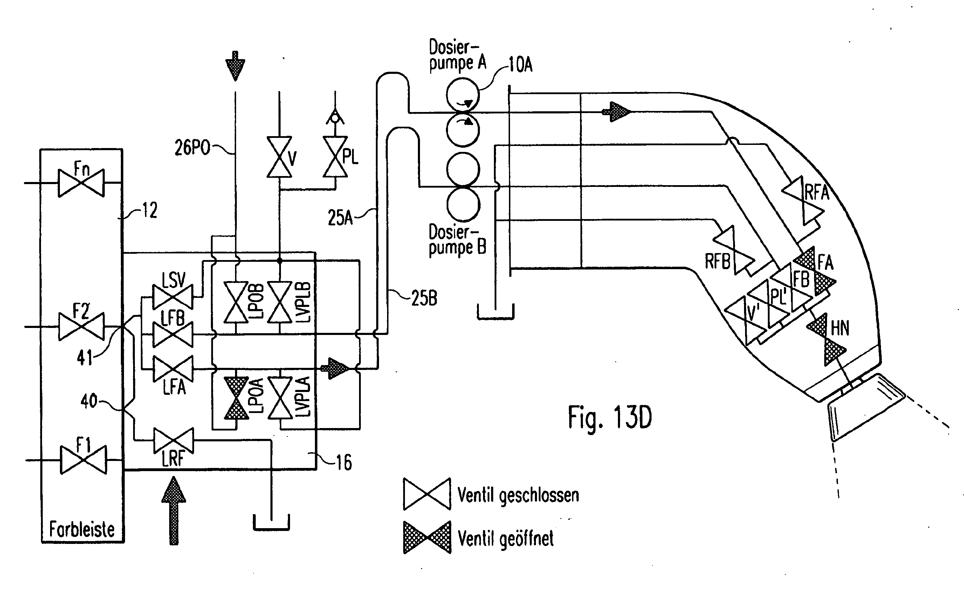

Bei dem in Fig. 13D gezeigten Betriebszustand ist der Spülvorgang beendet (Ventile LSV und LRF geschlossen), während der Pushout-Betrieb durch den A-Zweig noch fortgesetzt wird und zugleich der Andockschlitten 16 mit seinem zweiten Andockeingang 41 an das Farbventil F2 der Farbleiste 12 geschoben wird.

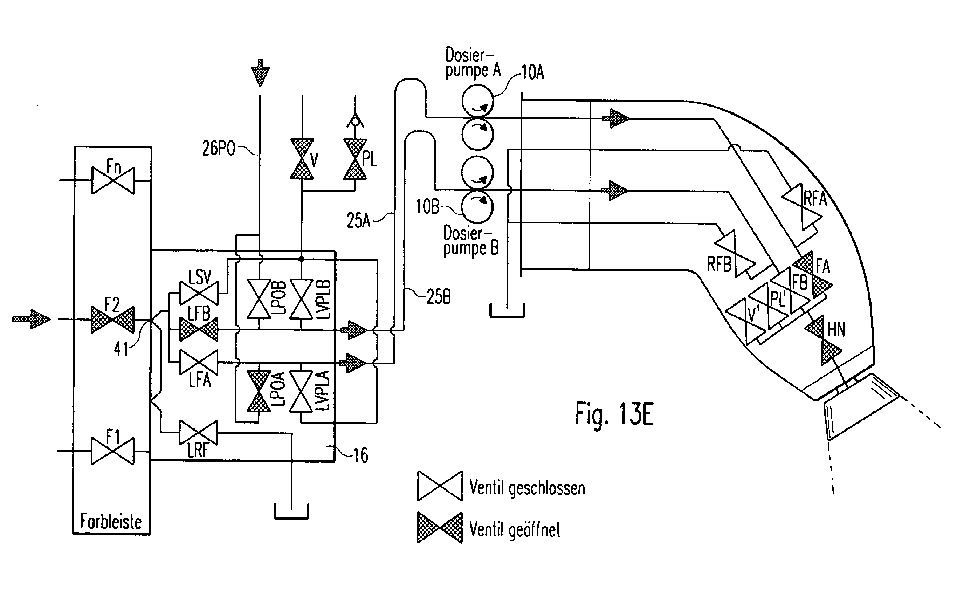

Auch bei dem in Fig. 13E gezeigten Betriebszustand wird der Pushout-Betrieb mit der Farbe des Farbventils F1 durch den A-Zweig noch fortgesetzt. Parallel hierzu und gleichzeitig kann aber über den an das Farbventil F2 für die nächste Farbe angedockten Eingang 41 die nächste Farbe nun schon durch das geöffnete Ventil LFB durch den B-Zweig, also die Leitung 25B und die Dosierpumpe 10B bis vor das noch geschlossene Farbventil FB des Zerstäubers angedrückt werden, wobei die Leitung über das Ventil RFB entlüftet werden kann.

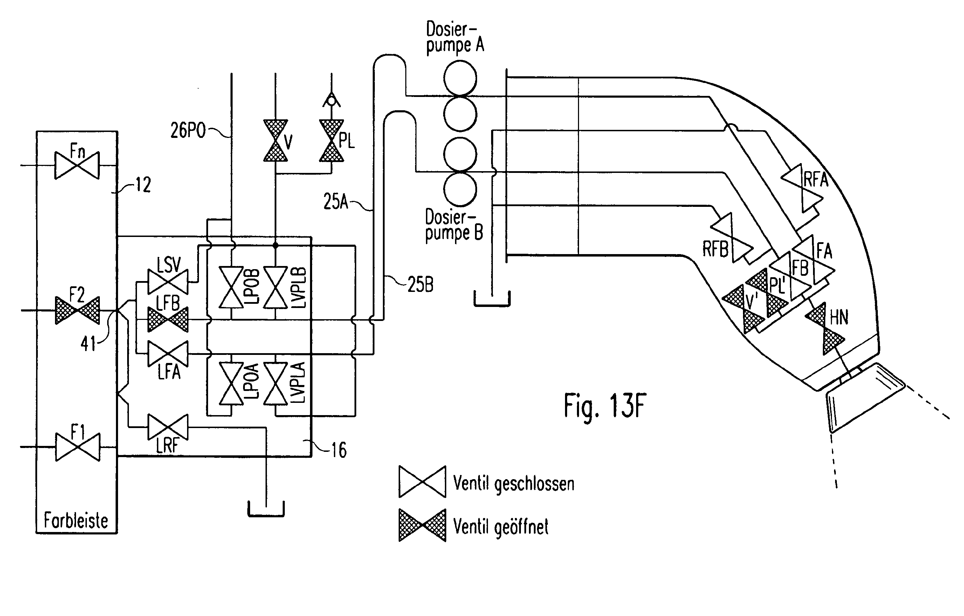

Bei dem in Fig. 13F gezeigten Betriebszustand ist der Pushout-Betrieb beendet (Ventil POA geschlossen), so dass der Zerstäuber mit seinem Glockenteller über seine geöffneten Ventile V' und PL' und das Hauptnadelventil HN gespült werden kann.

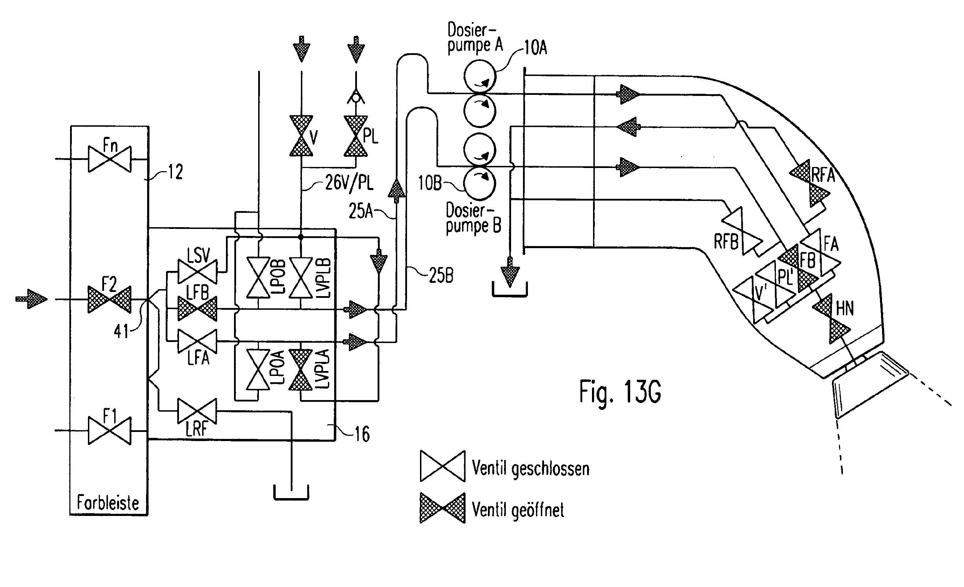

Bei dem in Fig. 13G gezeigten Betriebszustand wird durch den B-Zweig und das nun offene Farbventil FB des Zerstäubers mit der neuen Farbe lackiert, während parallel hierzu und gleichzeitig über das geöffnete Ventil LVPLA die Leitung 25A einschließlich der Dosierpumpe 10A bis zu dem geschlossenen Farbventil FA des Zerstäubers mit dem aus der Leitung 26V/PL kommenden Spülmittel gespült wird, das durch das offene Rückführungsventil RFA abfließt. Infolgedessen ist nun der A-Zweig sofort wieder für die nächstfolgende Farbe verfügbar.

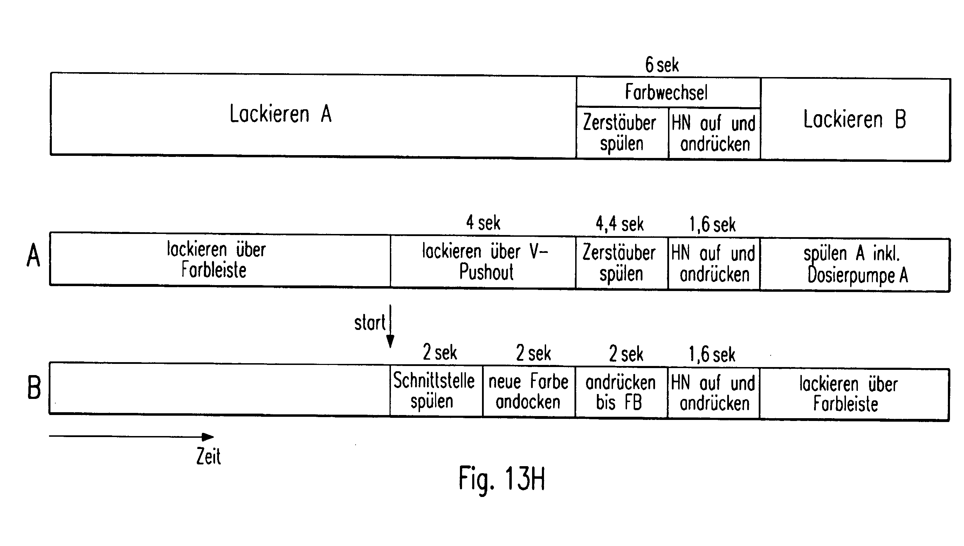

In Fig. 13H ist ein typisches Beispiel des zeitlichen Ablaufs des beschriebenen Pushout-A/B-Betriebs dargestellt. Bei "start" beginnen der anhand von Fig. 13C usw. beschriebene Pushout-Betrieb im A-Zweig und das gleichzeitige Spülen der Schnittstelle des Andockschlittens. Wie hieraus ersichtlich ist, beträgt die Farbwechselzeit bei dem betrachteten Beispiel nur etwa 6 sek.

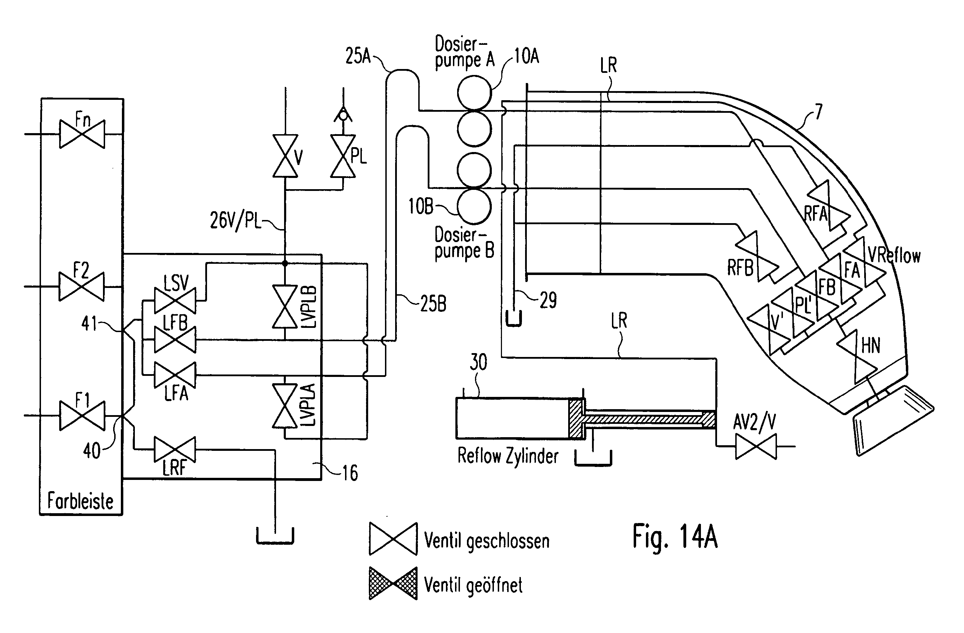

Die wesentlichen Einzelheiten des A/B-Reflow-Systems sind den Zeichnungen ab Fig. 14A zu entnehmen. Hinsichtlich der Anordnung der Ventile LRF, LFA, LFB, LSV, V und PL sowie LVPLA und LVPLB in dem Andockschlitten 16, der Dosierpumpen 10A und 10B und der im Zerstäuber 7 befindlichen Ventile FA, FB, PL', V' sowie RFA und RFB kann das Reflow-System mit dem A/B-Pushout-System übereinstimmen. Entsprechendes gilt für sonstige Einzelheiten.

Dagegen fehlen naturgemäß die Ventile POA und POB des Pushout-Systems, während andererseits in dem Zerstäuber parallel zu den Ventilen FA bis V' dem Hauptnadelventil HN das zusätzliche Reflow-Ventil V_{Reflow} vorgeschaltet ist und beispielsweise außerhalb des Zerstäubers im Roboterarm der schon bei den Ausführungsbeispielen gemäß Fig. 11A usw. beschriebene Reflow-Zylinder oder Spülmitteldosierer 30 mit den Spülmittelventilen AV2/V angeordnet sein kann. Der Spülmitteldosierer 30 ist über die Reflowleitung LR mit dem Reflow-Ventil R_{Reflow} verbunden.

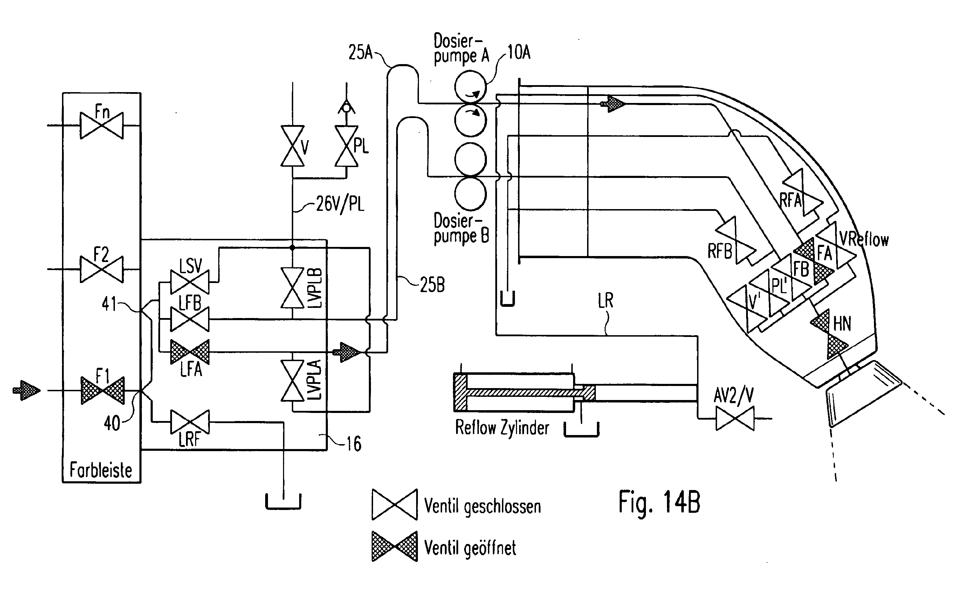

Bei dem in Fig. 14B gezeigten Betriebszustand, bei dem (nur) die Ventile F1, LFA, FA und HN geöffnet sind, wird wie in Fig. 13B mit der aus dem Farbventil F1 in den A-Zweig fließenden Farbe lackiert.

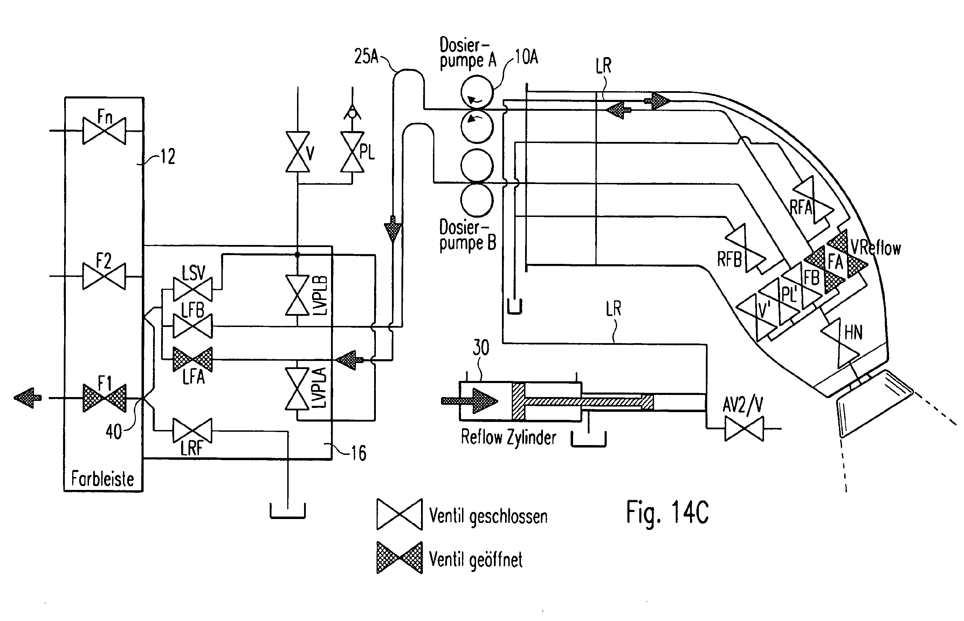

Gemäß dem in Fig. 14C gezeigten Betriebszustand wird der Lackierbetrieb durch Schließen des Hauptnadelventils HN beendet und bei noch offenem Ventil FA das Reflow-Ventil V_{Reflow} geöffnet. Der Spülmitteldosierer 30 drückt mit dem als Reflow-Schiebemittel dienenden Spülmittel (Verdünner) durch das Ventil V_{Reflow} den noch in der Leitung 25A befindlichen Lack durch das Ventil FA zurück zu der Dosierpumpe 25A, die den Lack mit umgekehrter Drehrichtung durch die geöffneten Ventile LFA und F1 zurück in das Farbversorgungssystem fördert (Reflow).

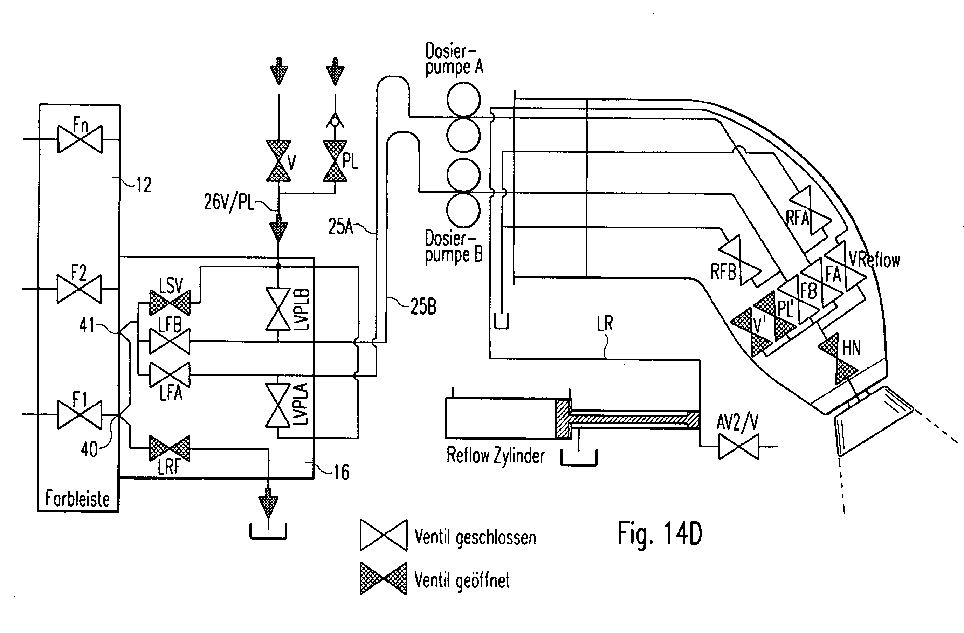

Sobald Reflow durch das Farbventil F1 der Farbleiste 12 beendet und dieses Ventil wieder geschlossen ist, können gemäß Fig. 14D über die geöffneten Ventile LSV und LRF die Schnittstellen des Andockschlittens 16 mit den Andockeingängen 40 und 41 gespült werden, während zugleich über die Ventile V' und PL' des Zerstäubers und über das Hauptnadelventil HN der Glockenteller gespült werden kann.

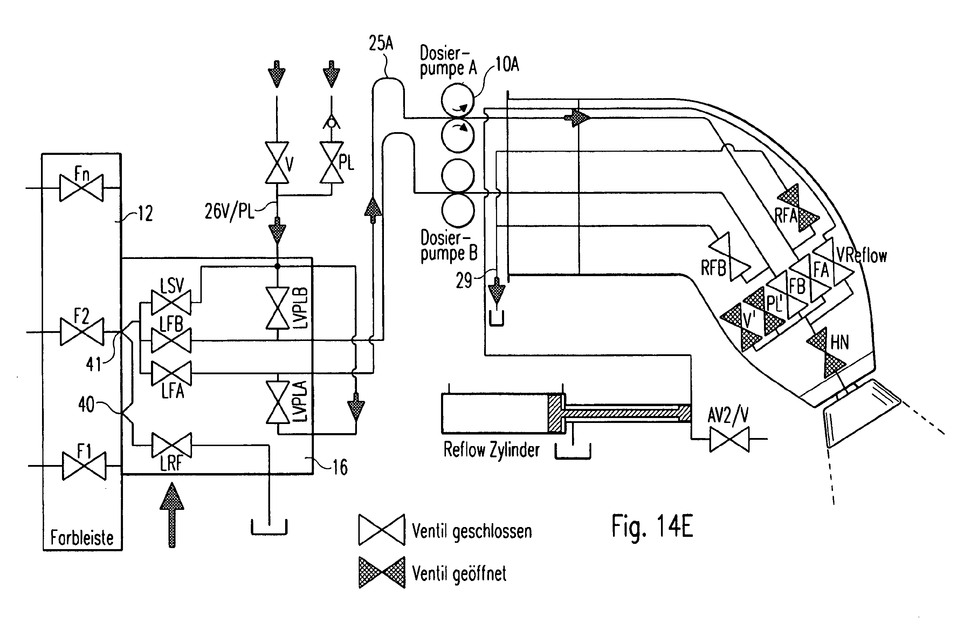

Nun wird gemäß Fig. 14E durch Verschieben des Andockschlittens 16 dessen zweiter Andockeingang 41 an das Farbventil F2 für die nächste Farbe angeschlossen. Parallel hierzu und gleichzeitig kann unter Fortsetzung der Spülung des Glockentellers die Farbleitung 25A des Zerstäubers gespült werden, und zwar mit dem durch das nun offene Ventil LVPLA kommenden und von der Dosierpumpe 10A geförderten Verdünner, der dann durch das offene Rückführungsventil RFA und die Leitung 29 abfließt.

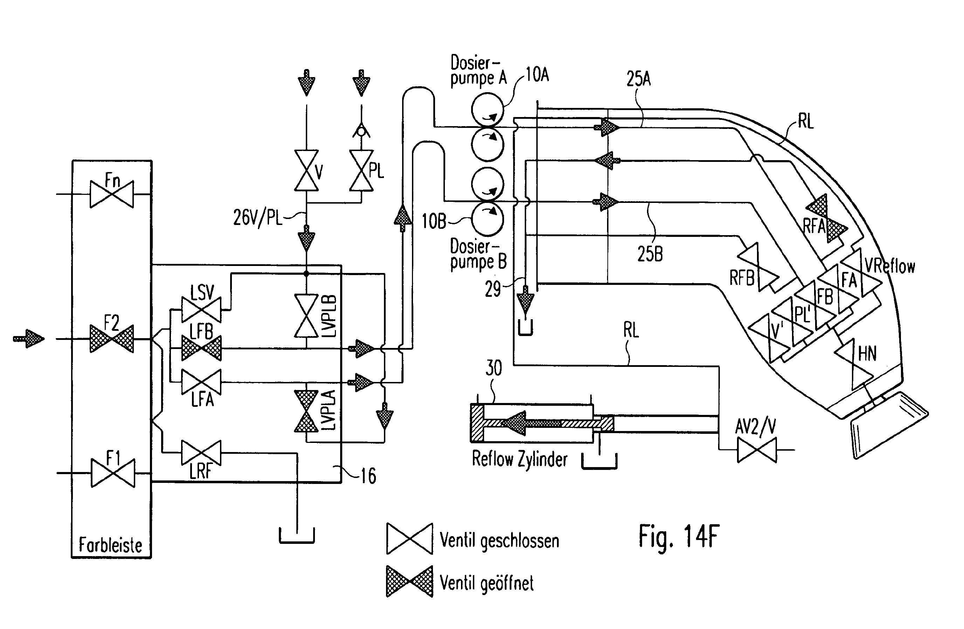

Noch während des Spülens der Leitung 25A wird nun gemäß Fig. 14F die neue Farbe aus dem Farbventil F2 durch das Ventil LFB in die Leitung 25B und bis vor das Farbventil FB des Zerstäubers angedrückt, wobei ähnlich wie in Fig. 13E eine Entlüftung durch das Ventil RFB möglich ist. Gleichzeitig kann der Reflow-Zylinder des Spülmitteldosierers 30 durch das Ventil AV2/V nachgefüllt werden.

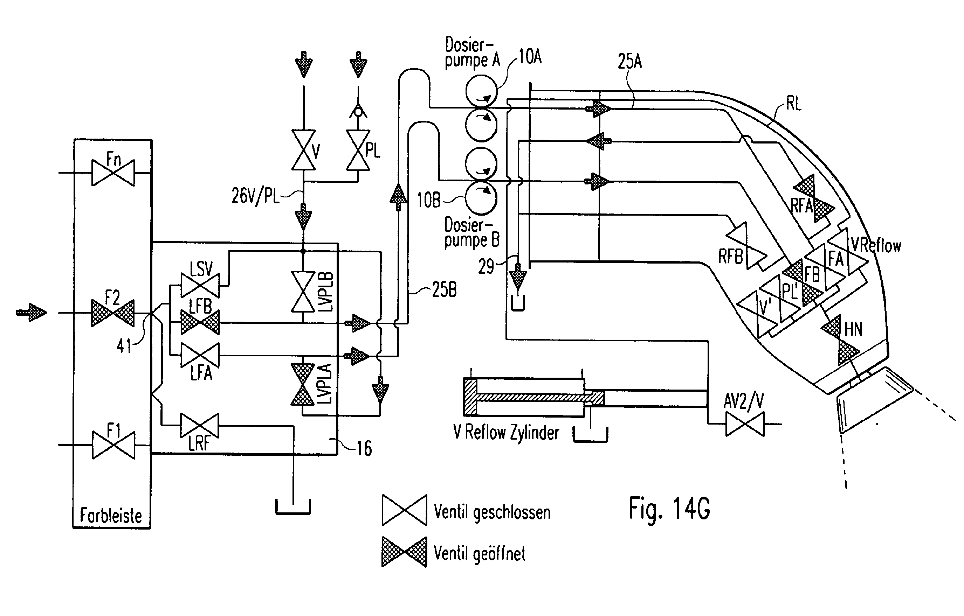

Bei dem in Fig. 14G gezeigten Betriebszustand wird mit der aus dem Farbventil F2 durch den B-Zweig, also die Leitung 25B in den Glockenteller geförderten neuen Farbe lackiert. Parallel hierzu und gleichzeitig kann das Spülen des A-Zweigs wie in Fig. 14F fortgesetzt und dann beendet werden.

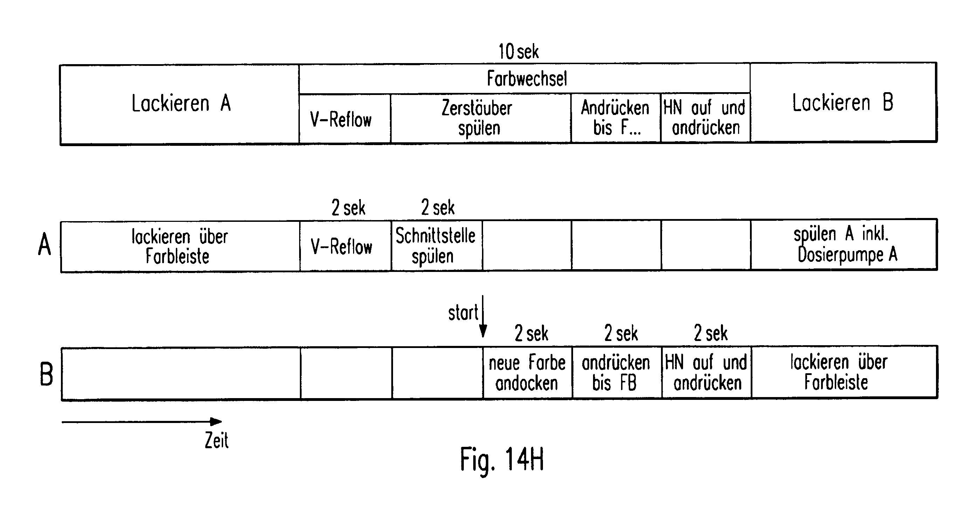

In Fig. 14H ist ein typisches Beispiel des zeitlichen Ablaufs des beschriebenen Reflow-A/B-Betriebs dargestellt. Bei "start" beginnt die anhand von Fig. 14E beschriebene Andockbewegung des Andockschlittens 16 bis zum Anschluss des Eingangs 41 an das Farbventil F2. Wie hieraus ersichtlich ist, beträgt die Farbwechselzeit bei diesem Beispiel etwa 10 sek.

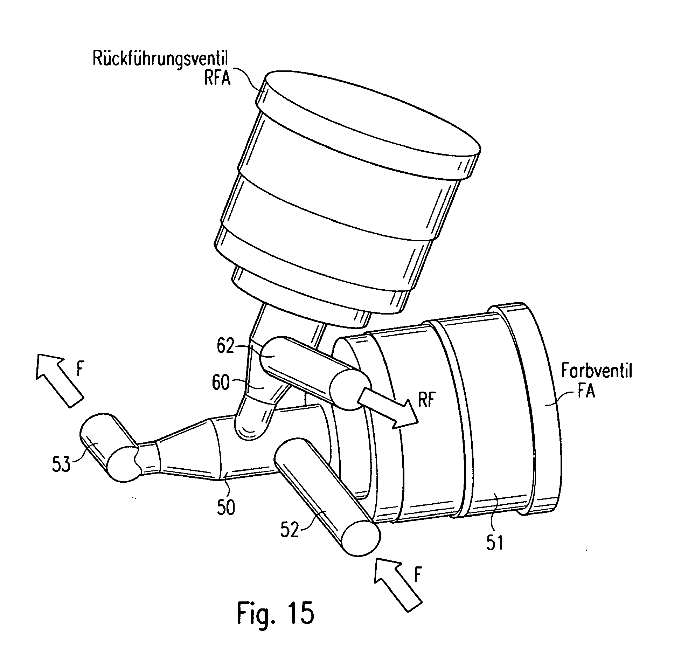

Wenn der Zerstäuber 7 z. B. bei geschlossenem Farbventil FA durch das geöffnete Rückführungsventil RFA gespült werden soll (Fig. 13G und Fig. 14E), soll möglichst auch das geschlossene Farbventil bis zu dessen Ventilsitz gespült werden. Hierfür eignet sich die in Fig. 15 schematisch dargestellte bevorzugte Baueinheit aus dem Farbventil FA und dem Rückführungsventil RFA. Beide Ventile sind bei diesem Beispiel als automatisch gesteuerte Nadelventile einer an sich aus Lackieranlagen allgemein bekannten Bauart ausgebildet (die sich auch für die anderen in den verschiedenen Zeichnungen dargestellten Ventilfunktionen eignen kann, in der Regel mit Ausnahme von HN). Derartige Ventile können bekanntlich einen rohrartigen Gehäuseteil 50 mit einem zylindrisch/konischen Innenraum haben, durch den sich die von einem z.B. pneumatischen und pneumatisch gesteuerten Antrieb im angrenzenden Gehäuseteil 51 verschiebbare (nicht dargestellte) Ventilnadel bis zu dem im äußeren Ende des Gehäuseteils 50 ausgebildeten Ventilsitz erstreckt. An einer hierzu axial entgegengesetzten Stelle ist an den Innenraum des Gehäuseteils 50 die Leitung 52 angeschlossen, durch die die zu steuernde Farbe F in das bei dem dargestellten Beispiel betrachtete Farbventil FA geleitet wird. Bei geöffnetem Ventil FA fließt die Farbe jenseits des Ventilsitzes in die Ausgangsleitung 53.

Das Rückführungsventil RFA kann konstruktiv dem Farbventil FA entsprechen, also seinen Ventilsitz im Ende seines rohrförmigen Gehäuseteils 60 und entgegengesetzt hierzu die Anschlussleitung 62 haben. Darstellungs- und erfindungsgemäß mündet aber das bei diesem Beispiel konische Ende des Gehäuseteils 60 jenseits von dessen Ventilsitz in dem entsprechendem Gehäuseteil 50 des Farbventils FA, so dass bei geöffnetem Rückführungsventil RFA die beiden Anschlussleitungen 52 und 62 durch die körperlich aneinander angrenzenden Innenräume der beiden Ventile miteinander verbunden sind. Wenn also das Farbventil FA geschlossen und das Rückführungsventil RFA geöffnet wird, kann zum Spülen der dargestellten Ventileinheit zunächst restliche Farbe und dann das Spülmittel durch die Anschlussleitung 52 in den Innenraum des Ventils FA fließen und von dort durch das Rückführungsventil RFA und dessen Leitung 62 abfließen, wie durch den Pfeil RF dargestellt ist.

Eine ähnliche Ventilanordnung ist zweckmäßig für die Ventile RFB und FB des B-Zweigs der oben beschriebenen A/B-Systeme vorgesehen. Statt der in Fig. 15 schematisch dargestellten speziellen Ventileinheit sind auch Konstruktionen oder Anordnungen denkbar, bei denen sich der Ventilsitz des Rückführungsventils nicht in oder an dem Innenraum des Farbventils befindet, sondern außerhalb und mit dem Farbventil über eine geeignete Leitung verbunden ist. Ferner können sowohl für die bisher als auch für die nachfolgend beschriebenen Ausführungsbeispiele andere bekannte Ventilbauarten gewählt werden, soweit sie für den beschriebenen Zweck geeignet sind.

Wie oben (zu Fig. 5) schon erwähnt wurde, können die Farbventile 14 in mindestens zwei übereinander liegenden und in Längsrichtung der Farbleiste 12 parallelen Reihen senkrecht in die zu den Andockstellen entgegengesetzte Seitenfläche der Farbleiste eingesetzt werden, so dass die Gesamtbaulänge der Farbleiste 12 entsprechend reduziert wird. Ein zweckmäßiges Ausführungsbeispiel dieser Anordnung ist teilweise vereinfacht in Fig. 16 dargestellt, wo an der Oberseite der Farbleiste 12 die ebenfalls (zu Fig. 7 und 8) schon erwähnten, als Farbanschluss für je ein Farbventil dienenden Stecknippel 22 erkennbar sind. Die Stecknippel 22 sind darstellungsgemäß in die auch in Fig. 4 erkennbaren dachartig schrängen Stirnflächen 65 an der Oberseite der Farbleiste 12 eingesetzt, so dass ihre zu den schrägen Stirnflächen 65 senkrechten Achsen ebenfalls schräg gegen die Längsrichtung der Farbleiste 12 geneigt sind und in die jeweils benachbarten, entgegengesetzt schrägen Stirnflächen beispielsweise die Spannschrauben 24 (Fig. 7 und 8) eingesetzt werden können. Vorzugsweise sind auch die Stecknippel 22 jeweils nebeneinander in zwei zu der Längsrichtung parallelen Reihen angeordnet, von denen in Fig. 16 nur die in der Zeichnung vordere Reihe von Stecknippeln sichtbar ist. In dem Bereich der Seitenfläche 66 der Farbleiste 12, der an die zu den Farbanschlüssen entgegengesetzte Unterseite der Farbleiste angrenzt, erstreckt sich parallel zu der Längsrichtung der Farbleiste darstellungsgemäß die erste Reihe von Farbventilen 14. In den in Richtung zu den Farbanschlüssen angrenzenden Bereich der Seitenfläche 66 ist die zweite Reihe von Farbventilen 14' eingesetzt, wobei die Ventile 14 und 14' darstellungsgemäß in der Längsrichtung gegeneinander versetzt sind. Dadurch können die zum Einsetzen der Farbventile erforderlichen Bohrungen der beiden Reihen in der zu der Längsrichtung vertikalen Richtung einen geringeren vertikalen Abstand voneinander haben, so dass sich ein besonders kompakter Aufbau und geringe Höhe der Farbleiste 12 ergeben, wie es erfindungsgemäß für einen aus den eingangs erläuterten Gründen möglichst flachen Roboterarm erwünscht und vorteilhaft ist.

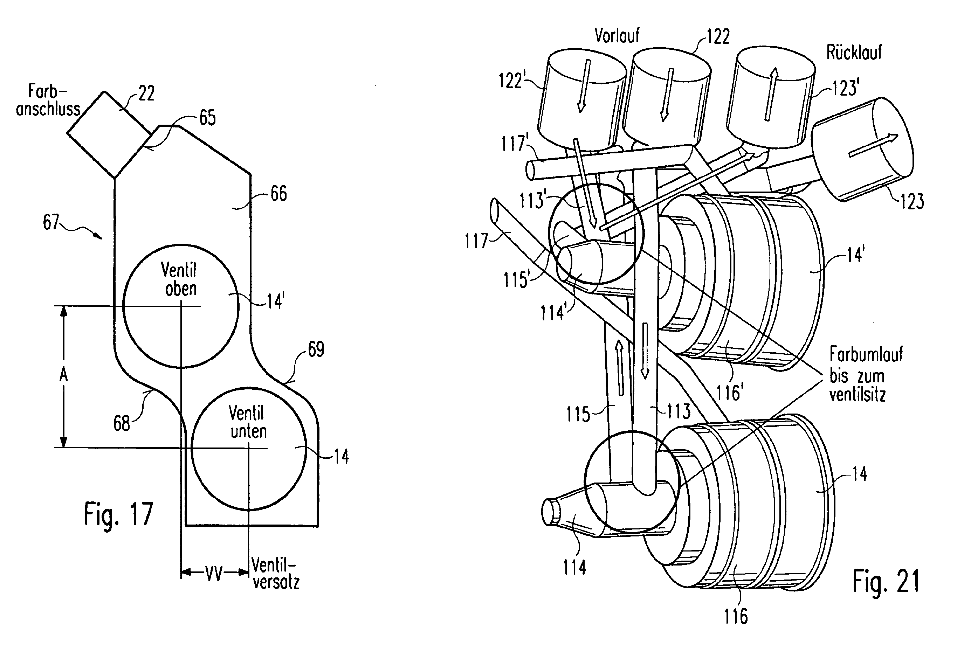

Da die Anzahl der anschließbaren Farben und somit der erforderlichen Farbventile 14 und 14' von Fall zu Fall unterschiedlich sein kann, aber jeweils möglichst einheitliche Bauteile des Farbwechslers verwendet werden sollen, hat die Farbleiste 12 vorzugsweise einen modularen Aufbau, der hinsichtlich der anschließbaren Farben beliebig und auf einfache Weise erweitert oder verkleinert werden kann. Bei dem in Fig. 16 dargestellten Beispiel besteht die Farbleiste 12 aus einer gewünschten Anzahl (hier 9) fest, aber lösbar zusammengesetzter Module der zur Verdeutlichung schematisch in Fig. 17 dargestellten Form. Wie hieraus ersichtlich ist, enthält jedes Modul 67 zwei Farbventile 14 und 14', deren Mittelachsen einen vertikalen, d.h. senkrecht zu der Längsrichtung der Farbleiste 12 (und folglich zu der Verschiebungsrichtung des Andockschlittens 16) gemessenen Abstand A und einen parallel zu der Längsrichtung gemessenen Ventilversatz VV haben, wobei A kleiner ist als der tatsächliche gegenseitige Abstand der Ventilachsen und bei dem dargestellten Beispiel nur wenig größer ist als der Durchmesser der Ventilbohrung in der Ebene der Stirnfläche 66, während VV annähernd gleich oder darstellungsgemäß etwas größer sein kann als der halbe Durchmesser der Ventilbohrung. Auf der erwähnten schrägen Stirnfläche 65 ist einer der beiden Farbanschluss-Stecknippel 22 des Moduls 67 sichtbar.

Damit die horizontale, d.h. in ihrer Längsrichtung gemessene Länge der Farbleiste 12 nicht durch die horizontal versetzte Anordnung der Farbventile vergrößert wird, hat jedes Modul 67 den dargestellten kurvenförmigen Verlauf seiner sich allgemein senkrecht zu der Seitenfläche 66 erstreckenden Querflächen 68 und 69. Demgemäß verläuft die Querfläche 68 auf der einen Seite des Moduls von der schrägen Stirnfläche 65 aus zunächst vertikal entlang dem oberen Farbventil 14', um sich dann etwa dessen Kreisform folgend nach innen bis in die Nähe des unteren Farbventils 14 zu krümmen, an dem entlang sie dann wieder vertikal bis zu der Unterseite der Farbleiste 12 verläuft. Die Querfläche 69 hat einen hierzu parallelen Kurvenverlauf, so dass die Querflächen 68 und 69 benachbarte Module 67 genau auf und ineinander passen, wie in Fig. 16 erkennbar ist. Die beschriebene Gestalt der Module 67 hat den Vorteil, dass sie trotz des horizontalen Ventilversatzes VV in der Längsrichtung der Farbleiste 12 nicht mehr Platz beanspruchen als ein Modul, dass nur ein einziges Farbventil 14 enthält. Innerhalb der Gesamtlänge der Farbleiste 12 sind die einzelnen Module nur um die notwendige Wanddicke des Modulkörpers breiter als der Durchmesser einer Ventilbohrung an der Außenseite der Farbleiste.

Fig. 18 zeigt die Rückseite der modularen Farbleiste 12 aus Fig. 16, also deren Andockseite mit den Öffnungen der in zwei Reihen angeordneten Andockstellen 15 bzw. 15'. Diese Öffnungen sind achsgleich mit den Nadel- oder Mittelachsen der zugehörigen Farbventile 14 und 14' und somit ebenfalls um die Größen A und VV (Fig. 17) gegeneinander versetzt. Ferner ist ersichtlich, dass in jeder Reihe von Farbventilen und Andockstellen 15 und 15' der gegenseitige Abstand der Achsen benachbarter Ventile bzw. Andockstellen jeweils gleich dem doppelten Ventilversatz VV ist. Anders gesagt befindet sich jeweils ein Farbventil der einen Reihe in Längsrichtung der Farbleiste 12 in der Mitte zwischen zwei Farbventilen der anderen Reihe. Ferner ist die zu den Reihen der Andockstellen 15 und 15' parallele Reihe von Andockstellen 71 für die Steuerluft der Farbventile dargestellt, die sich bei diesem Beispiel zwischen den oberen Andockstellen 15' und der Oberseite der Farbleiste befindet. Wie schon beschrieben wurde, hat jedes Farbventil 14 und 14' seine eigene Andockposition für den Andockschlitten 16, die jeweils durch eines der am unteren Rand der Farbleiste 12 dargestellten Positionier- und Zentrierbuchsen 70 für die weiter oben erwähnten (nicht dargestellten) Zentrierstifte definiert ist. Zur Vereinfachung ist in Fig. 18 die Führungskonstruktion (Nut 18 in Fig. 4 und 6) für den Andockschlitten weggelassen.

In Fig. 18 sind ferner Halterungsteile 72 und 73 an den beiden Enden der Farbleiste 12 dargestellt, die zur Halterung und Befestigung der Farbleiste in dem Roboterarm 5 (Fig. 1 - 3) dienen und zu diesem Zweck lösbar an einem jeweiligen Endmodul 67 befestigt sind. Darstellungsgemäß haben die Halterungsteile 72 und 73 den Endmodulen zugewandte Stirnflächen 74 bzw. 75 mit der Kurvenform der einen bzw. anderen Querfläche 68 bzw. 69 der Module 67, so dass deren Querflächen genau auf und in die betreffenden Stirnflächen 74 bzw. 75 der Halterungsteile passen.

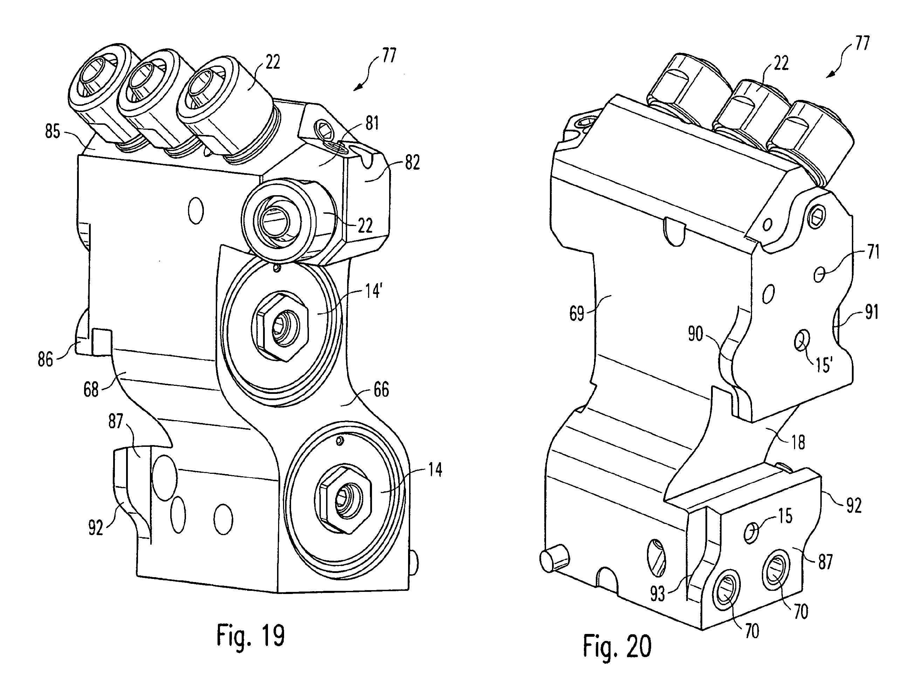

Bei dem in Fig. 16 - 18 dargestellten Beispiel können die Farbleitungen 13 (Fig. 1) über je einen Anschluss-Stecknippel 22 jeweils als Stichleitung zu dem zugehörigen Farbventil 14 oder 14' führen. In anderen Fällen soll dagegen ständiger Farbumlauf von der Farbquelle (üblicherweise über Ringleitungen) zu dem betreffenden Ventil, vorzugsweise bis direkt an dessen Ventilsitz, und von dort über eine zusätzliche Leitung zurück zu der Farbquelle erfolgen, um eine in Stichleitungen unter Umständen mögliche Entmischung der einzelnen Farbbestandteile zu vermeiden. Jedes Modul der Farbleiste 12 benötigt hierfür die doppelte Anzahl von Farbanschlüssen, also bei dem Beispiel gemäß Fig. 16 - 18 für zwei Farben vier statt zwei Stecknippel 22. Ein Ausführungsbeispiel eines besonders kompakten und platzsparenden Moduls 77 der Farbleiste 12 für zwei Farben und Farbumlauf ist in Fig. 19 dargestellt. Die Anordnung der beiden Farbventile 14 und 14' und die Kurvenform der Querfläche 68 können dem oben beschriebenen Modul 67 entsprechen. Dagegen sind nun auf der in der Zeichnung oberen schrägen Stirnfläche 85, die an sich der Stirnfläche 65 des Moduls 67 entspricht, darstellungsgemäß nebeneinander drei Stecknippel 22 als drei der vier erforderlichen Anschlüsse für jeweilige Farbleitungen angeordnet, während der erforderliche vierte Stecknippel aus Platzgründen in der Nähe an einer anderen Stelle platziert ist, wo er weder den beschriebenen passgenauen Zusammenbau der Module beeinträchtigt noch die Höhe und Länge der Farbleiste 12 vergrößert. Eine hierfür geeignete Stelle ist eine beispielsweise schräg gemäß der Darstellung in Fig. 19 an die Querfläche 68 angrenzende Fläche 81 eines Ansatzes 82, der oberhalb des in der Zeichnung oberen Farbventils 14' von der Seitenfläche 66 quer zu der Längsrichtung der Farbleiste 12 vorspringt. Der in die Fläche 81 eingesetzte vierte Stecknippel 22 ragt also bei diesem Ausführungsbeispiel von einer Ecke des Modulkörpers seitlich schräg nach außen.

Fig. 20 zeigt die Rückseite oder Andockseite des Moduls gemäß Fig. 19 und die etwa Fig. 6B entsprechende Führungskonstruktion mit der Nut 18 für den Andockschlitten 16 (Fig. 5). Zu dieser Führungskonstruktion gehören die die Nut an ihren beiden (oberen und unteren) Seiten begrenzenden Oberflächenelemente 86 und 87, welche die beschriebenen Öffnungen der Farb-Andockstellen 15 und der Steuerluft-Andockstellen 71 enthalten und dem Modulkörper einstückig angeformt sein können. Das eine (obere) Oberflächenelement 86 hat an seinem an die Querfläche 69 des Moduls angrenzenden Rand darstellungsgemäß eine konkav parallel zu der Seitenfläche des Moduls vorspringende flache runde Nase 90, die genau in eine ebenso flache runde Ausnehmung 91 des Oberflächenelements 86 an dessen entgegengesetztem Rand und somit auch in die entsprechende Ausnehmung 91 eines an die Querfläche 69 angebauten Nachbarmoduls passt. Ähnlich kann das andere (untere) Oberflächenelement 87 an seinen beiden Rändern eine abgerundete vorspringende Nase 92 und eine hierzu passende Ausnehmung 93 haben, wobei sich die Nasen 90 und 92 an entgegengesetzten Rändern der Seitenfläche des Moduls 77 befinden können. Diese Führungskonstruktion, die auch auf der Rückseite der Darstellung in Fig. 19 erkennbar ist, kann die Genauigkeit verbessern, mit der benachbarte Module zusammenpassen.

Eine zweckmäßige und platzsparende Ventilanordnung eines Moduls für zwei Farben, die den gewünschten Farbumlauf bis zum jeweiligen Ventilsitz und gemäß dem beschriebenen Ausführungsbeispiel somit bis zu der Andockstelle ermöglicht, ist teilweise schematisch und vereinfacht in Fig. 21 dargestellt. Bei den beiden Farbventilen 14 und 14' kann es sich um die in dem Modul gemäß Fig. 19 verwendeten Nadelventile der schon zu Fig. 15 beschriebenen konventionellen Bauart handeln. In den den Ventilsitz enthaltenden rohrförmigen Gehäuseteil 114 des ersten Farbventils 14 führt von einem Anschlussnippel 122, an den eine externe Zuführleitung (eine der Leitungen 13 in Fig. 1) für eine erste Farbe angeschlossen wird, eine erste Vorlauf-Rohrleitung 113. Aus dem Gehäuseteil 114 führt sodann eine Rücklauf-Rohrleitung 115 zu einem zweiten Anschlussnippel 123, an den eine externe Rücklaufleitung (die sich ebenfalls bei den Leitungen 13 in Fig. 1 befinden kann) für die erste Farbe angeschlossen wird. Über entsprechende Vorlaufund Rücklauf-Rohrleitungen 113' bzw. 115' ist auch der rohrförmige Gehäuseteil 114' des zweiten Farbventils 114' des betrachteten Moduls mit entsprechenden Anschlussnippeln 122' bzw. 123' für die zweite Farbe verbunden. Bei den Anschlussnippeln 122, 122', 123 und 123' kann es sich um die vier in Fig. 19 dargestellten Stecknippel 22 handeln. Für die Antriebssteuerung der Farbventile 14 und 14' ist an deren erweiterten Gehäuseteil 116 bzw. 116' jeweils eine weitere Rohrleitung 117 bzw. 117' für die jeweilige Steuerluft zum Schalten des Ventils angeschlossen. Die Steuerluft kann durch die erwähnten Andockstellen 71 (Fig. 18 und 20) zugeführt werden. Die räumliche Anordnung der Farbventile und der verschiedenen Anschlüsse für Farbe und Steuerluft kann dem in Fig. 19 und 20 dargestellten Modul entsprechen. Die beschriebenen Rohrleitungen können zweckmäßig durch einfache und im Wesentlichen gerade, soweit erforderlich gegeneinander abgewinkelte Bohrungen innerhalb des Modulkörpers und/oder in diese Bohrungen eingesetzte Rohrelemente realisiert werden. Der Modulkörper kann einstückig beispielsweise aus Metall oder einem anderen geeigneten Werkstoff hergestellt sein. Statt der darstellungsgemäß geraden Bohrungen können auch gekrümmte Leitungswege vorgesehen sein, wenn das zweckmäßiger ist, wobei der Modulkörper beispielsweise gemäß dem in DE 10 2008 047 118.6 beschriebenen generativen oder sogenannten Rapid-Prototyping-Verfahren oder einem ähnlichen bekannten generativen Verfahren hergestellt werden kann, das sich auch für Metallkörper eignet.

Statt des Beispiels eines Moduls 67 für zwei Farben können für die Farbleiste des beschriebenen Andock-Farbwechslers sowohl Module für nur eine Farbe als auch Module für drei oder mehr Farben mit entsprechend vielen Farbventilen mit oder ohne Farbumlauf vorgesehen sein. Beispielsweise hätte ein Modul für vier oder sechs Farben einfach die Form von zwei bzw. drei benachbarten Modulen 67 oder 77 (Fig. 16 - 20). Dagegen würde sich ein Modul für beispielsweise drei oder fünf Farben von den Modulen 67 und 77 durch eine andere Anordnung der Farbanschlussnippel sowie dadurch unterscheiden, dass die Kurven der beiden Querflächen des Moduls (entsprechend 68 und 69) nicht parallel, sondern spiegelbildlich zueinander verlaufen würden, die Seitenflächen der Module also im Gegensatz zu Modulen für eine geradzahlige Anzahl von Farbventilen einen breiteren und einen schmaleren Bereich hätten.

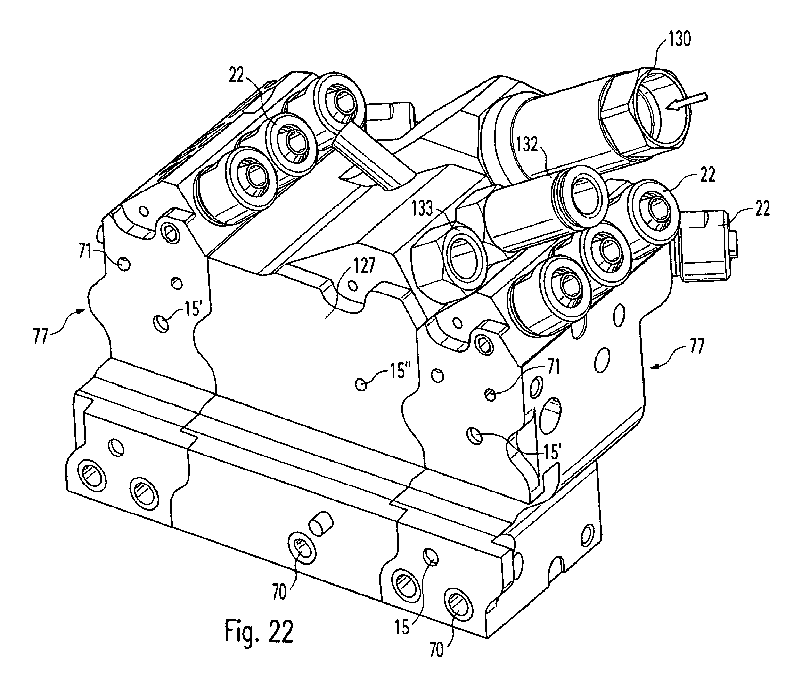

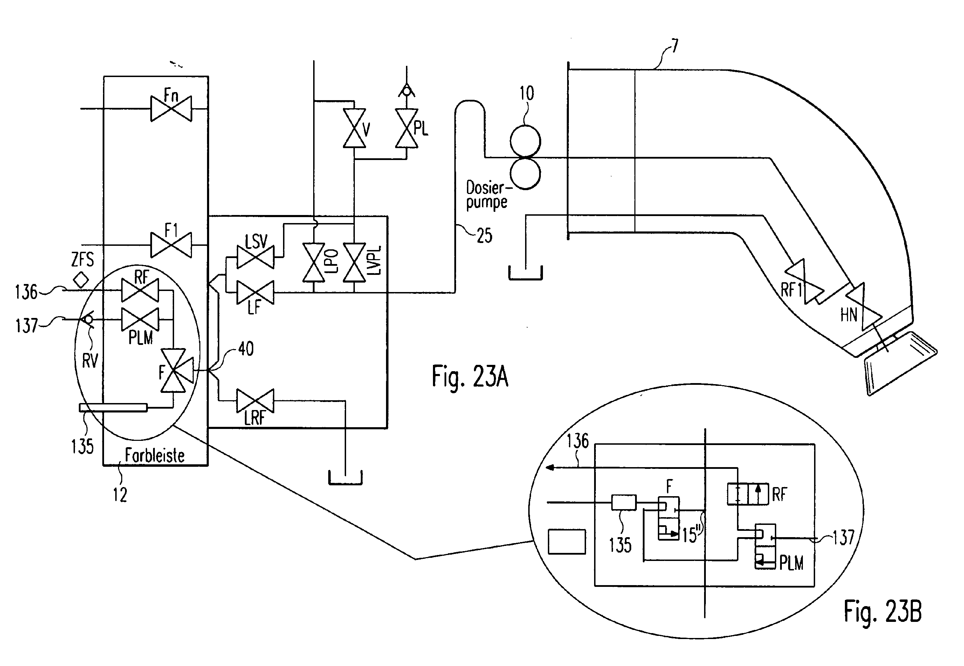

Soweit er bisher beschrieben wurde, kann der Andock-Farbwechsler insbesondere für häufig benötigte Standardfarben aus den in Lackieranlagen der hier betrachteten Art üblichen Ringleitungen verwendet werden. Er kann jedoch auf einfache Weise auch für den Anschluss seltener benötigter Sonderfarben erweitert werden, beispielsweise durch das Einfügen mindestens eines speziellen Moduls für Sonderfarben gemäß Fig. 22. Dieses mit 127 bezeichnete Modul für Sonderfarben sitzt hier beispielsweise zwischen zwei Modulen 77 des in Fig. 19 und 20 dargestellten und oben beschriebenen Typs, mit denen es hinsichtlich der Kurvenform seiner Querflächen (entsprechend 68 und 69) und seiner Oberflächenelemente (entsprechend 86 und 87) mit den beschriebenen Nasen und Ausnehmungen (entsprechend 90 - 93) übereinstimmt, so dass es genau auf und in die Querflächen der Module 77 passt. Auf der in Fig. 22 sichtbaren Andockseite des Moduls 127 befindet sich in der Reihe der oberen Andockstellen 15' eine Andockstelle 15'', an die der für diese Reihe vorgesehene Eingang des Andockschlittens 16 andocken kann, wie noch beschrieben wird (Fig. 23A).

Die Sonderfarbversorgung soll vorzugsweise durch einen oder mehrere in an sich bekannter Weise gemolchte Farbschläuche erfolgen, durch die der Farblack von Molchen gefördert wird, die ihrerseits von einem Schiebemittel wie Druckluft oder Verdünnerflüssigkeit angetrieben werden können (EP 1362641 B1, EP 1362642 B1, usw.). Der in Fig. 22 nicht dargestellte Molchschlauch wird bei dem dargestellten Pfeil an einen z.B. zylindrischen Anschlusskörper 130 angeschlossen, der als an sich bekannte Molchstation konstruiert sein kann. Neben dem Anschlusskörper 130 ist ein weiterer z.B. rohrförmiger Anschlusskörper 132 für Druckluft angeordnet, der ein Rückschlagventil (RV in Fig. 23A) enthalten kann. Ferner sitzt neben dem Anschlusskörper 132 ein weiterer Anschlusskörper 133 für eine Rückführungsleitung (136 in Fig. 23A). Die drei Anschlusskörper 130, 132 und 133 können darstellungsgemäß nebeneinander ähnlich wie die Anschlussnippel 22 der Standardfarbmodule 77 in eine dachartig schräge Stirnfläche 135 des Moduls 127 eingesetzt sein, so dass ihre Mittelachsen ähnlich wie bei den drei nebeneinander angeordneten Anschlussnippeln 22 in parallel zu der Längsrichtung der Farbleiste liegenden Ebenen schräg gegen diese Längsrichtung geneigt sind. Dadurch ergibt sich auch für das Modul 127 eine niedrige Anschlusshöhe, wie sie für einen flachen Farbwechsler erwünscht ist, der zum Einbau in einen Roboterarm für die Innenlackierung verwendbar sein soll.

Bei dem dargestellten Beispiel ist das Modul 127 in Längsrichtung der Farbleiste doppelt so breit wie die Module 77 für Standardfarben. Es können auch mehrere Module 127 für Sonderfarben in der dargestellten Weise in die Farbleiste eingebaut werden. Ferner kann eine mehreren Sonderfarben gemeinsame Molchstrecke vorgesehen sein, was an sich bekannt ist (EP 1522348 A2).

Zur Erläuterung der Betriebsweise ist in Fig. 23A teilweise vereinfacht das Ventilschema der Sonderfarbversorgung dargestellt. Demgemäß enthält die Farbleiste 12 innerhalb des oben beschriebenen Moduls 127 ein als Wegeventil dargestelltes Farbventil F, das den an den Anschlusskörper 130 (Fig. 22) angeschlossenen Molchschlauch 135 steuerbar mit der Andockstelle 15'' des Moduls 127 und mit einem Eingang eines Rückführungsventils RF verbindet, an dessen Ausgang über den erwähnten Anschlusskörper 133 die Rückführungsleitung 136 angeschlossen ist. Ferner ist an den Eingang des Rückführungsventils RF der Ausgang eines Druckluftventils PLM angeschlossen, dessen Eingang über das Rückschlagventil RV in dem erwähnten Anschlusskörper 132 mit einer Druckluftleitung 137 verbunden ist. Mit F1 und Fn sind wie bei den weiter oben beschriebenen Ausführungsbeispielen in der Farbleiste 12 vorgesehene Farbventile für Standardfarben bezeichnet.

Fig. 23B ist eine etwas genauere Darstellung der Ventilanordnung innerhalb des Moduls 127.

Im Betrieb wird zunächst die Sonderfarbe aus dem Molchschlauch 135 durch das in Richtung zu dem Rückführungsventil RF geöffnete Farbventil F und durch das zunächst ebenfalls geöffnete Rückführungsventil RF in die Rückführungsleitung 136 angedrückt, damit die Sonderfarbe anschließend luftfrei der Andockstelle 15'' zugeführt werden kann. Wenn die Sonderfarbe die Rückführungsleitung 136 erreicht, was von einem Farbsensor ZFS gemeldet wird, kann das Ventil RF geschlossen und das Farbventil F zu der Andockstelle 15'' und dem angedockten Eingang 40 des Andockschlittens 16 hin geöffnet werden. Die Sonderfarbe kann beispielsweise in den Andockschlitten 16 fließen, bis der die Sonderfarbe durch den Molchschlauch 135 fördernde Molch den Anschlusskörper 130 erreicht. Es ist aber auch eine Betriebsweise möglich, bei der die Farbe anschließend in an sich bekannter Weise an dem Molch vorbei weitergefördert wird. Jedenfalls kann der Molch nach Beendigung des Applikationsvorgangs durch den Molchschlauch 135 zurückgeschoben werden und hierbei den darin befindlichen Farbrest zu der Farbquelle zurückdrücken, so dass sich auch für die Sonderfarbe keine Farbverluste ergeben. Der Molch kann durch die bei geschlossenem Ventil RF und gesperrter Andockstelle durch das Ventil PLM eingeleitete Druckluft zurückgeschoben werden.

Zum Spülen der Ventilanordnung des Moduls 127 (eventuell auch zum Zurückschieben des Molches) könnte Verdünner und/oder Druckluft aus dem Andockschlitten verwendet werden. Eine andere derzeit bevorzugte Möglichkeit besteht darin, ein Spülmittel wie z.B. Verdünnerflüssigkeit durch den Molchschlauch 135 in das Modul 127 zu leiten, von wo es durch die Rückführungsleitung 136 abfließen kann. Ferner kann zum Spülen der Ventilanordnung auch Pulsluft durch das Ventil PLM zugeführt werden.

Die Ventilanordnung auf der Zerstäuberseite des Farbwechslers kann einem der weiter oben für die Standardfarben beschriebenen Ausführungsbeispiel entsprechen, beispielsweise der anhand von Fig. 9A usw. beschriebenen Anordnung, wobei die Ventile LRF, LF, LSV, LVPL und LPO funktionsgleich sind mit den Ventilen RF2, FGV/F, V/PL, V1/PL bzw. V/PO in Fig. 13. Entsprechendes gilt für die Ventile V, PL, HN und RF1. Wie ersichtlich ist, entspricht die zerstäuberseitige Ventilanordnung in Fig. 23A im Wesentlichen auch der anhand von Fig. 13A usw. beschriebenen Anordnung bei Reduzierung auf nur eine Farbleitung 25 statt des A/B-Systems gemäß Fig. 13, das hier aber ebenfalls eingesetzt werden kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

Darüber hinaus umfasst die Erfindung verschiedene Aspekte, wie beispielsweise den Farbwechsler, die neuartige Anschlusskonstruktion für die Farbleitungen, den "Push-Out-Betrieb", und den "Reflow-Betrieb" ggf. mit den beschriebenen A/B-Systemen, die sich auch für andersartige Andock-Farbwechsler einschließlich solcher mit drehbaren Andockteilen eignen können, und die getrennten Spülkreisläufe. Dasselbe gilt für die anhand von Fig. 15 beschriebene erfindungsgemäße Ventilanordnung, die auch für sonstige Zwecke in einer Lackieranlage vorteilhaft sein kann. Es ist deshalb zu erwähnen, dass die einzelnen Aspekte der Erfindung auch unabhängig voneinander Schutz genießen.

Ein auch für sich schutzwürdiger Aspekt ist ferner insbesondere darin zu sehen, für die Innenlackierung von Karossen einen Lackierroboter zu verwenden, der in bekannter Weise erhöht z. B. ortsfest oder gemäß EP 1 609 532 A1 auf einer Verfahrschiene montiert ist, wie oben schon erwähnt wurde, und der so konstruiert und montiert ist, dass sich die Schwenkachse seines distalen Arms ("Achse 3") beim Lackieren in Vertikalrichtung unterhalb der bei der vertikalen Drehachse ("Achse 1") des Roboters befindlichen Schwenkachse des als "Arm 1" bezeichneten Oberarms ("Achse 2") befinden kann (an sich bekannt als "Ellbow down"). In dieser Stellung kann der distale Arm bei der Innenlackierung besser als bei der bisher üblichen Position der "Achse 3" in Vertikalrichtung oberhalb der "Achse 2" z.B. wenigstens annähernd horizontal in die Innenräume der Karosse eingeführt werden, so dass selbst bei sperrigem Ein- oder Anbau der Applikationstechnik einschließlich Farbwechsler und ggf. Dosierpumpen, Farbdruckreglern usw. an oder in dem distalen Arm die Gefahr von Kollisionen vermieden werden kann. Wie eingangs schon erwähnt wurde, hat der erfindungsgemäß bevorzugte Einbau der Applikationstechnik in den "Arm 2" den wichtigen Vorteil reduzierter Farbwechselverluste. Hierbei kann es zweckmäßig sein, wenn sich die Schwenkachsenlagerung des Oberarms ("Achse 2") nicht konventionell oberhalb, sondern vertikal unter der Roboterbasis befindet, so dass sich eine entsprechend umgekehrte Kinematik ergibt. Für die Lackierung anderer, insbesondere äußerer Flächen der Karosse können die Roboterarme auch in die umgekehrte Lage geschwenkt werden, bei der sich die "Achse 3" oberhalb der "Achse 2" befindet. Die "Achse 2" kann unterhalb der Verfahrschiene des Roboters liegen.

## Patentansprüche

1. Lackierroboter (1) zur Lackierung von Kraftfahrzeugkarosserien mit zu lackierenden Außenflächen an der Außenseite der Kraftfahrzeugkarosserien und zu lackierenden Innenflächen im Innenraum der Kraftfahrzeugkarosserien mittels eines von dem Lackierroboter (1) geführten Zerstäubers (7), wobei der Lackierroboter (1) sowohl zur Lackierung der Außenflächen als auch zur Lackierung der Innenflächen der Kraftfahrzeugkarosserien geeignet ist, **gekennzeichnet durch** einen Farbwechsler (8), der folgende Merkmale aufweist:
a) eingangsseitig mehrere Farbzuleitungen (13, 13.1, 13.2) zur Zuführung verschiedenfarbiger Lacke, wobei in den einzelnen Farbzuleitungen (13, 13.1, 13.2) jeweils ein Farbventil (F1, F2,..., Fn) oder eine andere Farbsteuereinrichtung angeordnet ist, die die Farbzuleitung (13, 13.1, 13.2) wahlweise sperrt oder freigibt,
b) ausgangsseitig eine gemeinsame Farbleitung (25) zur Weiterleitung des von dem Farbwechsler (8) ausgewählten Lacks zu dem Zerstäuber (7),
c) mehrere Andockstellen (15), die von den einzelnen Farbzuleitungen (13, 13.1, 13.2) gespeist werden, und
d) eine Farbentnahme (16), die wahlweise an eine der Andockstellen (15) andocken kann und im angedockten Zustand den Lack aus der zugehörigen Farbzuleitung (13, 13.1, 13.2) entnimmt und die gemeinsame Farbleitung (25) mit dem entnommenen Lack speist,
e) wobei die Farbentnahme (16) und die Andockstellen (15) relativ zueinander linear oder rotatorisch verschiebbar oder in anderer Weise bewegbar sind,
und wobei
f) die Farbsteuereinrichtungen (F1, F2,..., Fn) jeweils durch ein Steuersignal gesteuert werden, insbesondere pneumatisch **durch** Steuerluft, die **durch** zusätzliche Andockstellen (71) zuführbar ist, an denen die Farbentnahme (16) andocken kann, und
g) das Steuersignal von der Farbentnahme (16) über die jeweils angedockte Andockstelle zu der jeweiligen Farbsteuereinrichtung (F1, F2,..., Fn) geführt wird, so dass das Steuersignal nur dann zu einem der Farbsteuereinrichtungen (F1, F2,..., Fn) gelangen kann, wenn die Farbentnahme (16) an die zugehörige Andockstelle angedockt ist.

2. Lackierroboter (1) nach Anspruch 1, **dadurch gekennzeichnet,**
a) **dass** die zu lackierenden Kraftfahrzeugkarosserien Karosserieöffnungen aufweisen, insbesondere Fensteröffnungen und Türöffnungen, und
b) **dass** der Lackierroboter (1) einen oder mehrere Roboterarme (3, 4, 5) aufweist, um den Zerstäuber (7) räumlich zu positionieren, und
c) **dass** zumindest der distale Roboterarm (5) in einer quer zu seiner Längsachse gemessenen Richtung, insbesondere in der bei horizontaler Lage des Arms vertikalen Richtung hinreichend flach oder schmal dimensioniert ist, um den Zerstäuber (7) durch die Karosserieöffnung hindurch in den Innenraum der Kraftfahrzeugkarosserien zu positionieren,
d) **dass** der Farbwechsler (8) auf dem distalen Roboterarm (5) montiert ist,
e) **dass** der distale Roboterarm (5) bei horizontaler Armlage im Bereich seines zerstäuberseitigen Endes eine Höhe aufweist, die nicht größer ist als 300mm,
f) **dass** der distale Roboterarm (5) bei horizontaler Armlage im Bereich seines zerstäuberseitigen Endes eine Breite aufweist, die nicht größer ist als 250mm.

3. Lackierroboter nach Anspruch 1 oder 2, **dadurch gekennzeichnet, dass** ein Regelkreis zur Positionierung der Farbentnahme (16) in Bezug auf die Andockstellen (15) der Farbzuleitungen oder Farbventile vorgesehen ist, der eine die Position der Farbentnahme (16) in Bezug auf die Andockstellen messende Messeinrichtung (32) enthält und die Messwerte mit gespeicherten Positionssollwerten vergleicht, um die gemessenen Positionen in Überstimmung mit den Sollwerten zu bringen, und/oder dass mindestens an dem einen der die Farbentnahme (16) oder die Andockstellen (15) enthaltenden Bauteile (12,16) des Farbwechslers (8) mindestens ein Zentrier-Bauelement angeordnet ist, das beim Andocken in eine Aufnahmeöffnung des anderen dieser Bauteile eingreift.

4. Lackierroboter nach einem der Ansprüche 1 bis 3, **dadurch gekennzeichnet, dass** für die Relativbewegung zwischen der Farbentnahme (16) und den Andockstellen (15) des Farbwechslers ein durch gespeicherte Steuerdaten steuerbarer servo-pneumatischer Antrieb (17) oder elektrischer Servoantrieb vorgesehen ist.

5. Lackierroboter (1) nach einem der Ansprüche 1 bis 4, **gekennzeichnet durch**
a) einen ersten Spülkreislauf zum Spülen der Andockstellen (15) des Farbwechslers (8) mit einem Spülmittel, und
b) einen zweiten Spülkreislauf zum Spülen der gemeinsamen Farbleitung (25) zwischen dem Farbwechsler (8) und dem Zerstäuber (7) mit einem Spülmittel, wobei der erste Spülkreislauf von dem zweiten Spülkreislauf getrennt oder trennbar ist, so dass die Andockstellen (15) unabhängig und getrennt von der gemeinsamen Farbleitung (25) spülbar sind.

6. Lackierroboter (1) nach Anspruch 5, **dadurch gekennzeichnet,**
a) **dass** in der gemeinsamen Farbleitung (25) in der Farbentnahme (16) ein Trennventil (FGV/V, V1/PL) angeordnet ist, um die beiden Spülkreisläufe voneinander zu trennen,
b) **dass** der erste Spülkreislauf ausgehend von einer Spülmittelzuleitung (27) über ein erstes Spülmittelventil (V) in die gemeinsame Farbleitung (25) stromaufwärts vor dem Trennventil (FGV/V, V1/PL) zu den Andockstellen (15) und schließlich durch ein erstes Rückflussventil (RF2) in eine Rückflussleitung (28) führt,
c) **dass** der zweite Spülkreislauf ausgehend von einer Spülmittelzuleitung (27) über ein zweites Spülmittelventil (V/PO) durch die gemeinsame Farbleitung (25) stromabwärts hinter dem Trennventil (FGV/V, V1/PL) zu dem Zerstäuber (7) und schließlich über ein zweites Rückflussventil (RF1) in eine Rückflussleitung (29) oder über ein Hauptnadelventil (HN) des Zerstäubers (7) führt.

7. Lackierroboter (1) nach einem der vorhergehenden Ansprüche, **dadurch gekennzeichnet, dass** eine Spülmittelzuleitung (31) über ein in dem Zerstäuber (7) angeordnetes drittes Spülmittelventil (AV1/V) stromaufwärts vor dem Hauptnadelventil (HN) des Zerstäubers (7) in die gemeinsame Farbleitung (25) mündet, um den in der gemeinsamen Farbleitung (25) verbliebenen Lack für eine spätere Wiederverwendung durch den Farbwechsler (8) hindurch in die zugehörige Farbzuleitung (13, 13.1, 13.2) zurück zu drücken, indem das Spülmittel den verbliebenen Lack verdrängt, wobei insbesondere a) ein Spülmitteldosierer (30) vorgesehen ist, der in der Spülmittelzuleitung (31) stromaufwärts vor dem dritten Spülmittelventil (AV1/V) angeordnet ist und das in dem Spülmitteldosierer befindliche Spülmittel in die gemeinsame Farbleitung (25) drücken kann, wenn das dritte Spülmittelventil (AV1/V) geöffnet ist, und/oder b) ein viertes Spülmittelventil (AV2/V) zur steuerbaren Befüllung des Spülmitteldosierers (30) über die Spülmittelzuleitung (31) vorgesehen ist.

8. Lackierroboter (1) nach Anspruch 7,
**dadurch gekennzeichnet,**
a) **dass** der Spülmitteldosierer (30) ein Dosiervolumen aufweist, das im Wesentlichen gleich dem Füllungsvolumen der gemeinsamen Farbleitung (25) zwischen dem jeweils angedockten Farbventil (F1, F2,..., Fn) und dem Hauptnadelventil (HN) des Zerstäubers (7) ist, und/oder
b) **dass** der Spülmitteldosierer (30) ein Dosierzylinder oder ein Molchschlauch ist, und/oder
c) **dass** der Spülmitteldosierer (30) elektrisch oder pneumatisch angetrieben ist.

9. Lackierroboter (1) nach einem der Ansprüche 1 bis 8, **gekennzeichnet durch** eine Spannvorrichtung (8, 19, 20) zur mechanischen Verspannung der Farbentnahme (16) und der jeweiligen Andockstelle (15) im angedockten Zustand.

10. Lackierroboter (1) nach Anspruch 9, **dadurch gekennzeichnet, dass** die Spannvorrichtung (19, 20) eine Nut (8) mit einer Hinterschneidung aufweist, an der ein bewegliches Spannelement (19) angreift, wobei
die Nut (8) vorzugsweise nur an ihrer oberen Nutflanke eine Hinterschneidung aufweist und an ihrer unteren Nutflanke hinterschneidungsfrei ist.

11. Lackierroboter (1) nach einem der vorhergehenden Ansprüche,
**gekennzeichnet durch**
a) einen Farbdruckregler (9), der in oder an dem distalen Roboterarm (5) montiert ist, und/oder
b) eine Dosierpumpe (10), die in oder an dem distalen Roboterarm (5) montiert ist zum Dosieren des zu applizierenden Lacks, wobei die Dosierpumpe (10) eingangsseitig mit dem Farbwechsler (8) und ausgangsseitig mit dem Zerstäuber (7) verbunden ist, und/oder
c) einen z. B. servo-pneumatischen Stellantrieb (17) zur Bewegung der Farbentnahme (16) relativ zu den Andockstellen (15), wobei der Stellantrieb (17) in dem distalen Roboterarm (5) angeordnet ist.

12. Lackierroboter (1) nach einem der vorhergehenden Ansprüche , **gekennzeichnet durch** einen gemeinsamen Anschlussblock (21), in dem der Farbdruckregler (9) und/oder der Stellantrieb (17) und/oder die Dosierpumpe (10) angeordnet sind.

13. Lackierroboter (1) nach einem der vorhergehenden Ansprüche,
**dadurch gekennzeichnet, dass** die einzelnen Farbzuleitungen (13, 13.1, 13.2) jeweils durch einen Farbanschluss an den Farbwechsler (8) angeschlossen sind, wobei der Farbanschluss folgende Merkmale aufweist:
a) eine Aufnahmebohrung in dem Farbwechsler (8) zum Einführen der zugehörigen Farbzuleitung (13, 13.1, 13.2),
b) eine schräg verlaufende Spannfläche am Ende der Farbzuleitung (13, 13.1, 13.2),
c) eine Spannbohrung, die in dem Farbwechsler (8) im Wesentlichen rechtwinklig zu der Aufnahmebohrung verläuft und in die Aufnahmebohrung mündet, wobei die Spannbohrung ein Innengewinde aufweist,
d) eine Spannschraube (24), die in die Spannbohrung eingeschraubt ist und im eingeschraubten Zustand mit ihrem freien Ende gegen die Spannfläche der Farbzuleitung (13, 13.1, 13.2) drückt und die Farbzuleitung (13, 13.1, 13.2) damit axial sichert und verspannt.

14. Lackierroboter nach einem der vorhergehenden Ansprüche mit einem Andockfarbwechsler, **dadurch gekennzeichnet, dass** mindestens der bewegbare Teil (16) des Andockfarbwechslers mindestens einen Andockeingang (40, 41) hat, der über zwei parallele Farbleitungen (25A, 25B) und eine in dem Zerstäuber (7) befindliche Ventilanordnung (FA, FB) mit einem Ausgangsventil (HN) des Zerstäubers verbunden ist,
wobei die beiden Farbleitungen (25A, 25B) einander abwechselnd unterschiedliche Farben zu dem Zerstäuber (7) leiten und einander abwechselnd spülbar sind,
und dass der bewegbare Teil (16) des Andockfarbwechslers Einrichtungen (V, PL, LSV, LRF) zum Spülen des mindestens einen Andockeingangs (40, 41) und/oder Einrichtungen (LVPLA, LVPLB) zum Spülen der beiden parallelen Farbleitungen (25A, 25B) bis zu der in dem Zerstäuber (7) befindlichen Ventilanordnung (FA, FB) aufweist und/oder mit solchen Einrichtungen verbunden ist.

15. Lackierroboter nach Anspruch 14 mit einer Ventilanordnung aus einem automatisch steuerbaren ersten Ventil (FA), das als Nadelventil ausgebildet ist und dessen Ventilnadel im Innenraum eines Ventilgehäuseteils 50 verschiebbar ist, und aus einem mit diesem Nadelventil (FA) verbundenen automatisch steuerbaren zweiten Nadel- oder anderen Ventil (RFA), **dadurch gekennzeichnet, dass** ein gesteuerter Eingang oder Ausgang des zweiten Ventils (RFA) in dem Innenraum des Gehäuseteils (50) des ersten Ventils (FA) angeordnet oder mit diesem Innenraum über eine Leitung verbunden ist.

16. Lackierroboter nach Anspruch 1 mit einem Farbdruckregler (9) und einer Dosierpumpe (10), **dadurch gekennzeichnet, dass** der Farbdruckregler (9) und die Dosierpumpe (10) ohne Verbindungsschlauch in einem gemeinsamen Anschlussblock (21) integriert sind, wobei vorzugsweise der Farbdruckregler (9) direkt an die Dosierpumpe (10) angebaut ist.

17. Lackierroboter insbesondere nach einem der Ansprüche 1 bis 16 mit einem Andock-Farbwechsler (8), der durch eine Farbleiste (12) und einen relativ zu der Farbleiste verschiebbaren Andockschlitten (16) gebildet ist, **dadurch gekennzeichnet, dass** die Farbleiste (12) durch eine Anzahl lösbar aneinander befestigter Module (67, 77) gebildet ist, von denen jedes Modul (66, 77) mindestens ein Farbventil (F, 14, 14') und mindestens eine mit dem Farbventil verbundene Andockstelle (15) enthält.

18. Lackierroboter nach Anspruch 17, **dadurch gekennzeichnet, dass** jedes Modul (67, 77) mindestens zwei Farbventile (14, 14') enthält, die mit jeweiligen Mittelachsen quer oder senkrecht in eine zu der Längsrichtung der Farbleiste (12) parallele Seitenfläche (66) der Farbleiste eingesetzt sind, wobei die Mittelachsen der Farbventile (14, 14') des Moduls in der Längsrichtung der Farbleiste gegeneinander um eine bestimmte Größe (VV) versetzt und in der zu der Längsrichtung vertikalen Richtung um eine bestimmte Größe (A) beabstandet sind und diese Größen (VV, A) innerhalb mindestens eines Teils der Module gleich sind, und dass sich die Andockstellen auf der zu der genannten Seitenfläche (66) entgegengesetzten Seite der Farbleiste (12) befinden und vorzugsweise um die selben Größen (VV, A) gegeneinander versetzt und beabstandet sind wie die Mittelachsen der Farbventile (14, 14').

19. Lackierroboter nach Anspruch 17 oder 18, **dadurch gekennzeichnet, dass** jedes Modul (67, 77) sich quer zu der Seitenfläche (66) von einer Oberseite der Farbleiste (12) zu einer Unterseite der Farbleiste erstreckende Querflächen (68, 69) mit kurvenförmigem Verlauf hat, an denen benachbarte Module aneinander angrenzen, und das die Querflächen (68, 69) von der Oberseite und von der Unterseite aus zunächst quer oder senkrecht in Bezug auf die Ober- und Unterseiten verlaufen, anschließend in eine Richtung parallel zu der Längsrichtung der Farbleiste abgebogen sind und schließlich wieder quer oder senkrecht zu den Ober- und Unterseiten verlaufen, wobei die beiden kurvenförmigen Querflächen (68, 69) des Moduls parallel oder spiegelbildlich zueinander verlaufen.

20. Lackierroboter nach einem der Ansprüche 17 bis 19, **dadurch gekennzeichnet, dass** mindestens ein Anschlusselement (22), das an eine externe Farbleitung anschließbar ist und eine Mittelachse hat, mit der Mittelachse senkrecht in eine schräg gegen die Längsrichtung der Farbleiste (12) geneigte Stirnfläche (65) an einer Oberseite des Moduls (67, 77) eingesetzt und im Inneren des Moduls mit einem zugehörigen Farbventil (14, 14') verbunden ist.

21. Lackierroboter nach einem der Ansprüche 17 bis 20, **dadurch gekennzeichnet, dass** jedes Modul (77) für jedes Farbventil (14, 14') zwei an externe Leitungen anschließbare Anschlusselemente (22) hat, die innerhalb des Moduls (77) für Farbumlauf mit dem Innenraum des Farbventils (14, 14') verbunden sind.

22. Lackierroboter nach einem der Ansprüche 17 bis 21, **dadurch gekennzeichnet, dass** in die Farbleiste (12) mindestens ein Modul (127) eingesetzt oder einsetzbar ist, dessen Andockstelle (15'') in einer zu der Längsrichtung der Farbleiste (12) parallelen Reihe von Andockstellen (15') der benachbarten Module (77) liegt und im Inneren des Moduls (127) über ein Farbventil (F) mit einem Anschlusskörper (130) des Moduls (127) verbunden ist, an den ein Molchschlauch (135) für einen das Farbmaterial zu dem Modul (127) fördernden Molch angeschlossen oder anschließbar ist.

23. Lackierroboter nach Anspruch 22, **dadurch gekennzeichnet, dass** neben dem Anschlusskörper (130) des Molchschlauchs (135) ein oder zwei weitere Anschlusskörper (132, 133) für eine Rückführungsleitung (136) und/oder für eine Leitung (137) zum Zuführen von Druckluft oder eines anderen Schiebemediums zum Zurückschieben des Molches durch den Molchschlauch (135) angeordnet ist, und dass das Modul (127) je ein Ventil (RF, PLM) für die Rückführungsleitung (136) und/oder für die Leitung (137) des Schiebemediums enthält.

## Claims

1. A painting robot (1) for painting motor vehicle bodies having outer faces to be painted on the outside of the motor vehicle bodies and inner faces to be painted in 1the interior of the motor vehicle bodies by means of an atomizer (7) which is guided by the painting robot (1), wherein the painting robot (1) is suitable both for painting the outer faces and for painting the inner faces of the motor vehicle bodies,
**characterized by** a color changer (8) comprising the following features:
a) a plurality of color feed lines (13, 13.1, 13.2) on the inlet side for supplying differently colored paints, wherein there is arranged in the individual color feed lines (13, 13.1, 13.2) a respective color valve (F1, F2,..., Fn) or another color control device which selectively blocks or enables the color feed line (13, 13.1, 13.2),
b) a common color line (25) on the outlet side for forwarding the paint selected by the color changer (8) to the atomizer (7),
c) a plurality of docking points (15) which are supplied by the individual color feed lines (13, 13.1, 13.2), and
d) a color extractor (16) which can selectively dock onto one of the docking points (15) and, in the docked state, extracts the paint from the associated color feed line (13, 13.1, 13.2) and supplies the extracted paint to the common color line (25),
e) wherein the color extractor (16) and the docking points (15) can be displaced linearily or in rotation relative to one another or can be moved in some other way, and wherein
f) the color control devices (F1, F2,..., Fn) are in each case controlled by a control signal, in particular pneumatically by control air, which can be supplied by additional docking points (71) onto which the color extractor (16) can dock, and
g) the control signal is passed from the color extractor (16) via the respectively docked docking point to the respective color control device (F1, F2,..., Fn), so that the control signal can reach one of the color control devices (F1, F2,..., Fn) only when the color extractor (16) is docked onto the associated docking point.

2. The painting robot (1) according to claim 1, **characterized in that** a) the motor vehicle bodies to be painted have body openings, in particular window openings and door openings, and
b) the painting robot (1) has one or more robot arms (3, 4, 5) for spatially positioning the atomizer (7), and
c) at least the distal robot arm (5) is dimensioned so as to be sufficiently flat or narrow in a direction measured transversely to its longitudinal axis, in particular in the vertical direction when the arm is in a horizontal position, in order to position the atomizer (7) in the interior of the motor vehicle bodies through the body opening,
d) the color changer (8) is mounted on the distal robot arm (5),
e) the distal robot arm (5) has, when in horizontal position, in the region of its atomizer-side end a height which is no greater than 300 mm,
f) the distal robot arm (5) has, when in horizontal position, in the region of its atomizer-side end a width which is no greater than 250 mm.

3. The painting robot according to claim 1 or 2, **characterized in that** a control loop is provided for positioning the color extractor (16) in relation to the docking points (15) of the color feed lines or color valves, which control loop contains a measuring device (32) measuring the position of the color extractor (16) in relation to the docking points and compares the measured values with stored nominal position values in order to bring the measured positions into correspondence with the nominal values,
and/or **in that** at least one centering element is arranged at least on one of the components (12, 16) of the color changer (8) which contain the color extractor (16) or the docking points (15), said centering element engaging in a receiving opening of the other of these components during the docking process.

4. The painting robot in particular according to one of claims 1 to 3, **characterized in that** a servo-pneumatic drive (17) or electric servo drive which can be controlled by stored control data is provided for the relative movement between the color extractor (16) and the docking points (15) of the color changer.

5. The painting robot (1) according to one of claims 1 to 4, **characterized by**
a) a first flushing circuit for flushing the docking points (15) of the color changer (8) with a flushing agent, and
b) a second flushing circuit for flushing the common color line (25) between the color changer (8) and the atomizer (7) with a flushing agent, wherein the first flushing circuit is separate or can be separated from the second flushing circuit so that the docking points (15) can be flushed independently of and separately from the common color line (25).

6. The painting robot (1) according to claim 5, **characterized in that** a) a separating valve (FGV/V, V1/PL) is arranged in the common color line (25) in the color extractor (16) in order to separate the two flushing circuits from one another,
b) the first flushing circuit leads from a flushing agent feed line (27) via a first flushing agent valve (V) into the common color line (25) upstream of the separating valve (FGV/V, V1/PL) to the docking points (15) and finally through a first return valve (RF2) into a return line (28),
c) the second flushing circuit leads from a flushing agent feed line (27) via a second flushing agent valve (V/PO) through the common color line (25) downstream of the separating valve (FGV/V, V1/PL) to the atomizer (7) and finally via a second return valve (RF1) into a return line (29) or via a main needle valve (HN) of the atomizer (7).

7. The painting robot (1) according to one of the preceding claims, **characterized in that** a flushing agent feed line (31) opens into the common color line (25) upstream of the main needle valve (HN) of the atomizer (7) via a third flushing agent valve (AV1/V) arranged in the atomizer (7), in order to push the paint remaining in the common color line (25) back through the color changer (8) into the associated color feed line (13, 13.1, 13.2) for later reuse, by virtue of the flushing agent displacing the remaining paint, wherein there is in particular provided
a) a flushing agent metering means (30) which is arranged in the flushing agent feed line (31) upstream of the third flushing agent valve (AV1/V) and which can push the flushing agent located in the flushing agent metering means into the common color line (25) when the third flushing agent valve (AV1/V) is opened, and/or
b) a fourth flushing agent valve (AV2/V) for controllably filling the flushing agent metering means (30) via the flushing agent feed line (31).

8. The painting robot (1) according to claim 7, **characterized in that**
a) the flushing agent metering means (30) has a metering volume which is substantially identical to the filling volume of the common color line (25) between the respectively docked color valve (F1, F2,..., Fn) and the main needle valve (HN) of the atomizer (7), and/or
b) the flushing agent metering means (30) is a metering cylinder or a pigging tube, and/or
c) the flushing agent metering means (30) is electrically or pneumatically driven.

9. The painting robot (1) according to one of claims 1 to 8, **characterized by** a clamping device (8, 19, 20) for mechanically clamping the color extractor (16) and the respective docking point (15) in the docked state.

10. The painting robot (1) according to claim 9, **characterized in that** the clamping device (19, 20) comprises a groove (8) with an undercut, onto which a movable clamping element (19) latches, wherein the groove (8) has preferably an undercut only on its upper groove flank and has no undercut on its lower groove flank.

11. The painting robot (1) according to one of the preceding claims, **characterized by**
a) a paint pressure regulator (9) which is mounted in or on the distal robot arm (5), and/or
b) a metering pump (10) which is mounted in or on the distal robot arm (5) for metering the paint to be applied, wherein the metering pump (10) is connected on the inlet side to the color changer (8) and on the outlet side to the atomizer (7), and/or
c) an e.g. servo-pneumatic actuator (17) for moving the color extractor (16) relative to the docking points (15), wherein the actuator (17) is arranged in the distal robot arm (5).

12. The painting robot (1) according to one of the preceding claims, **characterized by** a common connection block (21), in which the paint pressure regulator (9) and/or the actuator (17) and/or the metering pump (10) are arranged.

13. The painting robot (1) according to one of the preceding claims, **characterized in that** the individual color feed lines (13, 13.1, 13.2) are in each case connected to the color changer (8) by a color connection, wherein the color connection has the following features:
a) a receiving bore in the color changer (8) for the insertion of the associated color feed line (13, 13.1, 13.2),
b) an angled clamping surface at the end of the color feed line (13, 13.1, 13.2),
c) a clamping bore which runs in the color changer (8) substantially at a right angle to the receiving bore and opens into the receiving bore, wherein the clamping bore has an inner thread,
d) a clamping screw (24) which is screwed into the clamping bore and, in the screwed-in state, presses with its free end against the clamping surface of the color feed line (13, 13.1, 13.2) and thus axially secures and clamps the color feed line (13, 13.1, 13.2).

14. The painting robot according to one of the preceding claims comprising a docking color changer, **characterized in that** at least the movable part (16) of the docking color changer has at least one docking inlet (40, 41) which is connected to an outlet valve (HN) of the atomizer via two parallel color lines (25A, 25B) and a valve arrangement (FA, FB) located in the atomizer (7),
wherein the two color lines (25A, 25B) alternately convey different colors to the atomizer (7) and can be flushed alternately,
and **in that** the movable part (16) of the docking color changer has devices (V, PL, LSV, LRF) for flushing the at least one docking inlet (40, 41) and/or devices (LVPLA, LVPLB) for flushing the two parallel color lines (25A, 25B) as far as the valve arrangement (FA, FB) located in the atomizer (7), and/or is connected to such devices.

15. The painting robot according to claim 14 comprising an arrangement consisting of an automatically controllable first valve (FA), which is designed as a needle valve and the valve needle of which is displaceable in the interior of a valve housing part 50, and of an automatically controllable second needle valve or other valve (RFA) which is connected to said needle valve (FA),
**characterized in that** a controlled inlet or outlet of the second valve (RFA) is arranged in the interior of the housing part (50) of the first valve (FA) or is connected to this interior via a line.

16. The painting robot in according to claim 1 comprising a paint pressure regulator (9) and a metering pump (10), **characterized in that** the paint pressure regulator (9) and the metering pump (10) are integrated without any connecting tube in a common connection block (21), wherein preferably the paint pressure regulator (9) is installed directly on the metering pump (10).

17. The painting robot in particular according to one of claims 1 to 16 comprising a docking color changer (8) which is formed by a color bar (12) and a docking carriage (16) which is displaceable relative to the color bar, **characterized in that** the color bar (12) is formed by a number of modules (67, 77) releasably attached to one another, each of which modules (66, 77) contains at least one color valve (F, 14, 14') and at least one docking point (15) connected to the color valve.

18. The painting robot according to claim 17, **characterized in that** each module (67, 77) contains at least two color valves (14, 14') which are inserted with respective central axes transversely or perpendicularly in a side face (66) of the color bar which is parallel to the longitudinal direction of the color bar (12), wherein the central axes of the color valves (14, 14') of the module are offset relative to one another in the longitudinal direction of the color bar by a certain value (VV) and are spaced apart in the direction vertical to the longitudinal direction by a certain value (A), and these values (VV, A) are identical within at least some of the modules, and **in that** the docking points are located on the side of the color bar (12) opposite to said side face (66) and are preferably offset relative to one another and spaced apart from one another by the same values (W, A) as the central axes of the color valves (14, 14').

19. The painting robot according to claim 17 or 18, **characterized in that** each module (67, 77) has transverse faces (68, 69) with a curved profile which extend transversely to the side face (66) from an upper side of the color bar (12) to an underside of the color bar, at which transverse faces adjacent modules adjoin one another, and **in that** the transverse faces (68, 69), proceeding from the upper side and from the underside, run firstly transversely or perpendicularly relative to the upper side and underside, then are bent in a direction parallel to the longitudinal direction of the color bar and finally run once more transversely or perpendicularly to the upper side and underside, wherein the two curved transverse faces (68, 69) of the module run parallel to one another or as a mirror image relative to one another.

20. The painting robot according to one of claims 17 to 19, **characterized in that** at least one connection element (22), which can be connected to an external color line and has a central axis, is inserted with the central axis perpendicularly in an end face (65) inclined at an angle to the longitudinal direction of the color bar (12) on an upper side of the module (67, 77) and is connected to an associated color valve (14, 14') in the interior of the module.

21. The painting robot according to one of claims 17 to 20, **characterized in that** each module (77) has for each color valve (14, 14') two connection elements (22) which can be connected to external lines and which are connected inside the module (77) to the interior of the color valve (14, 14') for the purpose of color circulation.

22. The painting robot according to one of claims 17 to 21, **characterized in that** at least one module (127) is or can be inserted into the color bar (12), the docking point (15") of which module lies in a row of docking points (15') of the adjacent modules (77) parallel to the longitudinal direction of the color bar (12) and is connected in the interior of the module (127) via a color valve (F) to a connection body (130) of the module (127), to which there is or can be connected a pigging tube (135) for a pig which conveys the color material to the module (127).

23. The painting robot according to claim 22, **characterized in that**, next to the connection body (130) of the pigging tube (135), there are one or two further connection bodies (132, 133) for a return line (136) and/or for a line (137) for supplying compressed air or another pushing medium for pushing the pig back through the pigging tube (135), and **in that** the module (127) contains a respective valve (RF, PLM) for the return line (136) and/or for the line (137) for the pushing medium.

## Revendications

1. Robot de peinture (1) pour l'application d'une peinture sur des carrosseries de véhicules automobiles avec des surfaces extérieures à peindre sur la face extérieure des carrosseries automobiles et avec des surfaces intérieures à peindre dans l'espace intérieur des carrosseries automobiles au moyen d'un pulvérisateur (7) guidé par le robot de peinture (1), ledit robot de peinture (1) étant apte à appliquer la peinture tant sur les surfaces extérieures que sur les surfaces intérieures des carrosseries automobiles, **caractérisé par** un changeur de peinture (8) qui comporte les caractéristiques suivantes :
a) du côté entrée, plusieurs conduites d'acheminement de la peinture (13, 13.1, 13.2) pour acheminer des peintures de teintes différentes, les différentes conduites d'acheminement de la peinture (13, 13.1, 13.2) comportant chacune une vanne (F1, F2, ..., Fn) ou un autre dispositif de commande de la peinture qui, au choix, ferme ou ouvre la conduite d'acheminement de la peinture (13, 13.1, 13.2),
b) du côté sortie, une conduite de peinture commune (25) pour transporter vers le pulvérisateur (7) la peinture sélectionnée par le changeur de peinture (8),
c) plusieurs points de connexion (15) qui sont alimentés par les différentes conduites d'acheminement de la peinture (13, 13.1, 13.2), et
d) un dispositif de soutirage de la peinture (16), qui peut être connecté au choix à l'un des points de connexion (15) et, dans la position connectée, soutire la peinture hors de la conduite d'acheminement de la peinture (13, 13.1, 13.2) concernée et alimente la conduite de peinture commune (25) avec la peinture soutirée,
e) le dispositif de soutirage de la peinture (16) et les points de connexion (15) pouvant être déplacés l'un par rapport à l'autre de manière linéaire ou par rotation ou étant mobiles d'une autre manière,
et
f) les dispositifs de commande de la peinture (F1, F2, ..., Fn) étant commandés chacun par un signal de commande, en particulier par voie pneumatique au moyen d'un air de commande, qui peut être acheminé par des points de connexion (71) supplémentaires auxquels le dispositif de soutirage de la peinture (16) peut être connecté, et
g) le signal de commande est guidé à partir du dispositif de soutirage de la peinture (16) vers le dispositif de commande de la peinture (F1, F2, ..., Fn) concerné via le point de connexion respectivement connecté, de telle sorte que le signal de commande ne peut parvenir à l'un des dispositifs de commande de la peinture (F1, F2, ..., Fn) que lorsque le dispositif de soutirage de la peinture (16) est connecté au point de connexion approprié.

2. Robot de peinture (1) selon la revendication 1, **caractérisé en ce que**
a) **en ce que** les carrosseries automobiles à peindre comportent des ouvertures, en particulier des ouvertures de fenêtre et des ouvertures de porte, et
b) **en ce que** le robot de peinture (1) comporte un ou plusieurs bras (3, 4, 5) pour positionner le pulvérisateur (7) dans l'espace, et
c) **en ce qu'**au moins le bras distal (5) est dimensionné suffisamment plat ou étroit dans une direction mesurée transversalement à son axe longitudinal, en particulier dans la direction verticale dans la position horizontale du bras, afin de positionner le pulvérisateur (7) dans l'espace intérieur des carrosseries automobiles en le faisant passer à travers l'ouverture de la carrosserie,
d) **en ce que** le changeur de peinture (8) est monté sur le bras distal (5),
e) **en ce que** le bras distal (5), lorsque le bras est positionné horizontalement, possède dans la zone de son extrémité du côté du pulvérisateur une hauteur qui n'est pas supérieure à 300 mm,
f) **en ce que** le bras distal (5) lorsque le bras est positionné horizontalement, possède dans la zone de son extrémité du côté du pulvérisateur une largeur qui n'est pas supérieure à 250 mm.

3. Robot de peinture selon la revendication 1 ou 2, **caractérisé en ce qu'**il est prévu un circuit de réglage pour le positionnement du dispositif de soutirage de la peinture (16) par rapport aux points de connexion (15) des conduites d'acheminement de la peinture ou des vannes de peinture, lequel contient un dispositif de mesure (32) mesurant la position du dispositif de soutirage de la peinture (16) par rapport aux points de connexion et compare les valeurs de mesure à des valeurs de consigne de la position stockées en mémoire, afin d'amener les positions mesurées en concordance avec les valeurs de consigne, et/ou **en ce qu'**au moins sur l'un des composants (12, 16) du changeur de peinture (8), contenant le dispositif de soutirage de la peinture (16) ou les points de connexion (15), est disposé au moins un élément de centrage qui, au moment de la connexion, s'engage dans une ouverture de réception de l'autre de ces composants.

4. Robot de peinture selon l'une quelconque des revendications 1 à 3, **caractérisé en ce que** pour le mouvement relatif entre le dispositif de soutirage de la peinture (16) et les points de connexion (15) du changeur de peinture, il est prévu une servocommande électrique ou une servocommande pneumatique (17) pouvant être commandée par les données de commande stockées en mémoire.

5. Robot de peinture (1) selon l'une quelconque des revendications 1 à 4, **caractérisé par**
a) un premier circuit de lavage pour laver les points de connexion (15) du changeur de peinture (8) avec un produit de lavage, et
b) un deuxième circuit de lavage pour laver la conduite de peinture commune (25) entre le changeur de peinture (8) et le pulvérisateur (7) avec un produit de lavage, le premier circuit de lavage étant séparé ou pouvant être séparé du deuxième circuit de lavage, de telle sorte que les points de connexion (15) peuvent être lavés indépendamment et séparément de la conduite de peinture commune (25).

6. Robot de peinture (1) selon la revendication 5, **caractérisé**
a) **en ce que** dans la conduite de peinture commune (25) dans le dispositif de soutirage de la peinture (16) est disposée une vanne de séparation (FGV/V, V1/PL) afin de séparer les deux circuits de lavage l'un de l'autre,
b) **en ce que** le premier circuit de lavage mène à partir d'une conduite d'admission du produit de lavage (27) via une première vanne de produit de lavage (V) dans la conduite de peinture commune (25) en amont de la vanne de séparation (FGV/V, V1/PL) vers les points de connexion (15) et, finalement, via une première vanne de retour (RF2) dans une conduite de retour (28),
c) **en ce que** le deuxième circuit de lavage mène à partir d'une conduite d'admission du produit de lavage (27) via une deuxième vanne de produit de lavage (V/PO) à travers la conduite de peinture commune (25) en aval de la vanne de séparation (FGV/V, V1/PL) vers le pulvérisateur (7) et, finalement, via une deuxième vanne de retour (RF1) dans une conduite de retour (29) ou via une vanne à pointeau principale (HN) du pulvérisateur (7).

7. Robot de peinture (1) selon l'une quelconque des revendications précédentes, **caractérisé en ce qu'**une conduite d'admission du produit de lavage (31) débouche dans la conduite de peinture commune (25) en passant par une troisième vanne de produit de lavage (AV1/V), disposée dans le pulvérisateur (7), en amont de la vanne à pointeau principale (HN) du pulvérisateur (7), afin de repousser la peinture restant dans la conduite de peinture commune (25) à travers le changeur de peinture (8) vers la conduite d'acheminement de la peinture (13, 13.1, 13.2) appropriée pour une réutilisation ultérieure, du fait que le produit de lavage refoule la peinture restante, il est prévu, en particulier,
a) un doseur de produit de lavage (30), qui est disposé dans la conduite d'admission du produit de lavage (31) en amont de la troisième vanne de produit de lavage (AV1/V) et qui peut pousser le produit de lavage contenu dans ledit doseur vers l'intérieur de la conduite de peinture commune (25) lorsque la troisième vanne de produit de lavage (AV1/V) est ouverte, et/ou
b) une quatrième vanne de produit de lavage (AV2/V) pour commander le remplissage du doseur de produit de lavage (30) par l'intermédiaire de la conduite d'admission du produit de lavage (31).

8. Robot de peinture (1) selon la revendication 7, **caractérisé**
a) **en ce que** le doseur de produit de lavage (30) comporte un volume de dosage qui est sensiblement identique au volume de remplissage de la conduite de peinture commune (25) entre la vanne de peinture (F1, F2, ..., Fn) respectivement connectée et la vanne à pointeau principale (HN) du pulvérisateur (7), et/ou
b) **en ce que** le doseur de produit de lavage (30) est un cylindre de dosage ou un tuyau flexible de raclage, et/ou
c) **en ce que** le doseur de produit de lavage (30) est actionné par voie électrique ou pneumatique.

9. Robot de peinture (1) selon l'une quelconque des revendications 1 à 8, **caractérisé par** un dispositif de serrage (8, 19, 20) pour le serrage mécanique du dispositif de soutirage de la peinture (16) et du point de connexion (15) respectif dans la position connectée.

10. Robot de peinture (1) selon la revendication 9, **caractérisé en ce que** le dispositif de serrage (19, 20) comporte une rainure (8) avec une contre-dépouille, contre laquelle s'applique un élément de serrage (19) mobile, ladite rainure (8) comportant une contre-dépouille de préférence seulement sur son flanc supérieur et ne comporte pas de contre-dépouille sur son flanc inférieur.

11. Robot de peinture (1) selon l'une quelconque des revendications précédentes, **caractérisé par**
a) un dispositif de réglage de la pression de la peinture (9), qui est monté dans ou sur le bras distal (5) du robot, et/ou
b) une pompe de dosage (10) qui est montée dans ou sur le bras distal (5) du robot afin de doser la peinture à appliquer, ladite pompe de dosage (10) étant reliée du côté entrée au changeur de peinture (8) et du côté sortie au pulvérisateur (7), et/ou
c) une servocommande (17) pneumatique, par exemple, pour déplacer le dispositif de soutirage de la peinture (16) par rapport aux points de connexion (15), ladite servocommande (17) étant disposée dans le bras distal (5) du robot.

12. Robot de peinture (1) selon l'une quelconque des revendications précédentes, **caractérisé par** un bloc de raccordement (21) commun, dans lequel sont disposés le dispositif de réglage de la pression de la peinture (9) et/ou la servocommande (17) et/ou la pompe de dosage (10).

13. Robot de peinture (1) selon l'une quelconque des revendications précédentes, **caractérisé en ce que** les différentes conduites d'acheminement de la peinture (13, 13.1, 13.2) sont raccordées chacune au changeur de peinture (8) par l'intermédiaire d'un raccord de peinture, ledit raccord de peinture comportant les caractéristiques suivantes :
a) une forure de réception dans le changeur de peinture (8) pour l'introduction de la conduite d'acheminement de la peinture (13, 13.1, 13.2) appropriée,
b) une surface de serrage oblique à l'extrémité de la conduite d'acheminement de la peinture (13, 13.1, 13.2),
c) une forure de serrage, qui s'étend dans le changeur de peinture (8) sensiblement à angle droit avec la forure de réception et débouche dans la forure de réception, la forure de serrage comportant un filetage intérieur,
d) un vis de serrage (24) qui est vissée dans la forure de serrage et qui, à l'état vissée, pousse avec son extrémité libre contre la surface de serrage de la conduite d'acheminement de la peinture (13, 13.1, 13.2) et, de ce fait immobilise et bloque axialement la conduite d'acheminement de la peinture (13, 13.1, 13.2).

14. Robot de peinture selon l'une quelconque des revendications précédentes, comportant un changeur de peinture à connecter, **caractérisé en ce qu'**au moins une partie (16) mobile du changeur de peinture à connecter possède au moins une entrée de connexion (40, 41) qui est reliée à une vanne de sortie (HN) du pulvérisateur par l'intermédiaire de deux conduites de peinture (25A, 25B) parallèles et un système de vannes (FA, FB) situé dans le pulvérisateur (7),
les deux conduites de peinture (25A, 25B) guidant, en alternance, des peintures différentes vers le pulvérisateur (7) et pouvant être lavées en alternance,
et **en ce que** la partie (16) mobile du changeur de peinture à connecter comporte des dispositifs (V, PL, LSV, LRF) pour le lavage de ladite au moins une entrée de connexion (40, 41) et/ou des dispositifs (LVPLA, LVPLB) pour le lavage des deux conduites de peinture (25A, 25B) parallèles jusqu'au système de vannes (FA, FB) situé dans le pulvérisateur (7) et/ou est reliée à de tels dispositifs.

15. Robot de peinture selon la revendication 14, comportant un système de vannes constitué d'une première vanne (FA), pouvant être commandée automatiquement et réalisée sous la forme d'une vanne à pointeau et dont le pointeau peut être déplacé dans l'espace intérieur d'une partie (50) du boîtier de vannes, et d'une deuxième vanne à pointeau ou autre vanne (RFA), reliée à cette vanne à pointeau (FA) et pouvant être commandée automatiquement, **caractérisé en ce qu'**une entrée ou sortie commandée de la deuxième vanne (RFA) est disposée dans le volume intérieur de la partie (50) du boîtier de la première vanne (FA) ou est reliée à ce volume intérieur via une conduite.

16. Robot de peinture selon la revendication 1, comportant un dispositif de réglage de la pression de la peinture (9) et une pompe de dosage (10), **caractérisé en ce que** le dispositif de réglage de la pression de la peinture (9) et la pompe de dosage (10) sont intégrés sans tuyau flexible de liaison dans un bloc de raccordement (21) commun, le dispositif de réglage de la pression de la peinture (9) étant, de préférence, attaché directement à la pompe de dosage (10).

17. Robot de peinture en particulier selon l'une des revendications 1 à 16, comportant un changeur de peinture à connecter (8) qui est formé par une barre de peinture (12) et un chariot de connexion (16) mobile par rapport à ladite barre de peinture, **caractérisé en ce que** la barre de peinture (12) est formée par une pluralité de modules (67, 77) fixés de manière amovible les uns aux autres, parmi lesquels chaque module (67, 77) contient au moins une vanne de peinture (F, 14, 14') et au moins un point de connexion (15) relié à ladite vanne de peinture.

18. Robot de peinture selon la revendication 17, **caractérisé en ce que** chaque module (67, 77) contient au moins trois vannes de peinture (14, 14'), qui sont insérées, avec leur axe médian transversalement ou perpendiculairement, dans une surface latérale (66) de la barre de peinture, laquelle surface latérale est parallèle à la direction longitudinale de la barre de peinture (12), les axes médians des vannes de peinture (14, 14') du module étant décalés l'un par rapport à l'autre dans le sens longitudinal de la barre de peinture selon une valeur (W) déterminée et sont écartés l'un de l'autre dans la direction verticale par rapport à la direction longitudinale selon une valeur (A) déterminée et lesdites valeurs (W, A) sont identiques à l'intérieur d'au moins une partie des modules, et **en ce que** les points de connexion se situent sur le côté de la barre de peinture (12), opposé à ladite surface latérale (66), et, de préférence, sont décalés et écartés l'un de l'autre selon les mêmes valeurs (W, A) que les axes médians des vannes de peinture (14, 14').

19. Robot de peinture selon la revendication 17 ou 18, **caractérisé en ce que** chaque module (67, 77) a des surfaces transversales (68, 69) avec un tracé curviligne qui s'étendent transversalement à la surface latérale (66) depuis une face supérieure de la barre de peinture (12) vers une face inférieure de ladite barre de peinture et contre lesquelles des modules adjacents se jouxtent, et **en ce que** les surfaces transversales (68, 69) sont coudées à partir de la face supérieure et à partir de la face inférieure d'abord transversalement ou perpendiculairement aux faces supérieures et faces inférieures, ensuite dans une direction parallèle à la direction longitudinale de la barre de peinture et, enfin, s'étendent à nouveau transversalement ou perpendiculairement aux faces supérieures et faces inférieures, les deux surfaces transversales (68, 69) curvilignes du module s'étendant parallèlement ou symétriquement l'une par rapport à l'autre.

20. Robot de peinture selon l'une quelconque des revendications 17 à 19, **caractérisé en ce qu'**au moins un élément de raccordement (22), qui peut être raccordé à une conduite de peinture externe et possède un axe médian, est inséré avec l'axe médian perpendiculairement dans une surface frontale (65), inclinée dans le sens opposé à la direction longitudinale de la barre de peinture (12), sur une face supérieure du module (67, 77) et est relié, à l'intérieur du module, à une vanne de peinture (14, 14') appropriée.

21. Robot de peinture selon l'une quelconque des revendications 17 à 20, **caractérisé en ce que** chaque module (77) possède, pour chaque vanne de peinture (14, 14'), deux éléments de raccordement (22), qui peuvent être raccordés à des conduites externes et qui, à l'intérieur du module (77), sont reliés au volume intérieur de la vanne de peinture (14, 14') pour la circulation de la peinture.

22. Robot de peinture selon l'une quelconque des revendications 17 à 21, **caractérisé en ce que** dans la barre de peinture (12) est inséré ou peut être inséré au moins un module (127), dont le point de connexion (15") est situé dans une rangée, parallèle à la direction longitudinale de la barre de peinture (12), de points de connexion (15') des modules (77) adjacents et est relié à l'intérieur du module (127), via une vanne de peinture (F), à un corps de raccordement (130) du module (127), contre lequel est raccordé ou peut être raccordé un tuyau flexible de raclage (135) pour un racleur transportant la peinture vers le module (127).

23. Robot de peinture selon la revendication 22, **caractérisé en ce que**, à côté du corps de raccordement (130) du tuyau flexible de raclage (135), est/sont agencé(s) un ou deux autres corps de raccordement (132, 133) pour une conduite de retour (136) et/ou pour une conduite (137) destinée à amener de l'air comprimé ou un autre fluide poussant pour repousser le racleur à travers le tuyau flexible de raclage (135), et **en ce que** le module (127) contient respectivement une vanne (RF, PLM) pour la conduite de retour (136) et/ou pour la conduite (137) du fluide poussant.
